# EUROPEAN PATENT SPECIFICATION

(11) **EP 1 250 691 B1**
(45) Date of publication and mention of the grant of the patent: **17.05.2006**
(21) Application number: 00990248.7
(22) Date of filing: 15.12.2000
(51) Int. Cl.: G08G 1/00

(54) **SYSTEM AND METHOD FOR MANAGING ADVERTISEMENT AND INFORMATION DISPLAYS ON VEHICLES BASED ON AN E-COMMERCE SITE**
SYSTEM UND VERFAHREN ZUR AUF EINEM E-COMMERCE WEBSITE BASIERTEN VERWALTUNG VON WERBE- UND INFORMATIONSANZEIGEN AUF FAHRZEUGEN
SYSTEMES, PROCEDES ET PROGRAMMES D'ORDINATEUR SERVANT A PRESENTER DES INFORMATIONS SUR DES SIGNES

(30) Priority: 15.12.1999 US 170914 P; 16.08.2000 US 226000 P
(43) Date of publication of application: 23.10.2002
(73) Proprietor: Vert, Inc., Boston, MA 02127-2422 (US)
(72) Inventor: DUKASH, Semyon, Brookline, MA 02446 (US); MANKINS, Matt, W., D., Somerville, MA 02143 (US); FRIDMAN, Leonid, Somerville, MA 02145 (US); D'AGOSTINO, Salvatore, A., Cambridge, MA 02139 (US); SELKER, Edwin, J., Arlington, MA 02476 (US); PORTER, Edward, W., Boston, MA 02114 (US)
(74) Representative: Kaiser, Jürgen
(86) International application number: PCT/US2000/034549
(87) International publication number: WO 2001/045065

(56) References cited:
- EP-A- 0 131 211
- EP-A- 0 424 648
- EP-A- 0 892 379
- EP-A- 0 921 509
- WO-A-98/34189
- DE-A- 19 639 546
- US-A- 4 529 982
- US-A- 5 550 928
- US-A- 5 974 398
- SEOKHOON LEE ET AL: "Toward the next generation public traffic information system using Internet" PROCEEDINGS. HIGH PERFORMANCE COMPUTING ON THE INFORMATION SUPERHIGHWAY,XX,XX, 28 April 1997 (1997-04-28), pages 505-510, XP002147421

## Description

### FIELD OF THE INVENTION

The present invention relates to a system for displaying information to the public.

### BACKGROUND OF THE INVENTION

Communication of information to the public is a major industry. One of the major means of such communications is by publicly visible signs, including advertising signs. Signs have been in use for centuries, and have performed a valuable service of informing consumers about choices that are available to them. But advances in technology have made traditional signs seem somewhat out of date.

U.S. Patent Number 6,060,993 issued to Eyal Cohen (the "Cohen Patent") discloses one possible system for displaying messages in advertisements on mobile signs, such as those placed on the tops of motor vehicles such as taxis. In this system a geographic area is divided up into separate zones and when a mobile unit makes a transition from one zone into another the controller located on the mobile unit determines when it has made such a transition based on a positioning system within the mobile unit, on a series of geographic zone definitions which it stores in its memory, and on a schedule indicating which messages are to be shown in which zones at which times. The Cohen patent is hereby incorporated herein by reference in its entirety.

Document EP-A-0 131 211 describes a programmable electronic vehicular display system, wherein a location of a remote display apparatus which is mounted on a vehicle is detected by means of an automatic vehicle locating system. A receiving means receives a position code from induction loops. This position code is then transmitted to a centre station. The information shown on each remote vehicular display apparatus displays information as a function of its changing location, which can be selectively displayed to particular segments of the public in various locations of a city.

Document WO-A-98 34 189 describes an internet advertising system for providing advertisements from a central server to viewers who access websites. The central server stores both advertisements which are to be displayed and an information database. The database includes information about viewers, information about the characteristic of particular websites and other information relevant to which advertisements should be displayed for particular viewers. Proposed bits submitted by different advertisers are evaluated in real time in order to determine which particular advertisement will be displayed to a viewer.

### SUMMARY OF THE INVENTION

It is an object of the present invention to provide for more flexible, effective, and/or profitable usage of signs.

The object is solved by the features of the independent claims. The dependent claims are directed to preferred embodiments of the invention.

According to one aspect, a method of displaying information is provided. The method senses the current geographical location of a publicly visible electronic information display mounted on a moving vehicle. The method selects the information shown on the display as a function of its changing location. The method is performed by using multiple wireless communication receivers to determine the location of a wireless signal transmitted by a wireless transmitter that moves with the information display.

In some embodiments of this aspect, the sensed vehicle location is transmitted to control circuitry on the vehicle. The circuitry on the vehicle selects which information to show on the vehicle mounted display as a function of that sensed location.

In some embodiments the sensed vehicle location is sent to a central computer system that does not move with the vehicle. In some embodiments the central computer system selects the information that will be shown on the vehicle mounted display as a function of the sensed location. This central system transmits one or more messages to control circuitry on the vehicle, which causes the selected information to be displayed on the vehicle mounted display.

According to another aspect, there is a method of displaying information. This method senses the current geographical location of a publicly visible electronic display mounted on a moving vehicle. The method changes the information shown on the display as a function of the sensed vehicle locations. It associates different values with having information shown on the display at different locations and different times. The method calculates a sum of the values associated with the showing of information on the display at a series of locations and time corresponding to a sequence of the sensed vehicle locations and the corresponding times at which such locations have been sensed.

In some embodiments of this aspect, where an advertiser has agreed to pay for the showing of certain information on the display. The amount agreed to be paid for the showing of information varies as a function of time and location at which the information is shown, and that calculated sum is charged to the advertisers.

In some embodiments of this aspect the credit calculated sum further includes crediting the calculated sum to the operator of the vehicle, such as the driver or owner of the vehicle. In some embodiments a human perceptible representation of the sum is generated inside the vehicle, such as by generating a display or voice messages, so the sum can be communicated to a driver of the vehicle. In some such embodiments the calculated sum generates inside the vehicle a human perceptible representation of the different values associated with showing information at different locations and times, so the different values can be communicated to a driver of the vehicle.

In some embodiments of this aspect an online auction is used to set different prices which are charged for having a display show information at different geographic location and different times, and the different values used to calculate the sum are a function of the prices.

According to another aspect, a method of displaying information comprises sensing the current geographical location of one or more moving electronic information displays. This method changes the information shown on the display as a function of its location. Then the method receives, over a computer network, a customer's selection of criteria for selecting at what places and times the customer wants a customer messages to be shown on one or more of the displays. The method controls which customer messages are shown on which of one or more moving displays at which times at which sensed geographical locations as a function of the customer selection criteria received over the network.

In some embodiments of this aspect the receipt over a network of customer selected criteria includes receiving bids over the computer network for the right to display images on one or more of the displays according to the customer selected criteria. This method uses a computerized auction process to determine which bids result in the purchase of rights to display images according to the customer-selected criteria.

In some embodiments of this aspect the customer selected criteria can include one or more criteria defining a desired demographic characteristic of the desired audience for the display of the customer message. This method uses a demographic database indicating the demographic characteristics of potential audiences at different locations to select at what locations messages should be shown based on one or more such customer selected demographic criteria.

As used in this specification the word demographic means information as to overall population, and information as to numbers of different types of people, including virtually any classification of types of people which are useful to those seeking to target messages to desired audiences, including sex, age, income, racial or ethnic background, employment type, location of residence, life style, sexual preference, religion, number of children, dress, prior purchasing information, behavioral information, current activity, current location, or any other demographic or psychographic information which is considered useful in marketing products, services, political candidates or view, and the ideas.

In some such embodiments using a demographic database, the demographic database indicates the demographic characteristics of potential audiences both as a function of locations and time. Such embodiments use the database to select both at what locations and what times messages should be shown.

In some such embodiments using a demographic database, the customer selected criteria can include the price charged for the display of messages according to certain other criteria. This method uses a price database to store prices for display of messages according to different combinations of customer selectable criteria. The method further includes automatically selecting a set of one or more times and locations which most optimally satisfies a set of customer selected criteria, given a customer selected price criterion, using information in the demographic and price databases.

According to another aspect, a computerized system includes one or more vehicles. Each vehicle includes an electronic display and an electronic location indicator for providing an indicating the vehicle's current location. This system also includes an electromagnetic receiver for receiving wireless information from a control network determining which different images are to be shown on the information display as it travels through different locations at different times. The computerized system includes a control network that includes programming for receiving over a computer network a selection of a message, and a selection of one or more times and places in which the selected message is to be shown on one or more of the displays. The system also includes an electromagnetic transmitter for transmitting information determining which images are to be shown on the vehicle information displays at what times as a function of the selections of message, time, and place received over the computer network.

In some embodiments of this aspect, the control system's programming includes programming for receiving bids over the computer network for the right to display messages on one or more of the displays at one or more selected times and one or more selected places. There is also programming for using a computerized auction process to determine which bids result in the purchase of rights to display messages at the selected times and places.

According to another aspect, a method of displaying information comprises displaying messages on each of a plurality of outdoor electronic displays, each having computerized control electronics. This method provides an online e-commerce site, which enables customers to select to purchase over a computer network the right to show one or more images on the displays as a function of location and time. The method communicates from the e-commerce site to the control electronics of individual electronic displays information controlling which images they should run at which times as a result of the on-line purchases.

In some embodiments of this aspect the e-commerce site receives bids over the computer network for the right to display images on one or more of the displays at a one or more location at one or more times. This method uses a computerized auction process to determine which bids result in the purchase of rights to display images at which times and locations.

In some embodiments of this aspect some of the outdoor information displays are mounted on vehicles so as to be publicly visible from outside such vehicles. The current geographic location of each such vehicle is automatically determined as it travels. The system determines which images to show on a vehicle's display as a function of the determination of its different locations as it travels and as a function of which customers selected to purchase the right to display images at given locations at the time such vehicles travel through them.

In some embodiments of this aspect, the method further includes receiving over the computer network at the e-commerce site a computer readable representation of a message to be shown in association with a purchase selected over the network. The method also transmits the message representations from the e-commerce site to a display's control electronics so the message can be shown by the display at the time and location associated with the selected purchase.

In some embodiments of this aspect, this e-commerce site provides an on-line interface allowing a customer to select one or more criteria to be used in selecting the time and place at which a customer's message is to be shown. The system also automatically selects when a given display is to show the customer's message as a function of the customer selected criteria.

In some such e-commerce site embodiments, the customer-selected criteria can include a desired time for the display of a message. The customer-selected criteria can include a desired location for the display of a message.

In some such e-commerce site embodiments, at least some of the displays are mounted on vehicles. The method includes sensing the location of the vehicles as they move. The selection of when a given display is to show a message is as a function of when a vehicle on which a given display is mounted is sensed as being with the desired location.

In some such e-commerce site embodiments the customer-selected criteria can also include a characterization of a desired audience for the display.

In some such embodiments involving audience characterizations, sensors, such as sound, heat, infrared, light, image, vibration, and touch sensor, are used to obtain information from the vicinity of a given display and using electronics to characterize information received from sensor. The characterizations of received information are used to determine whether or not it is likely a desired audience characterization exists in the vicinity of the given display, and the selection of when a given display is to show a message is a function of this determination.

In some such embodiments involving audience characterizations, the selection of when a given display is to show a message is a function of whether or not the desired audience characterization is estimated to exist in the vicinity of the given display based on a database of different audience characteristics at different locations. In some such embodiments the database stores audience characteristics which vary both as a function of location and time and the selection of when a given display is to show a message is a function of the audience characteristics stored in the database for a time corresponding to the time of the potential showing and for the location of the given display.

In some e-commerce site embodiments, the customer-selected criteria can also include a distance in time from an event, such as, for example a sports event, concert, commencement, or trade show. In some such embodiments, the customer-selected criteria can also include a distance in space from the location of an event.

In some e-commerce site embodiments, the customer-selected criteria can also include proximity to one or more business establishments of a given type.

In some e-commerce site embodiments, the e-commerce site provides a user interface allowing a customer to select one or more criteria to be used in selecting the time and place at which the customer's message is to be shown, and the method automatically selects one or more combinations of place and time which best match the customer selected criteria.

In some such automatic place-time selection embodiments, the e-commerce site displays on-line the automatically selected place-time combinations to the customer. This allows a customer to select on-line to have a message displayed at one or more of the displayed place/time combinations. The method uses the customer selections of place-time combinations to determine which messages are shown on which displays at which times.

In some such automatic place-time selection embodiments, the site uses an optimization scheme to select a set of one or more place/time combinations that best match the selected criteria. This optimization is determined by a distance metric in a multi-dimensional space defined by the customer-selected criteria.

In some of the e-commerce site embodiments the site downloads software over the computer network to a browser that enables a user of the browser to make the purchase selections by means of a point-and-click user interface.

In some of the e-commerce site embodiments, the site has an on-line programming interface having a set of publicly specified messages that can be sent by a client computer over a computer network to cause the site to perform specified functions. This allows a programmer to independently write programming to run on client computers that can select which of such specified messages to send over a computer network to the e-commerce site so as to determine which of the purchase selections are made.

In some of the e-commerce site embodiments, the site provides a programming interface to the computerized control electronics of individual displays, which interface has a set of publicly specified messages which can be sent by the control electronics to cause the site to selectively perform desired functions and which can be sent by the e-commerce site to cause the control electronics to perform desired functions. This allows programmers to independently write display control programming which can cause such display control electronics to display messages under the control of the site.

According to another aspect an e-commerce site is provided which is comprises of a computer system including one or more computers, and one or more communication interfaces for allowing the computer system to communicate with a network of outdoor electronic displays and customer computers over an internetwork. The e-commerce site includes programming for providing an on-line interface allowing customers to select on-line one or more criteria for determining where and when they desire individual customer messages to be shown by the network of displays. It also includes programming for sending to the displays control information to control which customer messages individual ones of the displays show as a function of the customer selected criteria.

In some embodiments of such an e-commerce site, the site's computer system includes programming for receiving over an internetwork the content of customer messages. Such content could be in the form of files containing vector-based representations of animations; they could include dynamically created data, such company news, current prices or specials, etc. The site includes programming for sending the content of the customer messages to the displays. In some such embodiments the e-commerce site is programmed to be able to send such uploaded message content to displays with control information enabling their display within an hour after receiving them. In some such embodiments the e-commerce site enables the showing of uploaded information in real time, meaning that the displays can show information within seconds of when it has been uploaded. This enables advertisements to include real time information such as latest prices, inventory situations, the latest bids in auctions, current sports, news, financial, or traffic, or weather happenings.

In some embodiments of such an e-commerce site, at least some of the outdoor displays are mounted on vehicles so as to be publicly visible from the exterior of the vehicles. The site's computer system includes programming for receiving tracking information from such vehicle displays including information indicating the different locations at different times of individual vehicle mounted displays. This method also uses the tracking information to calculate bills for customers of the site as a function of the different positions of vehicles at different times.

In some embodiments involving vehicle-mounted displays, the site's computer system includes programming for sending traffic information to the vehicle-mounted displays and control information for causing the displays to show the traffic information.

In some embodiments involving vehicle-mounted displays the tracking information also includes information about which messages have been shown at which locations and which times by the vehicle mounted displays.

In some embodiments of the e-commerce site, the customer-selected criteria can include a desired location for the showing of a customer message. In some such embodiments the customer-selected criteria can also include a desired time for the showing of a customer message.

In some embodiments of the e-commerce site, the customer-selected criteria can include a selection of one or more selectable types of display upon which the customer desires its messages to be shown. For example, the selectable types of displays include types based on different display size. In embodiments in which individual displays are mounted on vehicles at various locations relative to the vehicles, the selectable types of displays includes types based on different display positioning relative to the vehicle on which they are mounted.

In some embodiments in the e-commerce site, the customer-selected criteria can also include a characterization of a desired audience for the showing of a customer message. In some embodiments the site's computer system includes programming for accessing a demographic database, which associates different audience characteristics which different combinations of place and time, to determine which place/time combinations best match a customer selected audience characterization.

The desired audience characterization can include a desired income characteristic of audience, an age characteristic of audience, ethnic characteristic of audience, a desired behavioral characteristic of audience, a desired number of people in audience, a desired characterization of the distance from one or more audience members to the display used to show a message, and/or a desired characterization of the time one or more audience members will have to view the display.

The customer-selected criteria can also include a distance in time from an event, and/or a distance in space from the location of an event.

In some embodiments of such e-commerce sites automatically selects one or more combinations of place and time that best match the customer-selected criteria. In some such embodiments the e-commerce site's computer system includes programming for causing the on-line interface to display the automatically selected place/time combinations to customer. The system allows a customer to select to have a message displayed at one or more of the displayed place/time combinations. The control information sent so the displays controls which customer messages are shown on the displays as a function of the customer's selection of one or more of the displayed place/time combinations.

In some embodiments in which the e-commerce site automatically selects place/time combinations, the place/time selection programming encodes an optimization scheme for selecting a set of one or more place/time combinations which best match the customer-selected criteria using a distance metric in a multi-dimensional space defined by selected criteria. In some such embodiments, the customer selected criteria can include an indication of a desired limitation on the cost which a customer is to pay for the display of messages and the optimization scheme is coded to select a set of one or more place/time combinations which stay within the cost limitation and yet best match other customer selected criteria. In some such embodiments, the cost limitation used is a range around a cost figure entered by a customer.

The some embodiments of such an e-commerce site, the site has programming for providing an on-line interface includes programming for downloading software over the computer network to a browser on a client computer. This enables a human user of the browser to select options provided by the site by means of a point and click user interface.

In some embodiments of such an e-commerce site, the programming for providing an on-line interface includes programming which defines a publicly available on-line accessible programming interface which defines messages which can be sent by a client computer to cause the e-commerce site to selectively perform desired functions. This allows programmer to independently write programming which determines which options provided by the site to select.

In some embodiments of such an e-commerce site, the programming for sending to the displays control information includes a programming interface to the displays which has a set of publicly specified messages that can be sent by the site to the display and by the display to the site to cause the site and the display to selectively perform desired functions. This allows the programmer to independently write display control programming that can cause one or more outdoor displays running such programming to display messages under the control of the site.

In some embodiments of such e-commerce sites, the programming for providing an on-line interface allows customers to purchase on-line the right to display, in the future, messages according to a set or one or more customer selected criteria. It also allows customers who have purchased such rights to resell them on-line over the site.

In some embodiments of such e-commerce sites, the programming for providing an on-line interface allows customers to select on-line the right to show a message according to a set or one or more customer selected criteria. The programming also allows customers to select on-line which message they desire to have shown at the times and places defined by such criteria. In some such embodiments, the programming allows customers who have made such a message selection to select on-line to change that selection by selecting a different message.

According to another aspect , an internetwork site comprises of a computer system including one or more computers and one or more communication interfaces. The communication interfaces allows the computer system to communicate with a network of outdoor electronic displays and, over an internetwork, with customer computers. This site also includes programming for receiving from customer computers over the internetwork an upload containing the content of customer messages and programming for sending to the outdoor displays the contents of the uploaded customer messages and also information to control when individual displays show individual ones of the customer messages.

In some such embodiments the uploaded messages are vector-based representations of animated messages, such as Macromedia Flash or Shockwave animation files, and the control electronics associated with individual displays include programming for creating animated video output in response to such vector-based animation representations. Such vector-based animations are particularly useful in embodiments in which message content is downloaded to displays over wireless communication links (which is particularly useful in the case of vehicle mounted displays), since they enable animations to be represented compactly. Their compactness is also of value in systems in which the displays have associated storage devices in which the representations of multiple customer messages are cached.

According to another aspect, a method of displaying messages on each of a plurality of displays comprises using separate cameras to derive images of an area near each of the displays. This method includes using such images to characterize the potential audience associated with the location in which each such image was taken. Also this method uses such audience characterizations to select which messages to show on which displays.

In some embodiments of this camera-audience-characterization method, the cameras are used to derive images of areas near displays at successive points in time. Successive images received from within each of a plurality of locations are used to produce time-sensitive characterizations of the potential audience associated with each such location at different points in time. The time-sensitive audience characterizations for each of different locations are used to select which messages to show on which displays at which times.

In some such time-sensitive embodiments the displays are mounted on vehicles so as to be publicly visible from the exterior of such vehicles. Each such vehicle has at least one such cameras mounted on it. The images derived from each such vehicle include images of different areas near the vehicle at different times, as the vehicle travels, and image information is combined from cameras on multiple vehicles to derive the time-sensitive audience characterizations.

In embodiments of the camera-audience-characterization method, the audience characterization can characterizes, for example: the number of people in the potential audience for seeing a message shown on a given display; the number of a given type of people in the potential audience for seeing a message shown on a given display; the types of vehicles in which there might be potential viewers in the vicinity of a given display; and/or other demographic characteristics of the potential audience.

In some embodiments in which audience characterization involves vehicle types, machine vision is used to recognize vehicle types from camera images. In some such embodiments, displays and cameras are mounted on vehicles, and the selections of which messages to show from a display on a given vehicle can be a function of one or more vehicle types recognized in images from the vehicle's one or more cameras. This enables, for example, the message shown on a back display of a vehicle to vary as a function of the make, model, vehicle category (e.g., truck, convertible, compact, SUV, or luxury), cost, age, or other characteristic of the vehicle directly behind it. This would enable, for example, advertiser who sell or service vehicles to target advertisements to viewers based on the type of car they are driving, and, if desired, also by their location. It would also enable advertisers to target advertisements to people based on probable information about their income or lifestyle, as indicated by their choice of vehicle.

In some embodiments of the camera-audience-characterization method, real time audience information derived from images taken by a given display's associated camera is used within real time (defined in this context to mean within a minute or less) to select which messages are to be shown on the given display.

Some embodiments of the camera-audience-characterization method further include using audience information derived from one or more of the cameras from corresponding locations and/or times in the past to select which messages to show on a given display.

In the camera-audience-characterization method, machine vision recognition and/or human vision recognition can used to derive audience information from images by automatically determining which parts of images, if any, correspond to separate people.

According to another aspect, a computerized system includes a plurality of vehicles. Each of these vehicles carry a publicly visible electronic display, a computer system for controlling the electronic display, a wireless transmitter and receiver connected to the computer, and a camera for taking images from the vehicle as it travels, which is connected to the computer. This system is programmed for sending image information derived from the camera to a central system. The computerized system includes a central system comprised of one or more computers; the central system includes a wireless transmitter and receiver. The system has programming for transmitting control information to the vehicles' computers over the central system's wireless transmitter, controlling which messages are shown on the vehicles' displays. The central system also has programming for receiving, over the central system's wireless receiver, image information transmitted from a plurality of such vehicles.

In some embodiments of this computerized system, the image information contains information about vehicle traffic in the vicinity of the cameras. The central system has programming for storing information derived from image information received from a plurality of the vehicles indicating the rate of flow of traffic at each of a plurality of locations. In some such embodiments the central system includes programming for transmitting to one or more of the vehicles' computers information it has stored about rates of flow of traffic at one or more locations and information for causing the vehicles' computers to show the traffic information that has been sent to them.

In some embodiments of the computerized system, the image information contains information about the weather in the vicinity of the cameras. The central system has programming for storing information derived from image information received from a plurality of the vehicles indicating the weather at each of a plurality of locations. In some such embodiments the central system includes programming for sending to one or more vehicles' computers information it has stored about weather at one or more locations and information for causing the vehicles' computers show such weather information.

In some embodiments of the computerized system, the image information contains information about the potential audience for messages shown on the vehicles display in the vicinity of the cameras. The central system has programming for storing information derived from the image information received from a plurality of the vehicles characterizing the potential audience for seeing messages shown on vehicle displays at each of a plurality of locations.

In some embodiments of the computerized system each vehicle's computer includes visual recognition programming for recognizing patterns in images from the computer's associated camera. The image information sent to the central system includes indications of which patterns have been recognized in the images from the camera.

In some embodiments of the computerized system the image information sent to the central system includes transmitted two-dimensional images derived from the camera. In some such embodiments, one or more of the central system's computers include visual recognition programming for recognizing patterns in the transmitted images.

According to another aspect a method for a public display of messages comprises carrying a publicly visible electronic display mounted on a vehicle, sending a wireless message to the vehicle including traffic information for one or more locations that indicates the traffic flow at each such location. Also it includes showing the traffic information on the display.

In other embodiments of this traffic-displaying aspect , the display is carried on the vehicle so that it faces backward relative to the vehicles, enabling it to be read by people driving behind the vehicle. This method includes sensing the location of the vehicle as it travels and selecting for which one or more locations traffic information is to be displayed on the vehicle at a given time as a function of the sensed location of the given vehicle at that time. This selection can be made either by determining which traffic information is sent to a given vehicle based on the sensed location or by selecting which of the traffic information sent to a vehicle is to be shown based on such sensed location.

In some embodiments of this traffic-displaying aspect , the method includes selling the display of commercial messages on the vehicle and sending one or more wireless messages to the vehicles including a commercial message. This method also includes selecting when to show a given commercial message on the vehicle's display as a function of the sensed location of the vehicle. This selection can be made either by selecting which commercial messages to send a vehicle based on its sensed location or by selecting which of the a plurality of commercial messages sent to the vehicle is to be shown based on its sensed location.

According to another aspect a method displays information comprises on each of a plurality of vehicles having an attached electronic display. The method senses the current geographical location of the vehicle, and changes the information shown on the display as a function of its location. This method transmits information from the vehicle to a central system, including information about its geographic location at successive points of time on the central system. The central systemcompiles information about the speed of individual vehicles at successive locations from such transmitted information. It also combines such information from a plurality of such vehicles to compile traffic information about rates of traffic in multiple locations. The method transmits from the central system traffic descriptions of the rate of traffic flow at each of such multiple locations.

In some such embodiments this traffic aspect , the traffic information is transmitted back to individual vehicles and is shown on their information displays.

According to another aspect, a method comprises carrying electronic displays mounted on each of a plurality of vehicles and sensing each vehicle's location and speed. The method selects which messages to show on a vehicle's display as a function of its sensed location at different times. It combines sensed location and speed information from multiple vehicles to create a database containing information on the rate of traffic flow at each of a plurality of locations. The method also generates human perceptible descriptions of the traffic flow at each of a plurality of locations. The location of each vehicle can be sensed, for example, by equipment located the vehicle or by a network of wireless receivers separate from the vehicle that determine the vehicle's location be differences in signal strength or time of signals emitted by the vehicle. The speed of a given vehicle can be determined by equipment located on the vehicle, such as a speedometer or GPS equipment, or by tracking the change of the vehicle's location over time.

In some embodiments of this aspect, the selection of which messages to show on a vehicle's display also makes the selection as a function the vehicle's sensed speed.

In some embodiments of this aspect, the human perceptible description of traffic flow includes showing information about the traffic flow at each of one ore more locations on each of a plurality of the vehicle displays. In some such embodiments, this method further includes selecting for which one or more locations traffic flow information is shown on the display of a given vehicle as a function of the sensed location of the given vehicle.

### DESCRIPTION OF THE DRAWINGS

These and other aspects of the present invention will become more evident upon reading the following description of the preferred embodiment in conjunction with the accompanying drawings, in which:
FIG. 1 is a schematic overview of one embodiment of the present invention;
FIG. 2 is a simplified representation of a schedule which can be used by the central system of the embodiment of the invention shown in FIG. 1 to help determine which messages should be displayed by mobile units in each of a plurality of geographic zones at each of a plurality of times;
FIGS. 3 through 6 provide, respectively, a side view, two perspective views, and one top view of a mobile unit according to one embodiment of the present invention;
FIG. 7 is a schematic overview of an alternate embodiment of the present invention that uses a UHF transmitter to communicate the content of display messages to its mobile units;
FIGS. 8 is a schematic diagram of the multiple streams of display-message content that can be broadcast by the central system in the embodiment of the invention shown in FIG. 6;
FIG. 9 is a highly simplified pseudo-code description of the main loop performed by the controller of the mobile units in some embodiments of the present invention;
FIGS. 10 and 11 are schematic representations of two different embodiments of the display-selection method that can be used by the present invention;
FIG. 12 is a schematic representation of a locator signal that can be used with one embodiment of the present invention;
FIGS. 13-15 are highly simplified pseudo code descriptions of daemons which can used by a mobile unit's controller to control the generation of locator signals, the transmission messages regarding the input of intended vehicle destinations, and the setting of locator-signal-period values, respectively;
FIG. 16 is a highly simplified pseudo code description of programming executed by the processor of the central system to respond to the receipt of locator signals from mobile units in some embodiments of the invention; and
FIG. 17 is a highly simplified pseudo code description of programming which can be used to cause the central system to generate billing.
FIG. 18 is a schematic representation of an display system according to one embodiment of the invention which controls the display messages on mobile, fixed, and portable displays, and which enables users, advertisers, and advertising sellers to access and interact with a system over a computer network;
FIG. 19 is a schematic representation of the system shown in FIG. 18 illustrated in a form more similar to that of FIGS. 1 and 7;
FIG. 20 is a block diagram of a mobile unit according to one embodiment of the present invention;
FIG. 21 is a schematic block diagram of a mobile unit designed for use as a taxicab according to another embodiment of the invention;
FIG. 22 is a schematic block diagram of a non-mobile, or fixed, display unit according to one embodiment of the present invention;
FIG. 23 is a pseudocode representation of the central system's programming relating to its on-line site according to one embodiment of the present invention;
FIG. 24 is a pseudocode representation of the central system's geosynchrons selling programming according to one embodiment of the present invention;
FIG. 25 is a pseudocode representation of the central system's geosynchron display interface according to one embodiment of the present invention;
FIG. 26 is a pseudocode representation of the central system's geosynchron selection interface according to one embodiment of the present invention;
FIG. 27 is a schematic representation of the publicly defined application programmers' interface that the central system's provides to independent programmers to enable them to write software to let remote computers to use the functionality of the central system under independently written program control;
FIG. 28 is a representation of functions provided by the central system's ad selling API in some embodiments of the present invention;
Figure 29 is a pseudocode representation of the central system's personal message selling programming according to some embodiments of the present invention;
FIG. 30 is a pseudocode representation of the central system's ad response programming according to one embodiment of the present invention;
FIG. 31 is a pseudocode representation of the central system's locator signal response programming which is similar to the programming shown in FIG. 16 except that it responds to the identity, number, and/or closeness of wireless units that are near a given mobile unit for which it is determining the messages to be displayed;
FIG. 32 is similar to FIG. 31 except that in it the central system responds to information about the speed of a mobile unit in determining what messages it should display;
FIG. 33 is a pseudocode description of programming contained in a mobile unit to make use of one or more cameras located on that mobile unit;
FIG. 34 is a pseudocode representation of programming used by the central system to make use of the cameras contained in the central system's fixed and mobile units;
FIG. 35 is programming used by the central system to cause two or more of its displays to perform a synchronized message display;
FIG. 36 is programming used by the central system to cause one of its displays to display a location-varying message;
FIG. 37 is a pseudocode representation of programming on a mobile unit used in the display of a location-varying message of the type described with regard FIG. 36;
FIG. 38 is a pseudocode representation of programming that can be used by a mobile unit to help it accomplish functions related to its use as a taxicab;
FIGS. 39A and 39B are pseudocode representations of programming used by the central system to accomplish functions related to use of mobile units as taxicabs;
FIGS. 40 and 41 are schematic representations of the functionality that can be performed by various embodiments of the invention in capturing and displaying information about traffic or weather, respectively;
FIGS. 42 and 43 are diagrams of components used in a car-top box to provide some of the functionality necessary to convert a motor vehicle into a mobile unit for use with many embodiments of the invention;
FIG. 44 is a diagram illustrating the field of view that a car-top box, such as that shown in FIGS. 42 and 43 as well as in FIGS. 3 through 6, provides;
FIGS. 45 and 46 are schematic block diagrams of the circuitry of many of the components shown in FIGS. 42 and 43;
FIGS. 47 through 58 illustrate an embodiment of the invention which includes both a relatively lower resolution text-oriented display, as well as a higher resolution graphic display in one mobile unit;
FIGS. 51 through 55 illustrate a display device for use in a mobile unit according to some embodiments of the invention which is designed to use sunlight or other external illumination to backlight its display;
FIG. 56 is a fixed display that can be used in some embodiments of the invention to enable sunlight or other external light to help backlight its display;
FIG. 57 is a pseudocode representation of programming which can be used by the central system in embodiments of the invention which pay drivers of mobile units as a function of the earnings from displays shown by their mobile unit; and
FIG. 58 illustrates some of the various types of non-commercial programming which can be used in some embodiments of the invention to help draw viewers' attention toward the displays of the invention's system.
FIG. 59 is a schematic representation of one possible publicly defined application programmer's interface which the central system's can provide to independent programmers to enable them to write software to let display units use the functionality of the central system under independently written program control;
FIG. 60 illustrates how one or more cameras can be associated with both mobile and fixed display units for purposes of deriving images which can be used to collect information about traffic, weather, and the potential audience for a display unit's messages; and

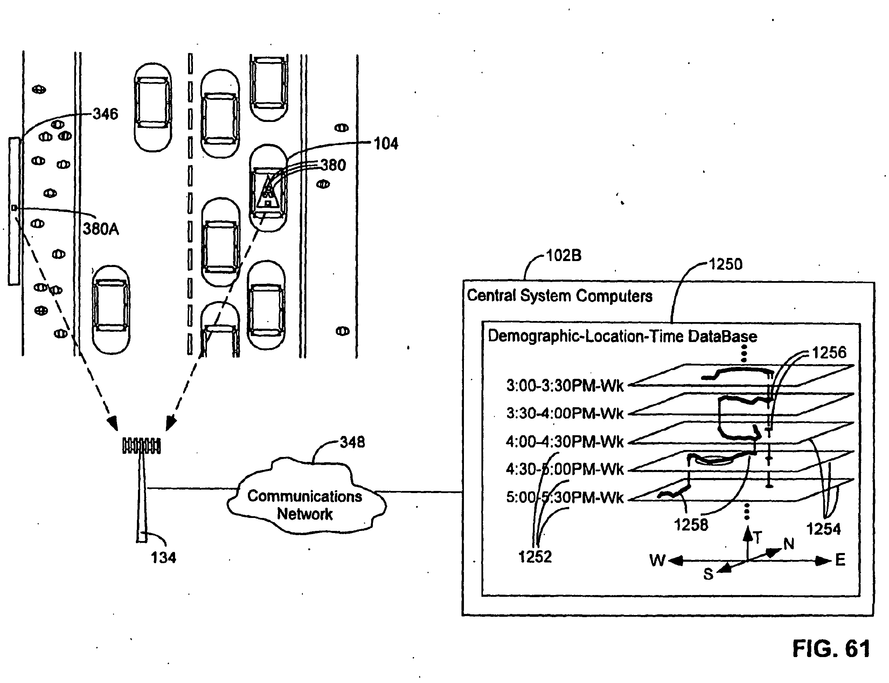

FIG. 61 illustrates how information form such cameras can be used to develop demographic data as a function of both time and location.

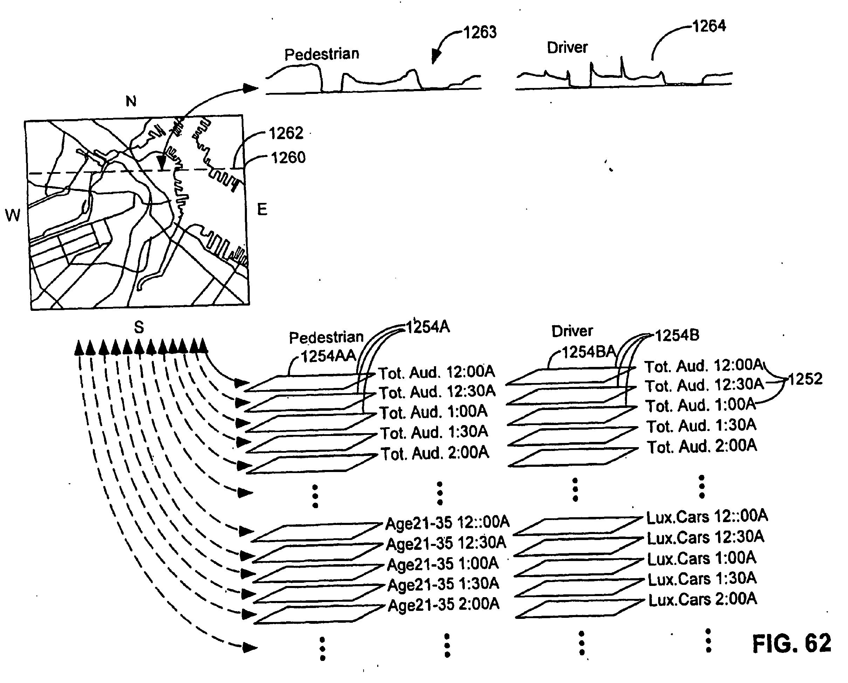

FIG. 62 is a schematic representation of a multidimensional demographic database for a given geographic area that includes separate demographic data at the same location for pedestrians and for drivers;

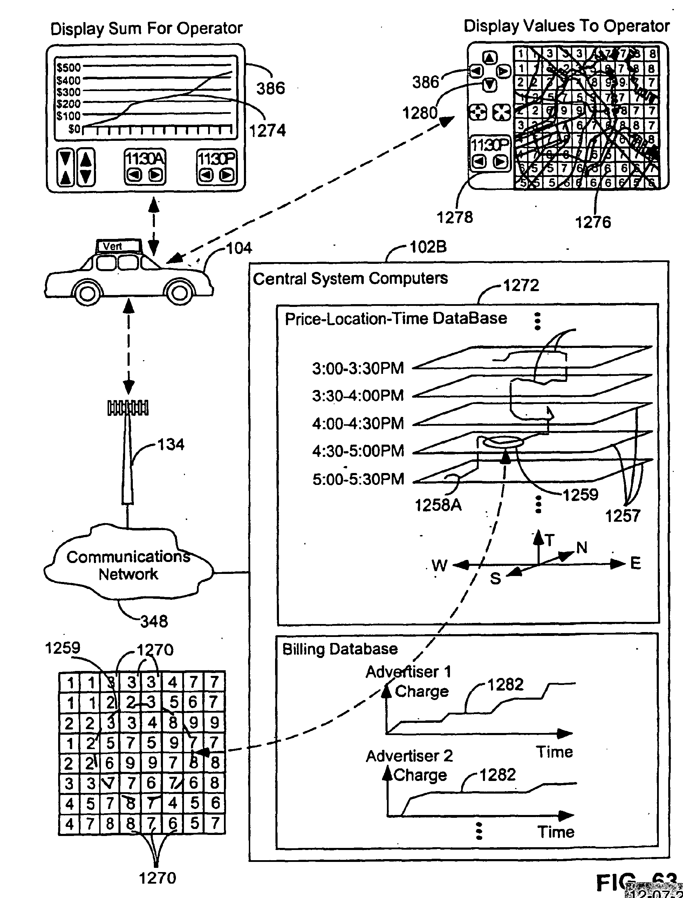

FIG. 63 is a schematic representation of an aspect of the invention which involves associating different values with the display of messages at different locations and times and calculating a sum of such values corresponding to the locations and times through which one or more vehicles has traveled and using such a sum to charge an advertiser or credit a vehicle operator;

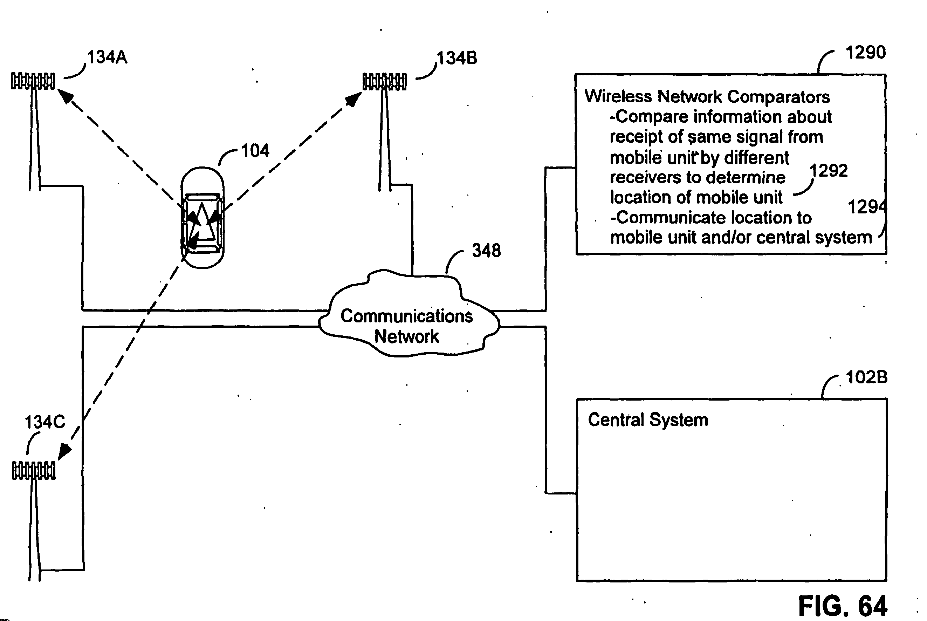

FIG. 64 is a schematic representation of a system for controlling the display of messages displayed on mobile display units as a function of position in which multiple receivers are used to determine the location of the mobile unit.

### DETAILED DESCRIPTION OF PREFERRED EMBODIMENTS

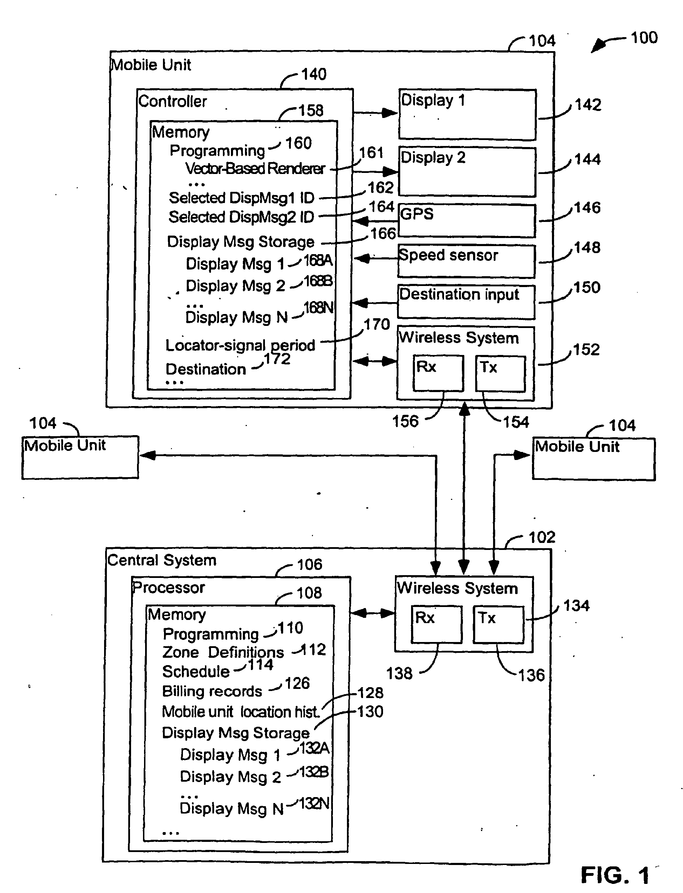

FIGS. 1 provides a schematic overview of a system 100 for displaying information on mobile signs according to one embodiment of the present invention. The system 100 includes a central system 102 and one or more mobile units 104 that are controlled by the central system. The central system includes a processor 106 which includes memory 108 that stores programming to control its operation. The processor's memory also includes geographic zone definitions 112 which define the geographic zones in which the system can display different messages. In different implementations geographic zones can be defined differently. In some embodiments they can correspond to zip code or census blocks. In other embodiments they can correspond to the length of a given street along a given block. In some embodiments, zone definitions will tend to remain relatively fixed overtime. In other embodiments zone definitions could be redefined frequently, such as daily, or even hourly, to reflect different geographic areas advertisers have an interest in displaying their advertisements in.

The central system's memory also includes a schedule 114.

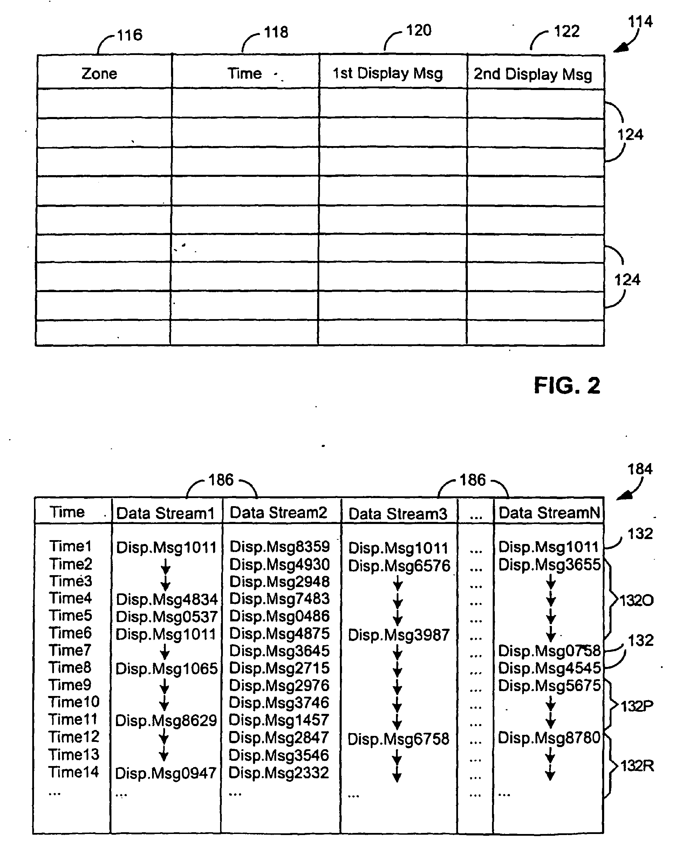

FIG. 2 illustrates one possible embodiment of the schedule 114 in which the schedule takes the form of a database table comprised of rows corresponding to record in the database and columns corresponding to individual fields within the records. This table includes a zone column 116 that defines the geographic zone of a given record 124 in the table. The table also includes a time column 118, which identifies the time range during which a given record 124 is to apply. The table further includes columns 120 and 122 that identify the display messages that are to be shown on the separately programmable displays of a given mobile unit in the zone and ask the time indicated in the zone and time fields of the record 124 in which they occur. As those skilled in the computing arts will understand, in other embodiments of the invention the schedule 114 can be a virtually any type of data structure capable of indicating which display messages are to be shown by a mobile unit given information that can include the zone in which it is currently located; the current time; the mobile unit's speed; the number and types of displays which the mobile unit has; the number of the other mobile units currently located in the same zone; the number of cumulative minutes the mobile unit or other mobile units have already displayed a particular message (or other messages from the same or other advertisers) in one or more relevant time periods, either in the current zone or in some large number of zones; and any other information which may be relevant to what messages might be desired on a given mobile unit, given its current location.

As is implied by the paragraph above, in some embodiments of the invention, the schedule takes into account how many times one or more messages from a given group of messages have been shown within one or more zones during one or more time periods by one or more mobile units in determining if a given message should be shown by a given mobile unit in a given zone. For example, with such a schedule an advertiser would be able to instruct the system to "Show my message for a total of 1000 minutes total in Wall Street area Monday-Friday 3-5 pm". Another advertiser might request that the system show a set of five different messages for a total of 5000 minutes in four different zones in which it has stores during rush hour over a period of a month. In some such systems the scheduling will attempt to have the desired number of minutes that are shown over a given amount of time distributed relatively evenly across that time period.

As FIG. 1 shows, the central system's memory also includes billing records 126. These records indicate which display messages have been shown at what zones at what times, so advertisers can be billed accordingly. The billing records 126 can also include bills addressable to individual advertisers generated from such information.

The central system's memory also includes mobile unit location history 128, which records information about the current and past location of individual mobile units. This information can be used to project the likely travel of an individual mobile unit and, thus, allow such a mobile unit to more efficiently cache display messages for the geographic zones it is likely to travel in.

In different embodiments of the invention different types of display messages can be used. The display messages used with the invention can vary from simple text messages displayed on the low-resolution text-based displays, to high resolution still graphic images or high-resolution color animated or video messages. The content of the display messages can include not only advertisements, but also other types of messages such as weather and traffic reports (including local traffic reports, such as reports of how many feet till the scene of a traffic jam or the detour), news, public service announcements, and information and entertainment programming.

The central memory also caches display message in a display-message storage 130. As is indicated in FIG. 1, this storage or cache area is used to store a plurality of individual display messages 132A through 132N after they have been downloaded from the central system. These cached display messages can be used to increase the speed with which mobile units can display selected display messages by preventing the need for the mobile unit to download each such message at the time the mobile unit is instructed to display it. Such caching also has the benefit of decreasing the amount of communication traffic required by the system, since it often enables messages which are shown multiple times to be downloaded only once.

The central system shown in FIG. 1 further includes a wireless system 134 for transmitting and receiving wireless messages to and from individual mobile units. The wireless system includes both a transmitter 136 and a receiver 138. As will be understood by those skilled in the arts of radio-frequency communication, in many embodiments of the invention, the transmitter and receiver of a wireless system will commonly share many components. The wireless system 134 can be any sort of wireless transmitter currently known or hereinafter invented. In many embodiments of the invention, however, the wireless system 134 will be a cellular phone or a wireless data communication system. In such embodiments, many of the components of the wireless system will be part of wireless systems provided by one or more third party phone companies.

In the embodiment shown in FIG. 1 each of the mobile units 104 includes a controller 140; a first and second separately controllable display 142 and 144, respectively; a global positioning system ("GPS") 146, a speed sensor 148 capable of determining the speed of the mobile unit; a destination input device 150, such as a keyboard, enabling a user of the mobile unit to input information defining a desired destination for the mobile unit; and a wireless system 152 which includes a transmitter 154 and a receiver 156 communicating with the central system 102.

The displays 142 and 144 can be virtually any type of display capable of showing an electronically encoded image including, for example, liquid crystal, LED, gas plasma, electronic ink (of the type being developed by Eink Corporation, and similar technologies), electronic paper (such as Gyricon, being developed by Xerox PARC, and similar technologies), and cathode ray tube displays. In some embodiments of the invention, the separately controllable displays 142 and 144 might actually be two separate parts of a single display.

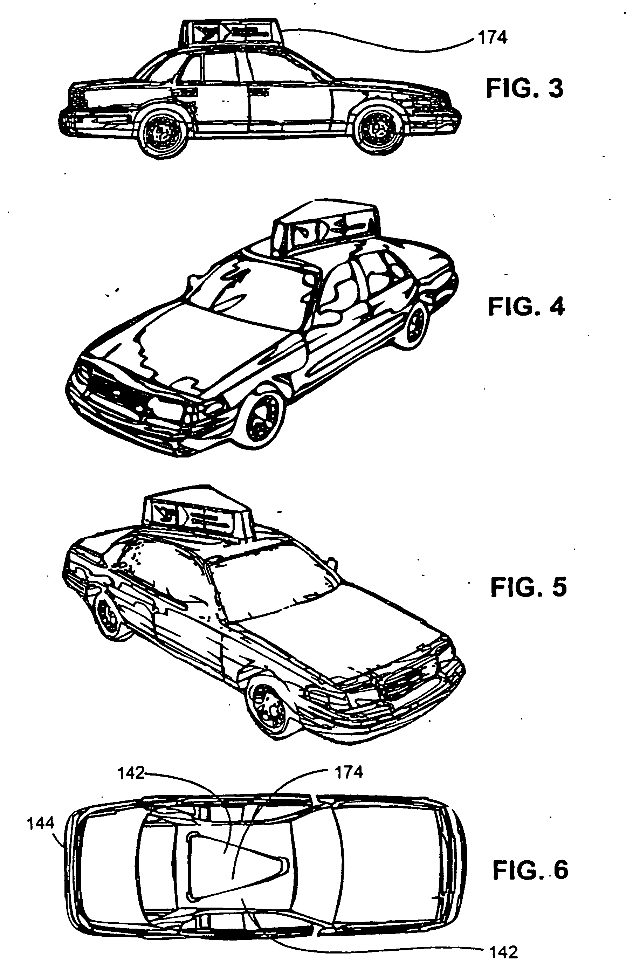

FIGS. 3 through 6 provide various views of one embodiment of the mobile unit 104. In this embodiment the mobile unit is a taxicab and most of the components identified within the box labeled 104 in FIG. 1 are contained in a car-top unit 174 shown in FIGS. 3 through 6. In this embodiment the mobile unit's first separately controllable display 142 is actually two displays, one located on each of the longer two sides of the triangularly shaped car-top unit 174. The mobile unit's separately programmable second display 144 corresponds to a smaller display unit that occurs in the back-facing, shorter side of the triangularly shaped car-top box. Such a rear-facing display can display separate content from the side-facing displays, since its content could be tailored to the audience of drivers rather than pedestrians. It should be noted that the vehicle associated with a mobile unit need not be a taxi. In fact, it could include buses, trains, trucks, privately owned passenger cars, boats, airplanes, blimps, and virtually any other type of vehicle.

The mobile unit's controller 140 contains memory 158 that includes programming 160 which controls its operation. It also stores display message IDs 162 and 164, which identify the display messages that are currently to be shown on the mobile unit's two displays 142 and 144. The controller's memory also stores a cache of display messages in the display message storage 166. This cache includes a plurality of display messages 168A through 168N that have been cache after having been downloaded by wireless transmission from the central system 102.

In some embodiments of the invention this display unit's programming 160 includes programming 161 for generating animated video output from vector-based representations of animation. This has the benefit of enabling animated, relatively high-resolution images to be generated on a display unit from files that are relatively compact. This reduces the amount of time and bandwidth required to download such messages from the central system, and it reduces the amount of space required to store a plurality of such animated images in the display unit's display message storage area.

The mobile unit's controller's memory further includes a locator-signal period variable 170, which indicates the length of time that should occur between the generation of successive locator signals. Such locator signals transmitted information about a given mobile unit's status and location to the central system. The mobile unit's memory also stores a destination variable 172, which records information input about an intended destination for the mobile unit's vehicle which has been input into the destination input device 150.

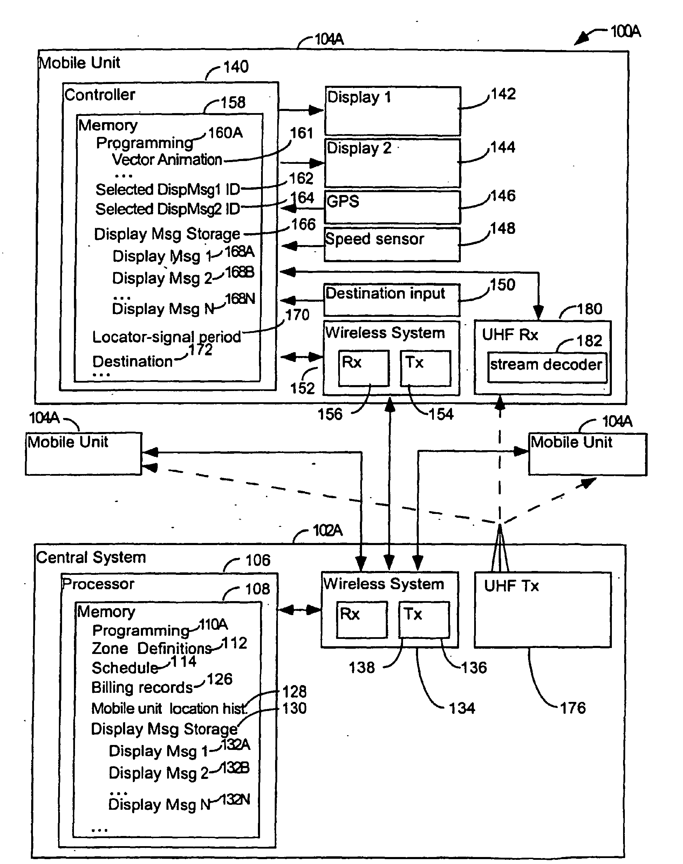

FIG. 7 illustrates an alternate embodiment of the invention's system for displaying information on mobile signs. This embodiment is identical to that shown in FIG. 1 except for the fact that its central system includes a broadband transmitting system, such as a UHF transmitter 176, which can be a licensed UHF television station, and except that its mobile units 104A include a corresponding broadband receiving system, such as a UHF receiver 180 and a stream decoder 182. In this embodiment of the invention, the UHF transmitter transmits multiple streams of data of the type shown schematically in FIG. 8.

As is indicated in FIG. 8, the data transmitted by the UHF transmitter is comprised of a plurality of data streams 186. Each of these streams includes a plurality of messages 132 of different length which occur at successive times. As will be described below, the central system transmits to each mobile unit an indication of which of the messages contained in one of its data streams the mobile unit should display live, and which of such messages the mobile unit should cache. Such control information is sent through the wireless transmitter 136 shown in FIG. 7 in many embodiments of the invention. In some embodiments of the invention, such instructions are included in one or more of the UHF data streams themselves. As those skilled in the communication arts will appreciate, there are multiple methods by which one or more data streams can be encoded on a high frequency transmission signal such as those generated by UHF transmitter's.

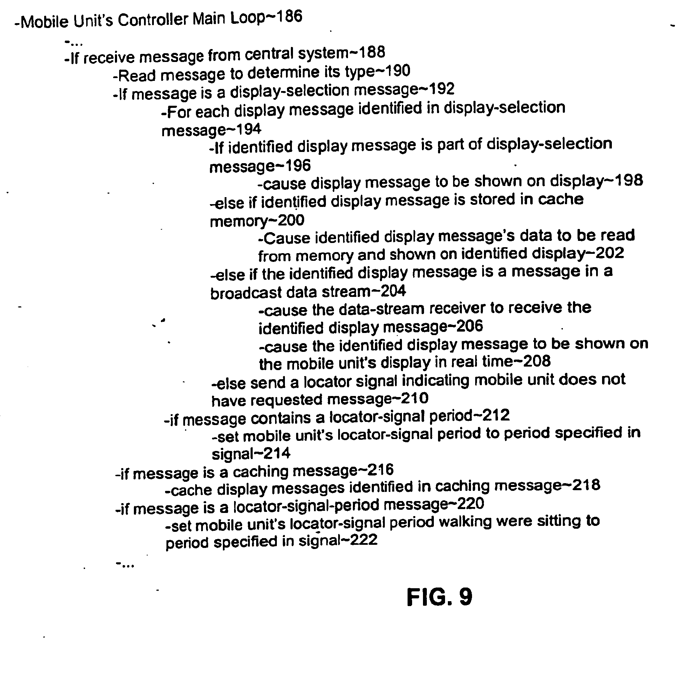

FIG. 9 describes some of the programming 160 associated with the mobile units. In particular, it describes a main loop 186 that the controller repeatedly executes during normal operation. The major function of the portion of the main loop shown in FIG. 9 is to wait for, and to respond to, messages from the central system 102 shown in FIG. 1. When such a message is received, step 188 causes the steps 190 through 222 in FIG. 9 to be performed. In other embodiments, other programming structures besides a main loop can be used. For example, the main loop could easily be replaced with an event driven architecture where the repeated polling is replaced with an interrupt service routine to dispatch events.

Step 190 reads the message that is been received from the central system to determine its type. If the message is a display-selection message, step 192 causes steps 194 through 214 to be performed; if it is a caching message, step 216 causes step 218 to be performed; and if it is a locator-signal-period message, step 220 causes step 222 to be performed. Although not described in this specification, other types of messages can be sent from the central system to mobile units.

If a message received from the central system is a display-selection message, steps 194 through 214 will be performed.

Step 194 performs a set of steps 196 through 210 for each of the separately controllable displays of the mobile unit. In the embodiment shown in FIG. 1 each mobile unit has two separately controllable displays. In some embodiments the mobile unit will only have one controllable display and in yet other embodiments it might have more than two.

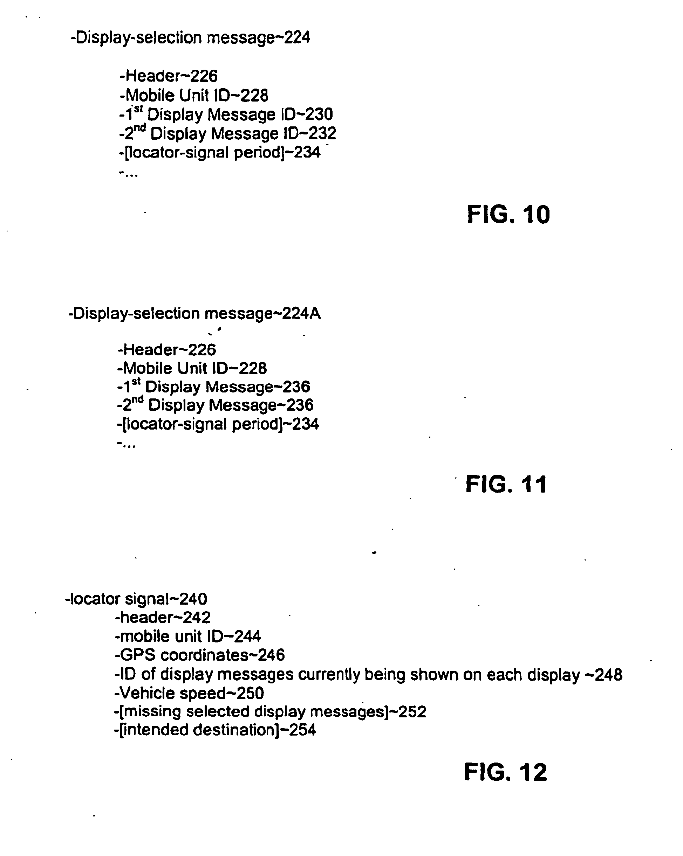

For each separately controllable display message, step 196 tests to see if the content of the display message identified in the display-selection message for the current display is contained in the display-selection message, or not. This difference is illustrated with regard to FIGS. 10 and 11. FIG. 10 shows a display-selection message 224 in which only ID identifies the selected messages. FIG. 11 shows a display-selection message 224A that is identical to the message 224 except that in it the selected messages are actually included within the display-selection message. As can be seen by comparing FIGS. 10 and 11, both messages include a header 226; a mobile unit ID 228, which identifies the particular mobile unit to which the display-selection message is addressed; and, in some cases, a locator-signal period 234, which identifies the length of time which the mobile unit should wait between transmitting the locator signals that inform the central system of the location of the mobile unit.

Returning to FIG. 9, if the step 196 finds that the received display-selection message is of the type shown in FIG. 11, which includes the contents of selected display messages, it will cause step 198 to read that content and show it upon the associated display 142 or 144.

If the test of step 196 is not met, i.e., if the display-selection message does not contain the content of its selected display messages, then step 200 tests to see if the selected display message is stored in the mobile unit's cache memory 166 shown in FIG. 1. If so, step 202 will cause the content of the selected message to be read from memory and shown on the associated display.

If the display-selection message identifies the selected message as part of a broadcast data stream 186 of the type shown in FIG. 8, step 204 will cause steps 206 and 208 to be performed. Step 206 will cause the data stream receiver 182 shown in FIG. 7 to receive the identified display message, and step 208 will cause the identified display message to be shown on the corresponding display of the mobile unit in real-time. The steps 204 through 208 are only applicable to embodiments of the invention of the type, such as that discussed above with regard FIG. 7, which have live messages broadcast to mobile units through a data channel or stream other than data-selection messages transmitted from the central system's wireless system 134.

If none of the tests contained in step 196, 200, or 204 have been met for the current display-selection message, then step 210 will cause the controller to send a locator signal to the central system indicating that the mobile unit does not have the selected message. In many embodiments, the central system will respond by sending the contents of that message to the mobile unit or by instructing the mobile unit to display another message.

If a display-selection message includes a locator-signal-period value 234 of the type indicated in FIGS. 10 and 11, step 212 of FIG. 9 will cause step 214 to write that value into the location-signal- period variable 170 shown in FIGS. 1 and 7. This value will then be used by the mobile unit to control the frequency at which it will generate the locator signals that inform the central system of its location.

If the message received by the main loop of the mobile unit's controller shown in FIG. 9 is a caching message, step 216 will cause step 218 to cache the display message identified in the caching message. In most embodiments of the invention, a caching message will either include the contents of any that it indicates are to be cached, or, when used with embodiments of the invention having one or more broadcast data streams, such as, for example, the embodiment discussed above with regard FIG. 7, it will contain sufficient information to enable the mobile unit's broadcast receiver and stream decoder to select the desired message from a broadcast data stream, so that the messages' content can be stored in the caching memory 166.

If the message received by the new mobile unit's controller is a locator-signal-period message, step 220 will cause step 222 to store the locator-signal-period value received in that message in the locator-signal-period variable 170 shown in FIGS. 1 and 7.

FIG. 12 is a schematic representation of a locator signal message generated by some embodiments of the present invention. As is been stated above, the locator signal is generated by a mobile unit to inform the central system of the mobile unit's location. The locator signal 240 includes a header 242; a mobile unit ID 240, which enables the central system to know the identification of the mobile unit generating the locator signal; and GPS coordinates generated by the mobile unit's GPS unit 146 shown in FIGS. 1 and 7, so as to inform the central system of the mobile unit's location.

In the embodiment shown in FIG. 12, the mobile unit can also use locator signals to communicate other types of information with the central unit. For example, in the embodiment shown in FIG. 11, the locator signal 240 includes the IDs 248 of each of the display messages currently shown on the separately controllable displays of the mobile unit. This information is transmitted to the central system so it can verify that the display messages, that it has instructed the mobile unit to show, have, in fact, been shown for their desired duration. The locator signal 240 of FIG. 12 also includes the vehicle speed 250. This speed information enables the central system to more accurately calculate the frequency at which the mobile unit should generate locator signals, so as to best enable the central system to determine when a mobile unit crosses into a new geographic zone. The speed information can also be used to determine the nature of the content to be displayed. For example, when a vehicle is moving, fixed or slow moving content can be displayed. When the vehicle is stopped, dynamic content including full motion video can be shown.

The messages 252 and 254 shown in FIG. 11 are only sent to the central system when the mobile unit has a need to do so. The information 252 informs the central system that the mobile unit does not have the contents of a selected display message that is to be shown, as would occur if step 210 of FIG. 9 were performed. The locator signal will include the information 254 if the user enters a new desired destination for the mobile unit through the destination input 150 shown in FIGS. 1 and 7. This is a feature which would most commonly be used in embodiments of the invention in which the mobile units are taxis or other vehicles hired to take people to selected destinations.

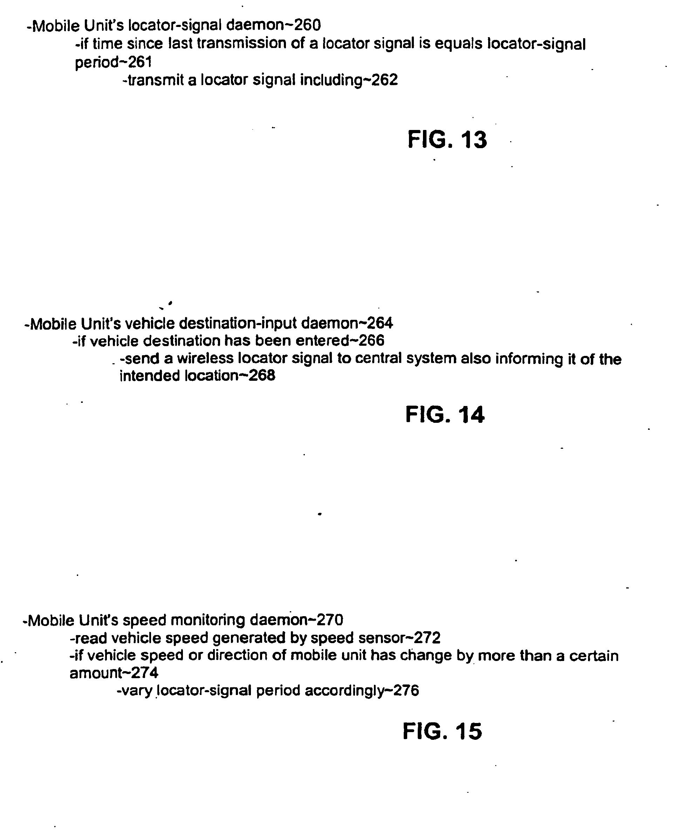

FIGS. 13 through 15 illustrate daemons used by the mobile unit's controller to help perform various tasks. In other embodiments of the invention other programming techniques besides the use of daemons can be used to accomplish their function, including, for example, interrupts, multiple threads, separate hardware to respond to individual events, and many other known techniques.

FIG. 13 describes the locator-signal daemon 260. This demon tests to see if the time since the last transmission of a locator signal by the mobile unit equals the locator-signal period. If so, it causes step 262 to transmit a locator signal 240 of the type described above with regard to FIG. 12. Among other things this enables the central system to identify the location of the mobile unit.

FIG. 14 illustrates the mobile unit's vehicle-destination input demon 264. This demon tests to see if the user has input a new desired destination for the mobile unit's vehicle in the destination input 150 shown in FIGS. 1 and 7. If so, it causes step 268 to send a locator signal to the central system including an intended destination field 254 of the type shown in FIG. 12. This information as to the intended destination of the vehicle helps the central system determine what message the mobile unit should cache, and can also be used to help the mobile unit determine the locator-signal period to be used by the mobile unit.

FIG. 15 illustrates the mobile unit's speed-monitoring daemon 270. This daemon includes a step 272 that reads the vehicle speed as generated by the speed sensor 148 shown in FIGS. 1 and 7. Step 274 tests to see if the vehicle's speed or direction has changed by more than a certain amount, and, if so, causes step 276 to vary the locator-signal period accordingly. For example, if the vehicle slows down, the locator-signal period can be increased in proportion to the decrease in speed. If the vehicle's speed increases, the locator-signal period will be increased accordingly. Such changes in the locator-signal period are made because the frequency with which the mobile unit needs to inform the central system of its location, in order to enable the central system to accurately determine when the mobile system makes a transition from one zone to another, varies as a function of the mobile unit's closeness to such a zone boundary and on its direction and velocity.

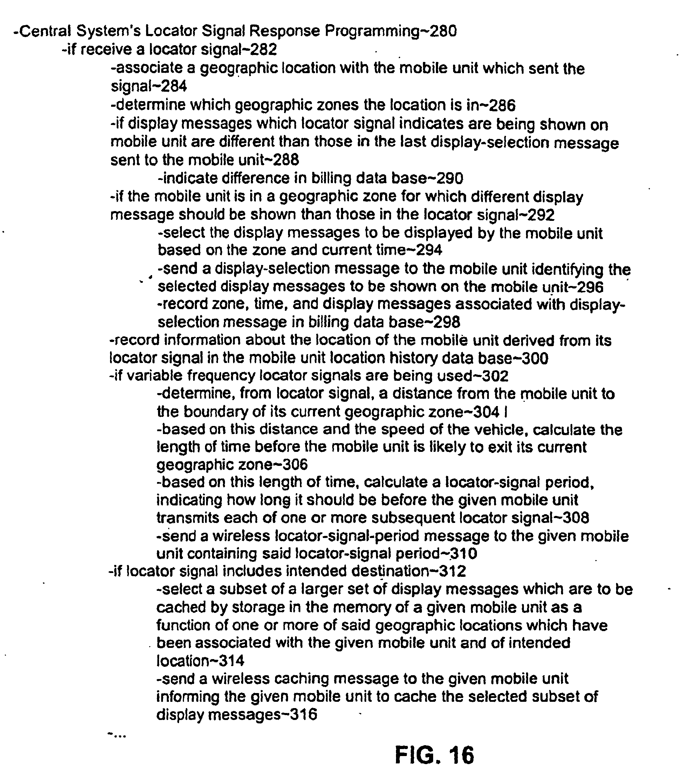

FIG. 16 illustrates the part 280 of the central system's programming 110, shown in FIGS. 1 and 7, which is dedicated to responding to locator signals from mobile units.

This programming includes a step 282 that causes steps 284 through 316 to be performed if a locator signal is received from a mobile unit. Step 284 associated a geographic location with the mobile unit that sent the locator signal. In embodiments of the invention in which the locator signal 240 is of the type shown in FIG. 12, the locator signal includes both the mobile unit ID 244 and GPS coordinates 246. In that case, step 284 merely associates in its memory the GPS coordinates 246 with the mobile unit's ID 244 contained in the locator signal. In some embodiments of the invention, however, the locator signal itself does not actually encode the coordinates of the mobile unit, but instead merely includes the mobile unit ID. In such embodiments, the location of the mobile unit is determined by the wireless system 134, such as by detecting the relative signal strength with which the locator signal is received by various receivers in the wireless system, by determining the relative delay with which the locator signal is received by various receivers in the wireless system, or by any of other methods by which the location of a radio signal can be determined which is either currently, or hereafter known.

Once the central system has associated a geographic location with the mobile unit that sent the locator signal that has been received, step 286 determines in which geographic zone the location associated with the mobile unit occurs. The geographic zone's defined by the zone definitions 112 shown in FIGS. 1 and 7 can be of varying size. In most embodiments, however, the zones defined by the zone definitions 112 will be larger than the resolution of the location associated with mobile units in step 284.

Next step 288 tests to see if the display messages which the field 248 of the locator signal indicates are being shown on its associated mobile unit are different than those identified by the last displays-selection message sent to the mobile unit. If so, step 290 indicates this difference in the billing database, so that advertisers will not be billed for the display of advertisements which were ordered by a display-selection message, but which were not in fact shown.

The next step 292 tests to see if the mobile unit is in a geographic zone for which different display messages should be shown than those indicated by the field 248 contained in the locator signal that has been received. If so, steps 294 through 298 are performed. Step 294 selects the display messages to be displayed by the mobile unit based on the current zone in which the mobile unit is located and the current time, by reference to the schedule 114 described above with regard to FIG. 2. Step 296 sends a display selection message to the mobile unit through the wireless system 134, identifying the selected display messages that are to be shown by the mobile unit. Then, step 298 records the zone, time, and display messages associated with its display-selection message in the billing database 126 shown in FIGS. 1 and 7.

After steps 292 through 298 have been performed, step 300 records information about the location of the mobile unit derived from the current locator signal in the mobile unit's location history 128, shown in FIGS. 1 and 7. As stated above, this information is used to help determine the current speed of the mobile unit, as well as its particular travel patterns, so the central system can help the mobile unit to more intelligently cache messages associated with geographic zones through which it is likely to travel.

Next, step 302 causes steps 304 through 310 to be performed if the central system is using the variable frequency locator signals.

Not all embodiments of the invention need to use variable frequency locator signals. The use of such variable frequency locator signals, however, enables the system to achieve a higher level of accuracy at determining when a mobile unit crosses into a zone for which different display messages should be shown, using a given level of locator signal communication traffic. It does this by causing individual mobile units to vary the frequency with which they generate locator signals as a function of their closeness to geographic zone boundaries, their speed, and their direction. In such a variable frequency system, when a mobile unit is approaching a zone boundary the frequency at which it transmits locator signals is increased. When the mobile units stop moving or travel at a very slow speed, and are not close to a zone boundary, the frequency at which it transmits locator signals is greatly reduced. The net effect is to greatly reduce the amount of locator signal traffic that is required to achieve a given degree of accuracy with regard to determining when mobile units cross-zone boundaries.

If such a variable frequency locator signal system is being used, step 304 shown in FIG. 16 determines, from the locator signal, a distance from the mobile unit to the boundary of its current geographic zone. In some embodiments, this distance will be the closest distance from the mobile unit to a boundary of a geographic zone. In other embodiments, this distance will be the closest distance from the mobile unit to the boundary of the geographic zone in the direction in which the given mobile unit is traveling. Next, step 306 calculates the length of time before the mobile unit is likely to reach the boundary of its current geographic zone, given the distance determined in step 304 and the speed of the vehicle. Next, step 308 calculates a locator signal period based on the length of time determined in step. Finally, step 310 sends a wireless locator-signal-period message to the given mobile unit containing the locator-signal. As is described above with regard to FIG. 9, this will cause steps 220 and 222 of FIG. 9 to set that locator-signal period 170 shown in FIGS. 1 and 7. If the central system is sending a display-selection message to the given mobile unit at approximately the same time that it desires to send a locator-signal-period value to the mobile unit, it can include the locator-signal period in the display-selection message, as is indicated by the field 234 in FIGS. 10 and 11.

If the locator signal that has been received by the central system includes an intended destination designation 254 of the type shown in FIG. 12, step 312 will cause steps 314 and 316 to be performed. Step 314 selects a subset of display messages that are appropriate for a mobile unit to cache given its current location and the intended location identified by the field 254 shown in FIG. 12. Then step 316 sends a wireless message to the mobile unit informing it to cache the selected subset of display messages. In some embodiments of the invention, the caching message sent by step 316 will actually include the content of the display messages that are to be cached within it. In other embodiments of the invention, the caching message will identify messages that are to be received and cashed from another communication channel, such as from one of the broadcast data streams 186 shown in FIG. 8, which can be broadcast to the mobile units, such as by the UHF transmitter 176 shown in FIG. 7.

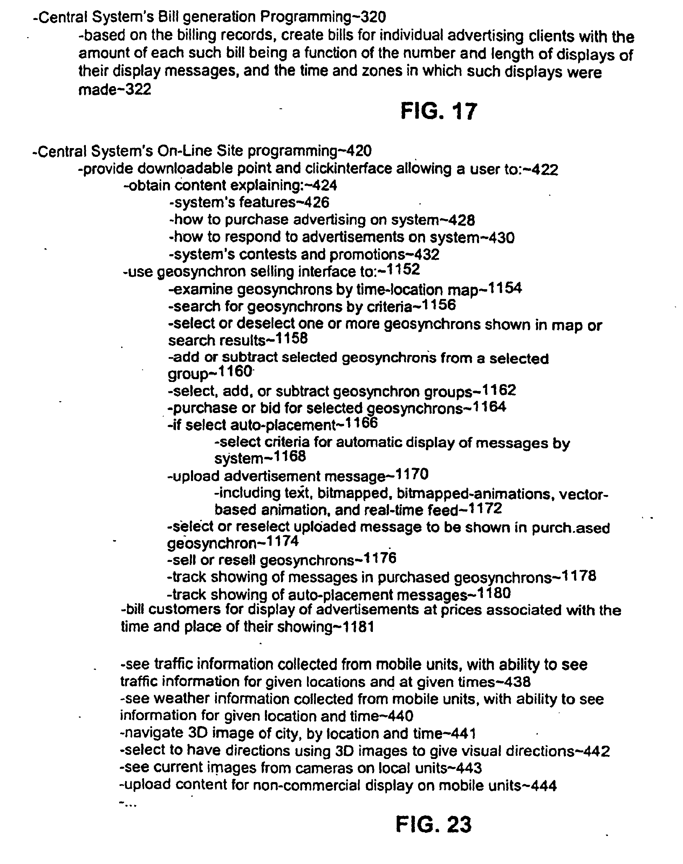

FIG. 17 illustrates bill generation programming 320 that can be executed by the central system. This includes programming 322 which causes the central system to generate billing records for individual advertising clients which indicate the amount of each such bill as a function of the number and length of displays of those advertiser's messages which have been shown on the system's mobile units. In many embodiments of the invention the amount billed to individual advertisers is not only a function of the number of displays which have been made of their messages, but also as a function of the location and time at which such messages have been shown.

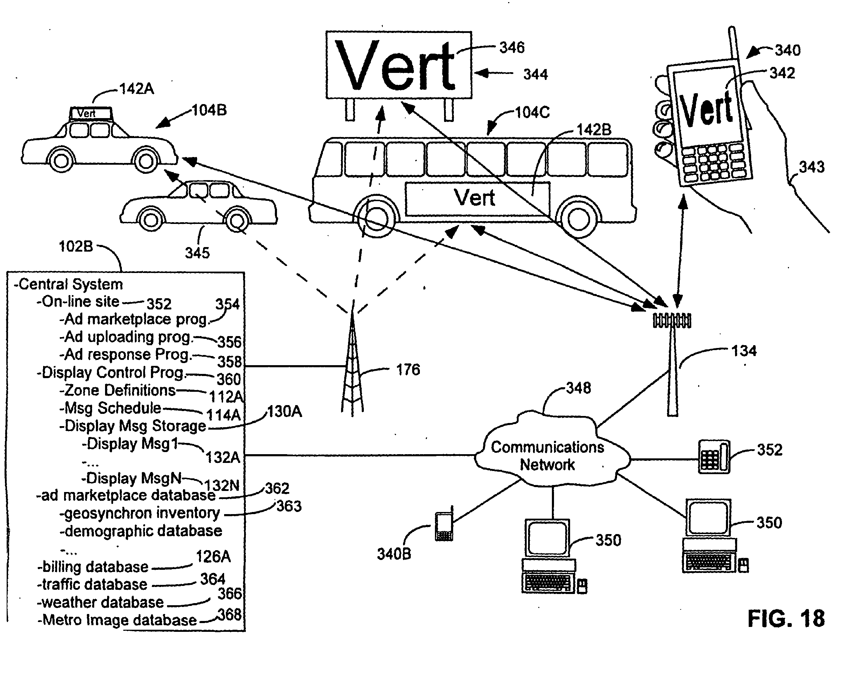

FIG. 18 illustrates another embodiment of the invention. In this embodiment, the central system 102B controls the display of messages upon more than just mobile display units, such as the cab mobile unit 104B and the bus mobile unit 104C, shown in FIG. 18. It also controls the display of messages upon one or more fixed display units, such as the fixed display 344 shown in FIG. 18, and upon one or more wireless portable computing devices, such as the personal digital assistant (PDA) 340 shown in FIG. 18.

The central system 102B is connected through a computer network to a wireless transmission system 134, indicated by an image of a cellular antenna tower shown in FIG. 18. Through this wireless system the central system can communicate with the various display units and portable computing devices shown in FIG. 18. As stated above with regard to FIGS. 1 and 7, the wireless system 134 used by the central systems of various embodiments of the invention can be either a separate transmitter and/or receiver dedicated to the use of the central system or a wireless system operated by a third-party wireless data communications provider, such as a cellular phone and data network. In the embodiment of the invention indicated in FIG. 18 the wireless system 134 is of this latter type, although in other embodiments it need not be.

In many embodiments of the invention, shown in FIG. 18, the central system also has the capability to communicate with at least some of its display units through a UHF transmitter 176 similar to that described above with regard to FIG. 7.

The computer network 348 shown in FIG. 18 is intended to represent a generalized communication network, which can include telephone, wireless, and data communications, including in many embodiments a network of computer networks, such as the Internet. The central system 102B is connected to the network 348 not only for the purpose of communicating with its display units through the wireless system 134, but also for the purpose of communicating with other types of devices, such as one or more external computer systems 350; one or more other types of computer devices, such as the PDA 340B; and/or one or more telephones 352. The central system 102B uses its connections with such devices to enable people to purchase, and control the content of, messages displayed by the system; to interact with and respond to the system's messages and display units; and to enable users to interact with various forms of information stored in the central system.

The central system 102B of FIG. 18 includes an online advertising e-commerce site 352. In many embodiments of the invention this will be a World Wide Web site. This advertising e-commerce site includes advertising marketplace-programming 354 to enable users to purchase the right to display advertising on the systems various display's during one or more geosynchrons. A Geosynchron is a given combination of one or more times, locations, and other condition. The central system 102B also includes advertising uploading programming 356 to enable users to upload over the communication network 348 advertisements which they desire to be shown during given geosynchrons which they have purchased the rights to. The online site 352 also includes advertising response programming 358 which enables people who have seen messages displayed on the system's various display screens to interact with such display's.

The central system also includes display control programming 360, which is somewhat similar to the display control programming 110 and 110A described above with regard to FIGS. 1, 7, and 16. It also includes zone (or geon) definitions 112A, a message schedule 114A, and display message storage 130A that correspond to the zone definitions 112, the schedule 114, and the display message storage 130 shown above in FIGS. 1 and 7. A geon is a location used to define a geosynchron.

The central system 102B further includes an advertisement marketplace database 362, which stores information, including a demographic database 1150 necessary for the operation of the central system's advertising marketplace site; a billing database 126, which is similar to the billing records 126 described above with regard to FIGS. 1 and 7; a traffic database 346, which stores information about motor vehicle traffic flows derived from locator signals and other information generated by the system's mobile and fixed units; a weather database 336 derived from weather information obtained from the system's mobile and fixed units; and an image database 368 containing images of one or more metropolitan areas in which the central system 102B is located, which is derived from cameras located on various of the system's mobile and fixed units.

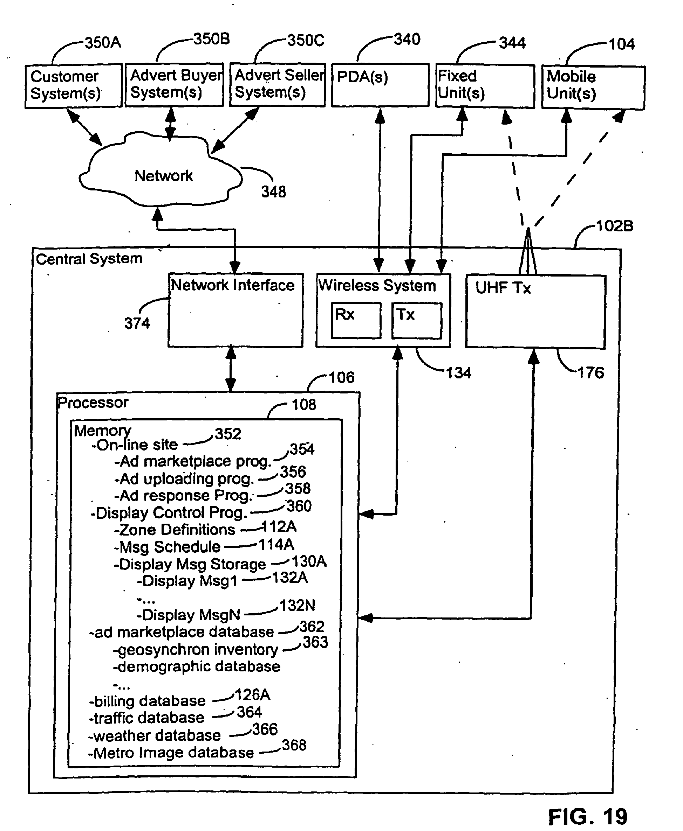

FIG. 19 is an alternate representation of the system shown in FIG. 18 that has a form more similar to that of the diagram in FIGS. 1 and 7. In FIG. 19 some of the computer systems 350 are labeled as consumer computers 350A, some as advertising buyer computers 350B, and others as advertising seller computers 350C. A single computer can function as any one of these types of computers, depending on its use. An advertising buying computer 350B refers to a system that is being used by an advertiser, or someone acting on behalf of an advertiser, to obtain information about the placement of advertising or to place advertisements through the system. An advertising seller computer 350C refers to a system that is being used by those who wish to sell, through the central system, advertising availabilities on displays that they control. They could be the operators of the central system, or third parties who control fixed, mobile, or portable displays which can be controlled by the system. A consumer system 350A refers to a computer that interacts with the central system for purposes other than those relating to the selling or buying of advertisements. The only other element shown in FIG. 19 which is not explicitly shown in FIG. 18 is the network interface 374, which represents any type of network interface capable of interfacing with one or more computers of the central system to the network 348.

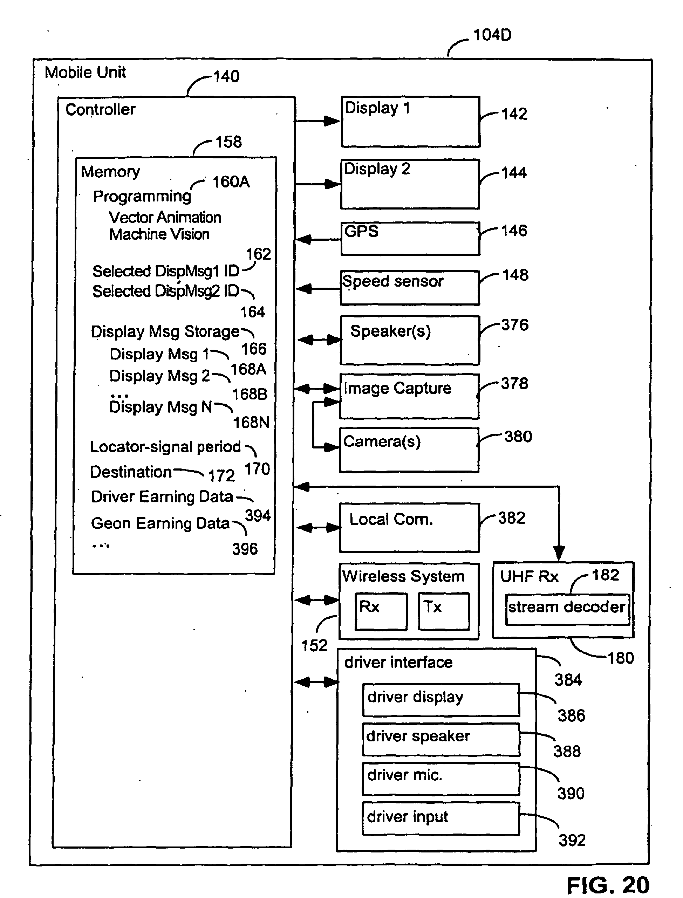

FIGS. 20, 21, and 22 represent various types of display units that can be used with the system shown in FIGS. 18 and 19.

FIG. 20 represents a mobile display unit 104D that is similar to the mobile display unit shown in FIG. 7, except that FIG. 20 illustrates more of the possible features that the invention' s mobile units can contain.

The mobile unit 104D includes multiple external displays 142 and 144; a global positioning system 146; a speed sensor 148; a wireless system 152; a UHF receiver 180; a controller 140; and a memory 158, all of which are similar to the similarly numbered elements shown in FIGS. 7.

In addition, the mobile unit 104D of FIG. 20 includes one or more speakers 376 that can be used to generate sound to accompany messages shown on its displays 142 and/or 144, when appropriate. For example, it might be appropriate to generate sound in conjunction with the display of messages when the mobile unit is stopped or traveling at a low speed. In such cases, it would be relatively easy for people near the mobile unit to hear its audio messages even if they are played at a relatively low, and thus non-offensive, volume. At other times the speakers 376 can be used to generate much louder audio messages, enabling the mobile unit to operate as a sound truck that can generate images as well as sound. The speakers 376 can be used to generate audio which is synchronized with a sequence of still or moving images shown on its display, or can be used to display audio messages which are not so synchronized.

The mobile unit shown in FIG. 20 also includes one or more cameras 380 and an image capture device 378 for communicating between the one or more cameras 380 and the controller computer 140. Although in some embodiments of the invention one or more of the cameras 380 can be cameras using chemically developed film, in many embodiments they will be electronic cameras, either digital still image cameras or video cameras. In many embodiments of the invention video cameras will be used, since they can capture moving images, which are often more interesting to the eye. As will be explained below in more detail, the mobile unit's camera can have many uses, including recording information about the potential audience for a mobile unit's messages at various locations and at various times; recording information about traffic at various locations and various times; recording images for real-time display on the mobile unit's display screens; and recording images of the one or more metropolitan areas in which the mobile unit travels for the purpose of creating a visual database of such one or more metropolitan areas.

The mobile unit shown in FIG. 20 further includes a local communication device 382 that is capable of communicating directly with local communication devices of the same type that are relatively close to the mobile unit. The local communication device 382 can be any type of communication device capable of performing such communication. This includes infrared communication devices, and various radio-frequency wireless communication devices, such as communication devices complying with the Bluetooth communications standard.

As will be explained in greater detail below, the purpose of the local communication device 382 is to enable people or devices in the vicinity of the mobile unit who have compatible local communication devices to directly communicate and interact with the mobile unit.

The mobile unit of FIG. 20 also includes a driver interface 384 that includes a driver display 386, one or more driver speakers 388, a driver microphone 390, and a driver input 392.

The driver display 386 is a display located where the driver of the mobile unit can easily read it, such as on the dashboard of the mobile unit's vehicle. Although the driver display can have many different forms, in many embodiments it will be a bitmap display, such as an LED, a liquid crystal, a gas plasma, a CRT, or an electronic ink display. The driver display can be used for many different purposes.

In embodiments of the invention in which a driver is paid money as a function of the amount of money earned by the messages shown on the mobile unit the driver is operating, the driver display can be used to display information informing the driver of the amount of money he is currently earning, the amount of money he has earned over a given period of time, and where to drive to earn the most money. In some such embodiments the driver display will show a map of various locations color-coded to indicate the relative earning potential associated with driving through each of them at various points of time.

In embodiments of the invention where the mobile unit is a taxicab or similar vehicle for hire, the driver display will have many uses relating to taxi cab functions.

In many embodiments, the driver display provides the driver with information about the best route to get between two locations. In some embodiments, the display can be used to give directions, such as by displaying the driver's location on a map and indicating on the driver's display where the driver is to take turns. In embodiments of the invention in which images captured by the mobile unit's cameras are compiled into a virtual image of the city, the driver display can be used to show the driver pictures of important locations along a route or the appearance of a desired destination.

The one or more driver speakers 388 are provided to enable the computer 140 to provide audio output to a driver. For example, the driver speaker can be used to inform the driver when he or she is approaching locations in a route at which he or she should make turns. In taxicab embodiments, the driver speakers can be used to enable the user to receive instructions or information from the dispatcher (whether it be a human or a computerized system) without having to take his or her eyes off the road. The driver speaker can be used for any other purpose for which speakers are used to interface to drivers of automobiles, including providing news, traffic, and weather information.

The driver input 392 includes one or more input devices such as a keyboard, pointing device, or touch sensitive screen on the driver display, which enable the user to input information into the computer 140. This can be used to enable the user to enter a desired destination to which the mobile vehicle is to travel. If the mobile unit is a taxicab, the driver input can be used to enable the user to enter a desired destination as well as the status of the cab, including whether or not the cab is off-duty, has just taken a fare, or is driving to pick up a fare. The driver input 392 is also used to enable a driver to perform any other interactions that he or she may so desire to do with the computer 140.

The driver microphone 390 is used to enable a user to talk to the computer 140 and/or to the system as a whole. The computer 140 can record audio of speech spoken by the driver as well as audio occurring in the cab. In many embodiments either the controller 140 or the central system will have speech recognition capability to enable spoken input from the driver to be converted into text or commands.

In the embodiment of FIG. 20, the memory 158 of the mobile unit's controller 140 includes programming 160 which contains many of the aspects of the programming 160 shown in FIGS. 1 and 7 discussed above. This memory also stores selected message IDs 162 and 164, display messages 168A through 168N, a locator-signal period 170, and a destination 172, as described above with regard to FIGS. 1 and 7. In addition, it stores driver earning data 394 which enables the driver display 386 to provide a driver with information of his earnings based on the amount of money his or her mobile unit has made displaying messages at various geosynchrons, that is, at various combinations of time and place and other possible conditions which the system uses to control the display of messages on its display units. The memory 158 can also include a geosynchron earning database 396, which contains information that can be displayed on the driver display 386 to help a driver decided the earning potential associated with driving through different locations at different times under different conditions.

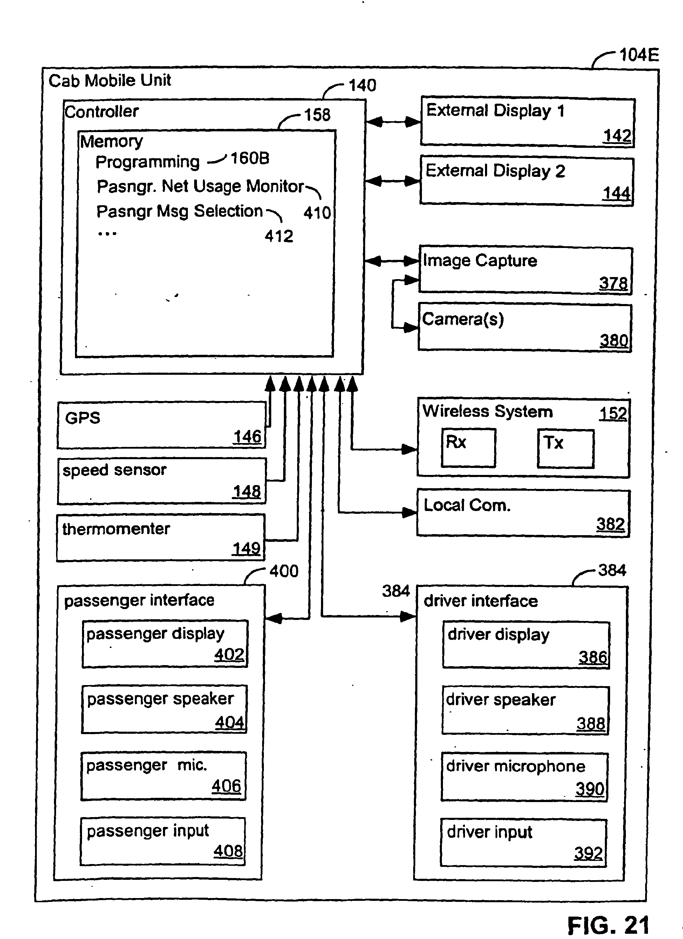

FIG. 21 illustrates a mobile unit 104E that is similar to the mobile unit 104D of FIG. 20, except that, in addition, it includes a passenger interface 400 including: a passenger display 402, a passenger speaker 404, a passenger microphone 406, and a passenger input 408. The mobile unit of FIG. 21, like that of FIG. 20, can be used as a taxicab or other vehicle used for hire. Its passenger interface 400 would be particularly useful in such vehicles, since it would provide information and entertainment to such passengers. The mobile unit of FIG. 21 also includes a thermometer 149 which can be used to sense the temperature of the air outside the mobile unit. The mobile unit shown in FIG. 21 does not include the UHF receiver 180 shown in FIG. 20, although in other embodiments it could.

The passenger interface 400 can be used for different purposes. It can be used to enable passengers to surf the Internet, and or send and receive e-mail. It can also be used to provide the passenger with paid audio and visual programming, or with audio and visual programming paid for by advertising. In many embodiments providing the passenger with paid audio and video programming, the mobile unit's controller 140 includes programming 410 which keeps track of the passengers usage of the passenger interface and charges him accordingly. The amount of this charge can be added to the taxi fare calculated for the passengers' trip. The amount of the taxi fare and any charges for the use of the passenger interface can be displayed on the driver interface display 386 as well as on the passengers' display 402.

In some embodiments of the mobile unit, shown in FIG. 21, advertising messages are shown on the passenger display 402 and/or sounded on the passenger speaker 404. In such case the content of such messages can be selected by the system in response to conditions such as the location of the mobile vehicle, the destination of the passenger in the mobile vehicle, the time of day, day of the week, or date of the month, and other factors, such as information which the passenger has entered on the passenger interface 400. Such message selection can be performed by software 412 contained in the mobile unit's controller 130, or computers of the central system can select it.

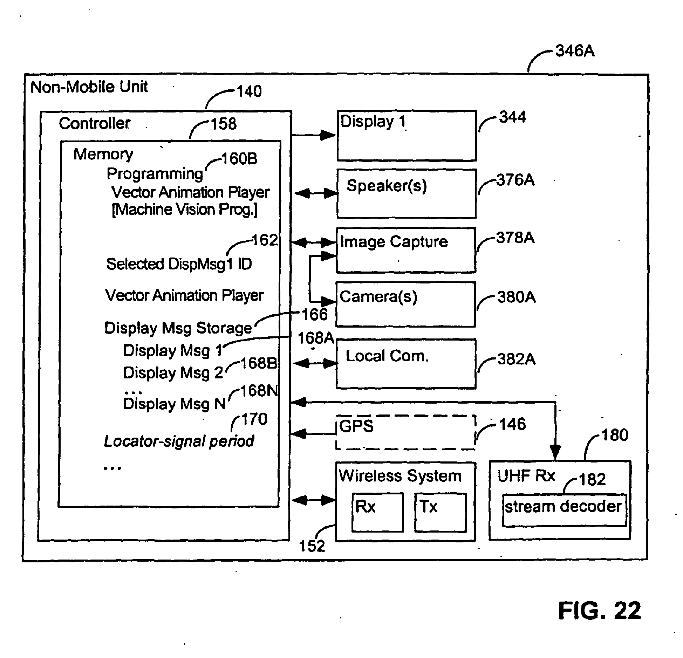

FIG. 22 illustrates components of one embodiment, 346A, of a non-mobile unit 346 of the type illustrated in FIG. 18. This embodiment of a non-mobile unit includes a single display screen 344. In other embodiments, the non-mobile unit can have two or more displays, such as, for example, a display on each of two opposite facing sides. The non-mobile unit further includes one or more speaker's 376A. These speakers can be used like the speakers 376 described above with regard to FIG. 20 to provide audio to accompany messages shown on the display 334, or audio containing separate messages from those shown on that display.

The non-mobile unit of FIG. 22 also includes one or more cameras 380A and image capture electronics 378A to enable the mobile unit to record audience, traffic, and whether information for use by the overall system. Like the cameras 380 described with regard to FIG. 20, the cameras 380A can also provide images to networked users of the central system of the camera's view at the current time; provide images which can be shown on the non-mobile unit's display 334 in real-time, if desired; and can, when combined with visual recognition software, enable the non-mobile unit to respond to the people in its view, including responding to looks, gestures, or other behaviors by such people.

The non-mobile unit further includes a local communication device 382A similar to the local communication device 382 described above with regard to FIG. 20. This device enables the non-mobile unit to interact with people and electronic systems in its locale, which contain similar local communication devices. The non-mobile unit further includes a wireless system 152 to enable it to receive messages providing it with instructions as to what messages to display as well as other instructions. In some embodiments, the non-mobile unit will include a UHF receiver 180 to enable it to receive message content and other data transmitted to display units of the overall display system by a UHF transmitter.

Many embodiments of the invention's non-mobile units will not include a global positioning system 136, since the non-mobile units normally will only have one fixed location that only has to be entered into the system once when the mobile unit is positioned at a given location. But in some embodiments, non-mobile units may actually contain positioning systems 136 because such systems are relatively inexpensive, the would automatically determine the location of a non-mobile unit, and they would automatically correct for any changes in the location of the non-mobile unit or its electronics, were they ever to be moved. In such embodiments, the non-mobile unit might actually transmit locator signals, although the frequency at which such signals were transmitted could be very low because of the fixed nature of such units.

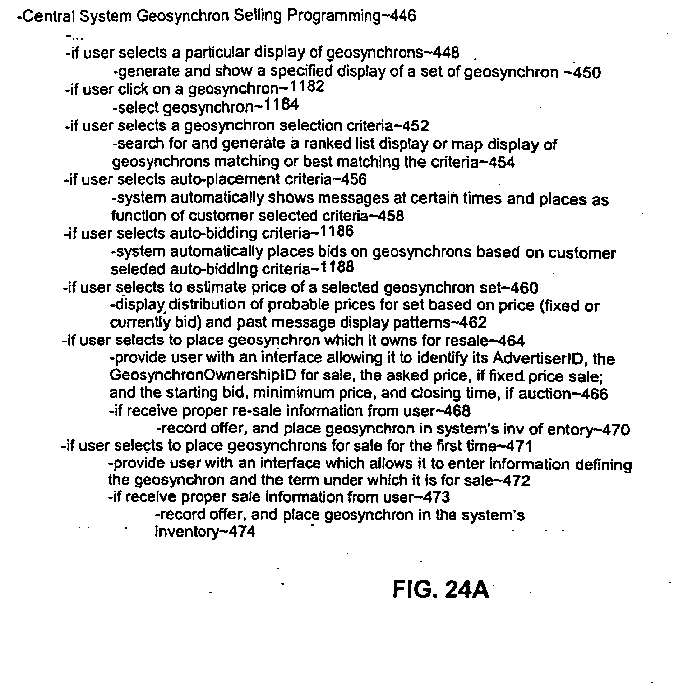

FIG. 23 is a highly simplified pseudo-code representation of the programming 420 associated with the online advertising site 352 shown in FIGS. 18 in 19. In many embodiments of the invention, the site will be a World Wide Web site, but in other embodiments it can be other types of online sites, such as, for example, ones connected to a private virtual network operating over an . As shown in FIG. 23, this site includes programming 422 that allows a user to cause a plurality of different things to happen. In a web-based embodiments of this aspect of the invention, the e-commerce site downloads web pages which provide an interface allowing a user on a client computer with a browser to select many of the user options provided by the e-commerce site by of pointing and clicking with a computer pointing device, such as a mouse.

As indicated by numerals 424 through 432, this interface enables a user to obtain information about the system's features, how to purchase advertising on the system, how to respond to advertisements on the system, and how to participate in contests and promotions which the system uses to encourage viewing of and interaction with its display units.

As indicated by numerals 1152, the interface provides a geosynchron-selling interface to customers. This interface allows a customer to perform the following functions on-line.

It allows users to examine geosynchrons on a user navigable time-location map, as indicated by numeral 1154. It allows them to search for geosynchrons by various user-selected criteria, as indicated by number 1156. It allows the selection or deselection of one or more geosynchrons shown in the time-location map or in the results of searches by criteria, as indicated by numeral 1158. It allows users to add or subtract selected geosynchrons from a selected group, and to select, add, or subtract geosynchron groups, as is indicated by numerals 1160 and 1162.

The selling interface allows users to purchase or bid for selected geosynchrons, as indicated by numeral 1164. It allows users to select auto-placement of messages, which if selected causes the system to automatically display messages according to user selected criteria, as indicated by numeral 1164 and 1166. The interface also allows users to upload advertisement message, including text, bitmapped, bitmapped-animations, vector-based animation, and real-time feed messages, as indicated by numerals 1170 and 1172. If the user selects real-time feed upload, the central system will download the received message content for showing on one or more of the systems displays in real time.

The sales interface allows a user to select or reselect which uploaded message are to be shown in a set of one or more geosynchrons a user has purchased, as indicated by number 1174. It also allows users to sell or resell geosynchrons, as indicated by numeral 1176. This enables third parties who have display units that interface with the system to sell the right to display messages through this e-commerce site. It also enables those who have purchased geosynchrons to turn around and to try to sell them on the system, if for some reason they decide not to show messages on such purchased geosynchrons. The uses would have the right to set or very prices for such resales, creating a third party market for geosynchron display rights.

The interface also allows users to track the showing of messages in purchased geosynchrons, as indicated in numeral 1178, and it allows them to track the showing of auto-placement messages, as indicated in numeral 1180. This informs them of when and where given messages have been shown, the cost associated with such display, and in some embodiments information about the actual audience for the display, such as one or more images taken from the display at the time a message was shown indicated the area in which people could see the display or information which has been derived from such images by used of machine vision.

As indicated by number 1181 the on-line e-commerce site contains programming for automatically billing customers as a result of the time and place at which their messages are shown.

As indicated by numerals 436, the interface of FIG. 23 allows users to see a record of the messages that have been shown in a selected location at a selected time, and to read, obtain more information about, or otherwise interact with a selected one of such ads. This feature would often be used by the members of the audience who remember having seen a given message in which they are interested displayed at approximately a given location at approximately a given time. This interface will allow them to search the database for advertisements based on the time and location at which they were shown, so as to allow users to find a given message they are interested in and to allow them to interact with such an advertisement, when found, such as by clicking through to the web site of its advertiser, by obtaining more information on the product or service described in the message, or receiving a coupon associated with the message.

As indicated by the numeral 438, the central system's online site also allows users to see traffic information collected from mobile units, with the ability to see that information for given location and given periods of time. For example, if a person wanted to know how heavy the traffic was on a given roadway at 4 PM on average workday evenings, he or she would be able to go to this database and obtain this information for many of locations served by display units associated with the online site. In many embodiments of the systems the traffic database will also incorporate information from sources other than the display system's own display units, such as government sources reporting on current traffic conditions, or local newspaper, radio, and/or TV organizations that have traffic information. The data in this traffic database can include not only image records of traffic at various locations and times, including the current time, but also statistical information which has been manually or automatically derived from such images, as well as information derived from locator signals generated by mobile units, and information derived from speed sensors on such mobile units.

As indicated by the text associated with numeral 440, the interface 422 allows users to see weather information collected from display units, including the ability to see information for a given location at a given time. This enables a user to see what the weather is like at various locations within one or more metropolitan areas served by the system. For example, if there is a big downpour in the region where a given user is located, the system can be used to determine how widespread the downpour is and to determine its motion, so as a better calculate how long it will be before the downpour will end. As with the traffic information database, in many embodiments the system's weather database will include data from sources other than the messaging system's fixed and mobile display units, such as information from the national weather service and from local media organizations.

As indicated by the numeral 441, the central system's online site includes an interface enabling users to navigate a visual image of the city, both by location and time. Although this visual database may include only 2-D images in some embodiments, in many others this visual database will be comprised of 3-D images derived from 2-D images taken by cameras located both on mobile and fixed units. As is well known in the art of the image processing, it is possible to drive 3-D images of a scene from multiple 2-D images of it. This process can be used to create a virtual city composed of the many images taken by the system's mobile and fixed display units. Furthermore, the system can include images of the city at various times of day, various times a year, or it various times over a period of years to make the virtual city seem even more alive.

Preferably users are able to navigate to given locations in this virtual 3-D city or metropolitan region in multiple different ways, including: identifying specific addresses; by driving through its by means of virtual travel; by selecting one or more locations from an aerial or satellite view and then selecting to see that locale at a street level view; and/or by selecting various advertisers or other prominent locations within the metropolitan area and selecting to see how they appear within the virtual city. Organizations, such as stores, public transportation authorities, and museums can cooperate with the central system's Internet site by provide 3-D images of their own interiors, which could be linked into the visual database so that they could be navigated in as part of the 3-D space represented by the visual representation.

This 3-D virtual city can have many uses. To name just a few: In some embodiments it will be used to provide directions over the central system's Internet site, as indicated by the numeral 442. In some embodiments, it will be used to help users find the locations of advertiser's businesses. In some embodiments, its software content will be sold or licensed by the central system to other businesses, such as web site. In some embodiments, it will be used as part of video games. And, in some embodiments, it will be used by tourist bureaus for the one or more metropolitan area metropolitan area that it displays.

As indicated by the numeral 443 in FIG. 23, the central system's Internet site enables users to select to see current images from the one or more cameras on the central system's display units. In many embodiments, this interface enables users to see a representation of the current location of the system's individual local and fixed units and select from which one or more of them they wish to see current images. This feature will be helpful for people who want to see what the current weather is like in a given location, as well as for those who want to see how many people are out and about in any given part of town, and what those people look like.

As indicated by the numeral 444 in FIG. 23, the central system's site preferably also includes an interface enabling users to upload content for noncommercial displays on the central system's various displays. Such an interface can help increase audience participation and interest in the display system, as well as provide interesting non-commercial content for its displays. For example, the system might allow people to upload pictures of their babies as part of a cutest-baby contest, or upload jokes as part of a funniest joke-of-the-day contest.

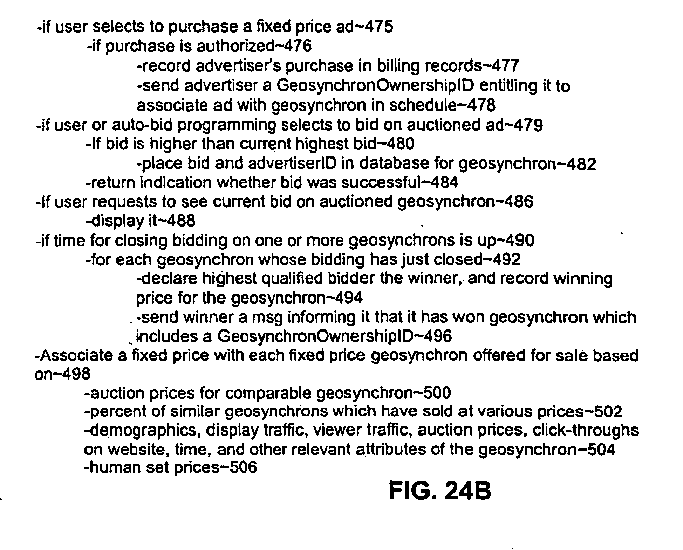

FIGS. 24A and 24B provides a more detailed illustration of one embodiment of the geosynchron-selling interface 1152 described above with regard to FIG. 23. It describes some of the programming 446 which can be used by the part of the central system's Internet site that enables advertisers, or those working on behalf of advertisers, to buy advertising rights on the display system. This programming includes steps 448 through 506.

If the user selects a particular geosynchron display through the use of a geosynchron display interface, steps 448 and 450 will cause the central system's computer to generate and show to this user the particular display of a selected set of geosynchrons.

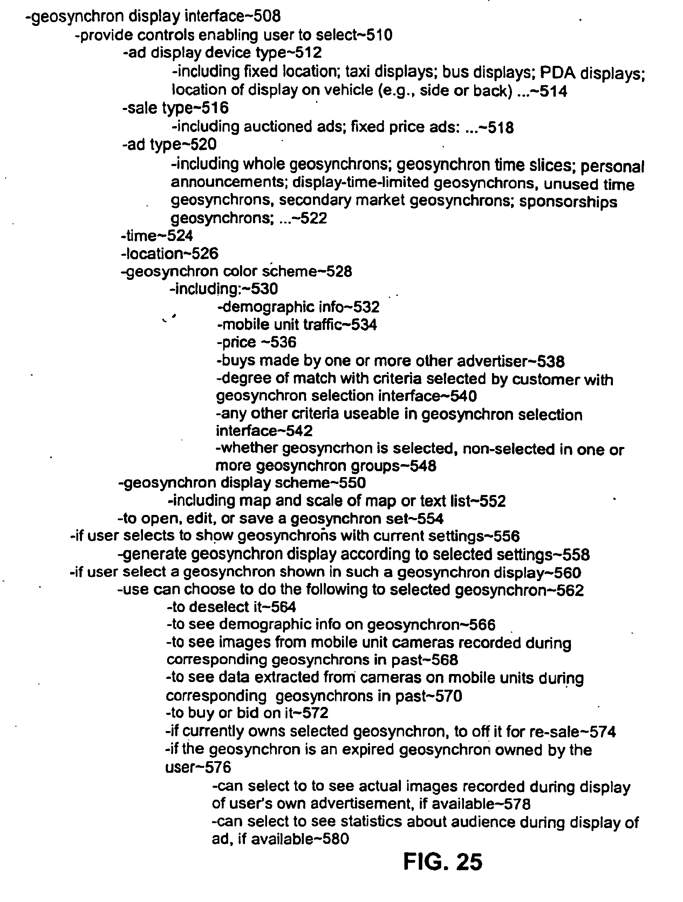

FIG. 25 illustrates the geosynchron display interface 508 that enables users to select such a geosynchron display. As indicated by the numeral 510, it enables a user to select a plurality of different options.

As is indicated by the numeral 512 and 514, it enables a user to select to see available geosynchrons according to their associated type of display, such as fixed displays; mobile displays, including taxi or bus displays; or portable computer devices, such as PDA's.

As indicated by the numerals 516 and 518, the interface enables a user to select the type of geosynchrons to be displayed based on how they are sold, such as by auction or by fixed price.

As indicated by numerals 520 and 522, the geosynchron display interface enables users to select the display of geosynchrons based on the particular class of rights associated with each displayed geosynchron, including: whether the geosynchrons are to be uninterrupted for a given length of time, or composed of one or more time slices occurring over a given length of time; whether the geosynchrons relate to a personal announcement, as opposed to a commercial announcement; whether the geosynchrons are display time-limited, which means that the user is only willing to pay for up to a given dollar amount for displays in the time period and location identified by the geosynchrons; whether the geosynchrons relate to the right to use display time left over after other geosynchrons having higher priority, such as display-time-limited geosynchrons, have had their right to be displayed; whether the geosynchrons are being placed for sale in a secondary market, that is, are being sold by an advertiser rather than by the operators of the central system itself; and whether the geosynchrons relate to the sponsorship of other non-commercial program content, such as a news, time, weather, traffic, contests, or other types of non-commercial programming which can be sponsored on the display system.

As indicated by the numeral 524, the geosynchron display interface enables a user to select the time of the geosynchrons that he or she wants to be displayed. In many embodiments, this includes one or more slider controls that allow a user to rapidly define different time periods or time durations.

As indicated by numeral 526, the interface also lets users specify one or more locations of the geosynchrons he or she wants displayed. This can be done by navigating on a map and changing the scale of view. It can also be done by enabling a user to enter, if desired, a distance from such a given location, class of locations, given event, or class of events.

As indicated by numerals 528 through 548, the geosynchron display interface enables a user to specify a color scheme to be used in a geosynchron display. As indicated by numeral 532, it enables a user to specify that the displayed geosynchrons be colored according to their respective values of one or more different types of demographic information, such as, for example, household income, population, traffic, or other types of available demographic information. As indicated by numeral 534, the user can select to color displayed geosynchrons by the amount of mobile unit traffic and or display time that has historically occurred in equivalent geosynchrons in the past.

As is indicated by numeral 536, users are given the option of having geosynchrons colored by their price. When displaying fixed price geosynchrons, this would mean having them colored by their fixed purchase price. When displaying geosynchrons to be purchased at auction, the price color would be that associated with the current bid price. In most embodiments, if the user has selected to view geosynchrons over a time period that spans multiple geosynchrons for a given location, the price display, or other colored value displayed, will normally be an average over the selected time range. Alternatively, a user could use a time slider of the type described above with regard to numeral 524 to see how the color value associated with a geosynchron at a given location varies over time.

As indicated by numeral 538, a user can select to see geosynchrons colored by the identity of the parties that have purchased them. Preferably, the user is given the ability to color geosynchrons by the class of advertiser that has purchased them. Preferably, this would relate not only to geosynchrons which have been purchased but not yet displayed, but also to geosynchrons displayed in the past, including geosynchrons occurring at a specific time in the past, as well as those occurring in the past during some repeated time, such as for example, evening rush hour between four and 6 PM. In some embodiments, if the user has been authorized by one or more other parties to see which geosynchrons they have purchased, the user is allowed to see geosynchrons colored by those other advertiser's identity. This feature will be particularly useful where different parties are engaged in a cooperative advertising campaign. It will allow one advertiser to see the locations and times at which the other advertisers with whom it is cooperating have been displaying or are planning to display advertisements so that it can place advertisements that will complement such purchases.

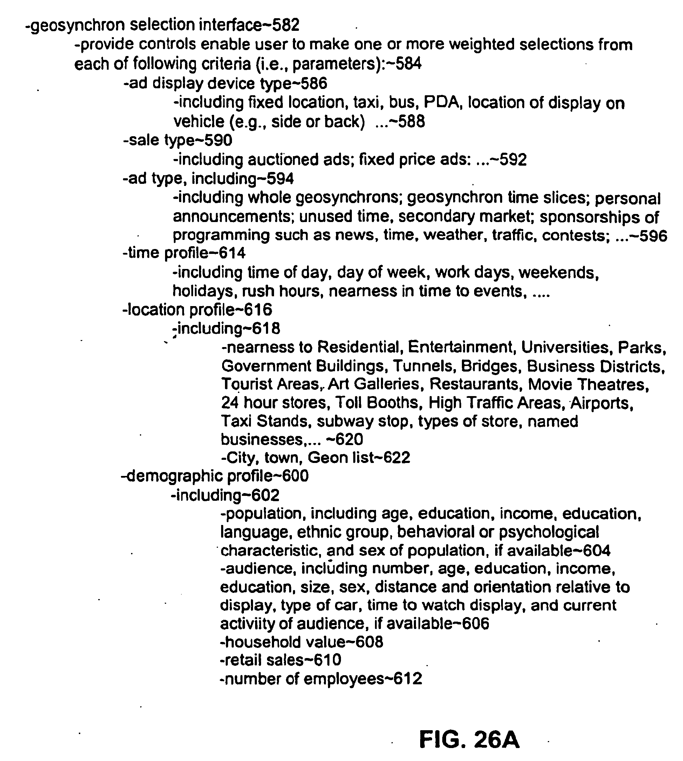

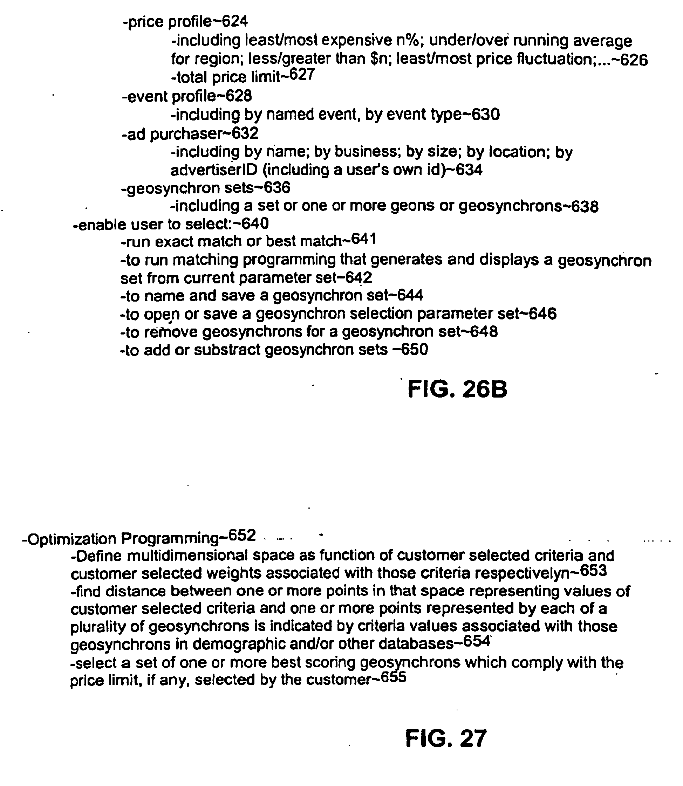

As is shown by line 540 of FIG. 25, the geosynchron display interface enables a user to see geosynchrons colored by a ranking which have been associated by those geosynchrons by the geosynchron selection interface which is described below with regard to FIGS. 26A and 26B. As indicated by numeral 542, the geosynchron display interface also allows users to select to color geosynchrons by any other criteria that can be used for the selection of geosynchrons in the geosynchron selection interface of FIGS. 26A and 26B.

As is indicated by the numeral 548, the geosynchron display interface enables users to select to see geosynchrons colored by whether or not they are selected as belonging to one or more geosynchron sets which have been defined by the user. This, for example, enables a user to see on a map the location of various sets of geosynchrons he or she might have selected by various means.

As indicated by the numerals 550 and 552, the geosynchron display interface enables users to select various display schemes including schemes which display geosynchrons on a map of one or more different selected scales, and those that display them in one or more different list formats.

As indicated by numeral 554, the geosynchron display interface enables users to open, edit, and save a geosynchron set. As is described below, when a user displays a geosynchron set, he or she was able to select one or more individual geosynchrons within it using known graphical user interface selection techniques. The user can select to save a set of one or more geosynchrons so selected at a given time as such a geosynchron set. Once such a set has been saved it can later be opened. A geosynchron set can be edited, such as, for example, by changing its time to a different day, week, or month; by adding or deleting geosynchrons; or by adding or subtracting geosynchron sets. This is handy, because it enables an advertiser who has taken the trouble to define a geosynchron set for a given period of time to later rapidly edit that set definition for reuse at a later time.

As indicated by numerals 556 and 558, if the user selects to show geosynchrons with current settings determined by the controls indicated by numerals 512 through 554 in FIG. 25, then the system will generate a geosynchron display according to those selected settings. This corresponds to steps 448 and 450 described above with regard FIG. 24A. In many embodiments, the system will automatically generate and redisplay such geosynchrons every time the user changes in individual setting. But in situations in which the generation of a new display would be time-consuming, it is desirable that the user be given the option to delay the generation of a geosynchron display until the user has had a chance to make all the settings desired for that display.

If a user selects one or more geosynchrons in a geosynchron display generated by the system in step 558, step 556 enables a user to select to do any of the following things to the selected geosynchrons: to deselect it, as indicated by numeral 564; to see demographic information associated with the selected one or more geosynchrons, as indicated by numeral 566; to see images from the mobile units recorded during corresponding geosynchrons in the past, as indicated by numeral 568; to see statistical, geographic, 3-D, or other data extracted from cameras on mobile units during corresponding geosynchrons in the past, as indicated by numeral 570; to buy or bid on the selected geosynchrons, as indicated by numeral 572; to re-offer the selected one or more geosynchrons for sale if the user currently owns those geosynchrons, as indicated by numeral 574; and, if the selected geosynchrons are expired, meaning they have been used, and if they are owned by the current user, the current user can select to see actual images recording during the display of messages during that geosynchron, if available, and to select to see statistics about the audience during that display, if available, as is indicated by numerals 576 through 580.

In some embodiments of the invention, step 578 enables a user to see recorded images made during the display of their messages shown in synchronism with a playback of their display messages to enable them to see which portions of their advertisements drew what responses from their audience.

Returning to FIG. 24A, the central system's selling programming 486 includes steps 1182 and 1184 which allow a user to select a geosynchron from the location-time map or from lists produced in response to display selections or search results.

The selling programming also includes steps 452 and 454, which respond to a users selection of a set of geosynchron selection criteria by searching for and then generating a ranked list of geosynchrons that match or best match that set of criteria.

FIGS. 26A and 26B provides a description of the geosynchron selection interface 582, which describes its steps in greater detail.

As indicated by the numeral 584 in FIG. 26A, the geosynchron selection interface provides a plurality of controls which enable a user to make one or more weighted value selections for each of the criteria, or parameter types, indicated by the numerals 586 through 638. In many embodiments, the weighting system allows a user to make a given criteria mandatory, that is to require that all geosynchrons selected will have to meet that criteria.

As indicated by the numerals 586, 590, and 594, respectively, the geosynchron selection interface enables a user to select desired values for an ad device type, a sales type, and an ad type, corresponding to similarly named types described above with regard to FIG. 25.

The time profile control 614 shown in the geosynchron selection interface enables a user to select one or more separately weighted time periods for the set of geosynchrons to be selected. Preferably the interface allows users to select time periods by date and time, as well as by day of the week, day of the month, holidays, and other time classifications which are relevant to the placement of outdoor advertisements, such as work days, weekends, holidays, rush hour, nearness in time to a given event or one of a given class of events. In one relatively simple embodiment of the invention, a separate geosynchron is defined for each corresponding geographic zone, or "Geon", at every successive half-hour interval. In other embodiments, more complex time schemes are used, including those that display different messages in different time slices over a given time period.

The location profile control 616 allows the user to define location criteria in multiple different ways. As indicated in 620, a user can define location criteria by various types of locations including: residential areas; entertainment venues; educational venues, such as universities; parks; government buildings; selected tunnels and bridges; business districts; tourist areas; art galleries; restaurants; movie theaters; 24-hour stores; toll booths; high traffic areas; airports; taxi stands; subway stops; various specified types of stores; various named businesses: and any other location types which have been made selectable by the interface. The user can also select locations by other methods, such as by the town or city day occur in, Geon's associated with a predefined geosynchron set, or in a set of listed Geon's. Other methods of specifying geosynchrons can include by nearness to a given location or class of locations, such as nearness to schools, or nearness to airports, or nearness to stores bellowing to a given merchant.

As indicated by the numerals 600 through 612, the geosynchron selection interface enables a user to select a plurality of different types of demographic profile criteria to be used for the selection of a geosynchron set.

As indicated by 604, this includes the population of residents of the area of the display, including the age, education, income, education, language, ethnic group, behavioral or psychological characteristics, and sex of the population, if available, for the selected geosynchrons.

As indicated by 606, the selectable demographic criterion includes parameter values for the audience likely to see messages during the selected geosynchrons. This is different than resident demographics since it is based on estimates of not who lives in a location, but instead the characteristics of people who are actually likely to be able to see the display. This demographic information would reflect the characteristics of people who come into or travel through a given area at a given time. These characteristics include total number of people, and/or averages or numbers of different types of people classified by demographic categories such as age, education, size, income, education, behavioral and psychological characteristics, the type of vehicle they are driving, and their sex, if that information is available. The audience information can also include demographic information which reflect not only who are the people likely to see a display at a given time or place but what they are doing at that time (such as walking, driving, sitting, etc., and their likely relationship to the display, such as their closeness, their speed, their speed relative to the display, their orientation relative to the display, and the amount of time they are likely to have to see the display.

As indicated by numerals 608 through 612, the demographic criteria also include such information is the average household value for the geosynchrons, the average retail sales of the geosynchrons, and the number of employees in the geosynchrons.

As indicated by the numerals 624 through 627 of FIG. 26B the geosynchron selection interface enables a user to define criteria relating to the price of desired geosynchrons. This includes criteria specifying that the selected geosynchrons be in a specified least or most expensive percentile of the geosynchron pool. The user can also select that the selected geosynchrons be over or under the running average price for the region; that the geosynchrons' price be less than or greater than a specified dollar amount and that the geosynchrons have a small or high price fluctuation. As indicated by numeral 627 the user can also specify a total price limit for a group of geosynchrons that are to be searched for. This allows the system to seek to best match a user selected set of criteria, while keeping the total price at or below a given limit. Other price parameters could also be used, and the selection of price parameters provided could vary depending upon whether or not the user has selected to show geosynchrons purchased at a fixed price or through an auction.

As indicated by numerals 628 and 630, the geosynchron selection interface enables a user to specify criteria for the selection of geosynchrons relating to closeness in time or space relative to named events, such as sporting events, entertainment events, or other events likely to be relevant to advertisers, either by event type or by event name.

As indicated by numerals 632 and 634, the geosynchron selection interface enables a user to specify criteria for desired geosynchrons relating to the advertisers that have bought equivalent geosynchrons in the past, or who currently own unexpired geosynchrons. Preferably, the interface enables the user to identify such advertisers by name, by business type, by business-size, by location, or by individual advertiser ID. As stated above, in most embodiments of the invention, a user will not be able to find the identification of geosynchrons which have been purchased by individual advertisers unless those advertisers have granted permission for such information to be displayed about them.

As indicated by numerals 636 and 638, a user is also able to use set logic to define a set of geosynchrons to be selected based on the definitions of previously defined geosynchron sets, including the addition and/or subtraction of such sets, as well as the editing of sets, such as to change a predefined set to relate to a later time.

As indicated by the numerals 640 through 650, the geosynchron selection interface enables a user to select whether the search is to return only geosynchrons which exactly match the customer selected criteria or those which best match it, as indicated by number 641. It allows them to select to run the actual search programming that finds matching or best matching geosynchrons and generates and displays the resulting geosynchron set, as indicated by numeral 642. As indicated by numeral 644, the interface enables a user to name and save a geosynchron set or group generated by the steps 642; to open or save a previously defined set of geosynchron selection parameters previously defined by use of the controls 586 through 638, as indicated by numeral 646; to remove geosynchrons from a geosynchron selection set, as indicated by 648; and to add, subtract, or perform other set logic operations upon geosynchron sets, as indicated by 650.

FIG. 27 is an abstract illustration of one possible embodiment of the optimization programming 652 that can be used by the step 642 to seek a set best match geosynchrons. It includes a step 653 which define a multidimensional space as function of the customer selected criteria used in the search and weights associated with those criteria respectively, which either have been selected by the customer or by default. Next in step 654 it finds the distance between one or more points in that space representing values of customer selected criteria and one or more points represented by each of a plurality of geosynchrons, is indicated by criteria values associated with those geosynchrons, such as by a demographic and/or other databases. Then in step 655, it select a set of one or more best scoring geosynchrons that comply with the price limit, if any, selected by the customer.

Returning now to FIG. 24A, steps 456 and 458 of the central system's advertising selling programming enables a user to select a set of auto placement criteria, which will cause the system to automatically show a given set of one or more customer specified messages at times and locations selected by the system according to such criteria.

Returning now to FIG. 24A, as indicated by the steps 460 and 462, if a user selects to estimate the price of a selected set of geosynchrons, those steps will display the distribution of probable prices for that set of geosynchrons based on the price for message displays in its individual geosynchrons, either at the fixed price or current bid price, and based on past message display-time patterns for those geosynchrons.

This step enables a user to estimate the likely cost for a geosynchron based on the amount of display time it is likely to have, based on past history. As described above, in the embodiment being described, users are charged based on the amount of display time for their messages within a given geosynchron. In this embodiment, users are able to place in upper limit on the amount of display time they're willing to pay for within a given geosynchron. It should be understood that many other schemes can be used to pay for displays in a geosynchron, given the fact that the amount of time spent in that geosynchron is usually not known in advance and can very widely.

If the user selects to place a geosynchron that it owns for sale, step 464 of FIG. 24A will cause steps 466 through 470 to be performed. Step 466 provides the user with an interface allowing it to identify its advertiser ID; a geosynchron ownership ID of the geosynchron being sold; and an asked price for the geosynchron if fixed-price selling is to be used, or the starting bid, minimum price, and closing time, if an auction is to be used for the sale. If the user provides proper information in step 466, step 468 will cause step 470 to record the offer and place the geosynchron in the system's geosynchron database for sale along with other geosynchrons currently available for sale within the system.

If an advertiser seller uses the system to select to place one or more geosynchrons for sale for the first time, step 471 causes steps 472 through 474 to be performed. Step 472 provides the user with an interface that allows the user to enter information defining the geosynchron and the terms under which it is for sale. Such information could include the ad display device type, the sales type, the add type, the time, and location (all as defined with regard to FIG. 25) associated with the geosynchron, as well as an identification of the party owning or controlling the geosynchron's display devices and the price or other terms under which the geosynchrons is available for sale.

Step 473 tests to see if the system has received proper information from the user to define the geosynchrons and how it is to be sold, and, if so, it causes step 474 to record the offer for sale of the central system's ad marketplace database, and it places the geosynchron in the central system's geosynchrons inventory 363, shown in FIG. 19.

As was stated above with regard to FIG. 19, an advertiser seller can either be a person working for the central system who is offering geosynchrons on displays owned or controlled by the central system for sale, or can be a third party offering for sale geosynchrons on displays which the third party owns or controls. In fact, in some embodiments of the invention, the entity which owns the central system may not, in fact, own any of the displays used with the system and may merely act as intermediary for selling, buying, and/or controlling the selection of messages to be displayed in geosynchrons involving such third party displays as a function of time, location, or other conditions.

If a user selects to purchase a fixed-price geosynchron, then step 475 causes steps 476 through 478 to be performed. Step 476 tests to see if the purchase is authorized, and, if so, it causes steps 477 and 478 to be performed. Step 477 records the advertising purchase in the central system's billing records, and step 478 sends the advertiser a geosynchron ownership ID entitling it to identify one or more desired messages to be shown in the geosynchrons in the central system's message schedule.

If a user, or the purchase optimization program described above, selects to bid in an auction for a geosynchron, then step 479 will cause steps 480 through 484 to be performed. Step 480 tests to see if the bid being made is higher than the current highest bid for the geosynchron, and, if so, it records the requested bid as the currently highest bid and it records the requester's advertiser ID in association with the geosynchron in the central system's marketplace database. Then, step 484 returns an indication to the user indicating whether or not the bid was successful.

If the user requests to see the current bid on a geosynchron being auctioned, step 486 will cause step 482 to display information on that current bid price.

If the time for closing bidding on one or more geosynchrons is up, step 490 will cause steps 492 through 496 to be performed. Step 492 causes a loop comprised of steps 494 and 496 to be performed for each geosynchron whose bidding has just closed. In this loop step 494 declares the current highest qualified bidder to be the winner for the geosynchron in its records, recording the winning price as the price of the geosynchron, and step 496 sends a message to that winner informing it that it owns the geosynchron. This message includes a geosynchron Ownership ID which enables the winner to exercise rights as owner of the geosynchron, including the right to determine what one or more messages are to be displayed during it and the right to resell the geosynchron, as indicated above with regards to steps 472 and 476.

Numerals 498 through 506 of FIG. 24B illustrate steps that are performed by the advertisement selling programming of the central system to associate fixed-prices with fixed-price geosynchrons being offered for sale by the system. As indicated by these numerals, the programming can automatically fix the price of geosynchrons based on a plurality of factors including: auction prices for comparable geosynchrons, as indicated by 500; the percent of similar geosynchrons which it sold at various prices, as indicated by 502; the demographics, display traffic, viewer traffic, auction prices, click through on the system's websites for ads shown in similar geosynchrons, time, and other relevant attributes associated with the geosynchron , as indicated by the numeral 504; and by human set prices which have been entered into the system by its operators.

One of the ways in which the system can automatically set appropriate prices for geosynchrons, given the possibly greatly varying interest for different types of geosynchrons at different times, is to mix auctioned and fixed-price selling of geosynchrons for similar times, or for times which are time sliced with the fixed-price geosynchrons to be sold. The system could use changes in auction prices for similar geosynchrons to indicate that a change in fixed-price should be made for such geosynchrons.

Another way to automatically set prices for geosynchrons is to have the system automatically vary the prize for similar geosynchrons over time to automatically develop a demand curve for such geosynchrons, and based upon such a demand curve to automatically pick prices which are likely to maximize profitability.

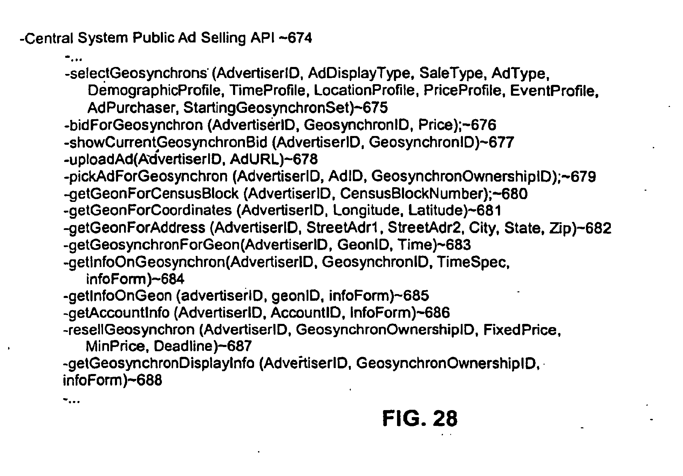

As indicated in FIG. 28, in some embodiments of the invention, the central system's advertisement selling site will have a public, or open, API, or application programmer interface, to enable third party software designed to run on clients of the site to automatically interface with its programming. There are many known methods for enabling programming running on a client computer to interact with programming running on a server computer. Any of these known methods, or any such method developed in the future, can be used to give the central systems advertising selling site an API with which third party programming running on client computers can interact.

FIG. 28 represents some of the functionality of one such API 674. It is to be understood that in other embodiments of the invention different sets of API functions could be provided.

The API of FIG. 28 includes multiple functions designed to interface to aspects of the central system's geosynchron selling programming described above with regard to FIGS. 24 through 27. For example, the select Geosynchrons function 675, shown in FIG. 28, is designed to enable third parties client software to interface with the functionality provided to users through the geosynchron selection interface 582, described above with regard to FIG. twenty-six. Although not shown in FIG. 28, the API preferably also includes the capability for interfacing with the functionality of the geosynchron display interface 508, shown in FIG. 25, as well as the purchase optimization interface 652, shown in FIG. 27.

The bidForGeosynchron function 676 of FIG. 28 enables a user to place a bid for a given geosynchron. The showCurrent GeosynchronBid function 677 enables a third party program to find the current value of the highest bid for a given geosynchron. The uploadAd function 678 enables an authorized user to upload an advertisement message for storage in the display message storage area 130 of the central system, which is shown in FIG. 18. The pickAdForGeosynchron function 679 enables an advertiser, who has a geosynchron ownership ID indicating he has the right to determine the one or more messages to be displayed during a given geosynchron, to associate an ad ID, which has been returned by a previous performance of an uploadAd function 678, with that geosynchron. The getGeonForCensusBlock function 680, the getGeonForCoordinates function 631, and the getGeonForAddress function 682, respectively, return the identification of a Geon corresponding to a given census block, to a given set of coordinates, and to a given address. As stated above, a geon corresponds to one or more geosynchron's location, independently of time or other conditions. The getGeosynchronForGeon function 683 returns the geosynchronID of the geosynchron associated with a given geon at a given time. The getInfoOnGeosynchron function 684 returns a set of information on a given geosynchron defined by the info form field.

The getInfoOnGeon function 685 is equivalent to the function 684 except that it relates to a Geon rather than to a geosynchron. The getAccountInfo function 686 enables an advertiser to get information about their current account in one or more form specified by the info form field. The resellGeosynchron function 687 enables a user to place a geosynchron for which it has the geosynchron ownership ID up for resale within the system. The getGeosynchronDisplayInfo function 688 enables an authorized advertiser who had ownership of a geosynchrons at the time it was displayed to obtain information about that display. This information can include, among other items: the length of time the advertiser's messages were shown during the geosynchrons; which of one or more possible messages were actually shown; the time durations during which each was shown; video shot by the display unit's camera during the display; and/or statistics which have been automatically extracted from such video by visual recognition techniques.

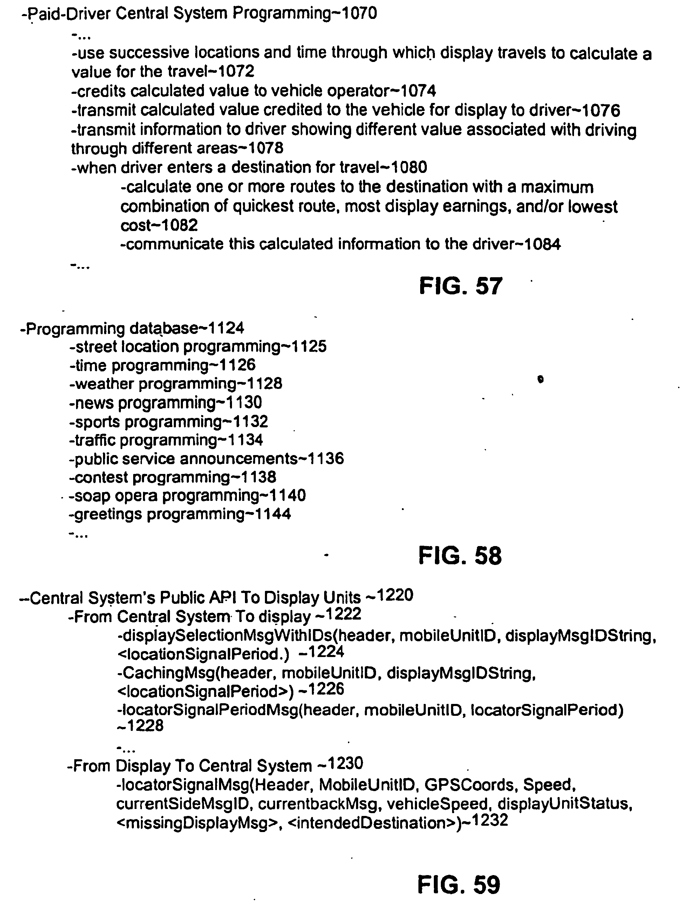

As indicated in FIG. 59, in some embodiments of the invention, the central system has a public, or open, API, or application programmer interface, to enable third party software designed to run on display units that operate under the control of the central system.

FIG. 59 is a highly schematic partial representation of one such possible interface 1220 is shown. It includes two classes of messages, the messages 1222 which define communication from the central system to a display unit, and the messages 1230 which define communication from the display unit to the central system.

The message definition 1124 defines a message from the central system for telling a display unit the Ids of message to display, similar to the display-selection message shown in Fig. 10. The message definition 1226 is a caching message for instructing a mobile unit to cache the content for a specified set of messages. The locator signal period message 1128, defines a message in which the central system tells a display unit how often it is send locator signals of the type described above in FIG. 12.

Among the definition of messages to be sent by a display unit to the central system are locator signal messages of the type shown in FIG. 12.

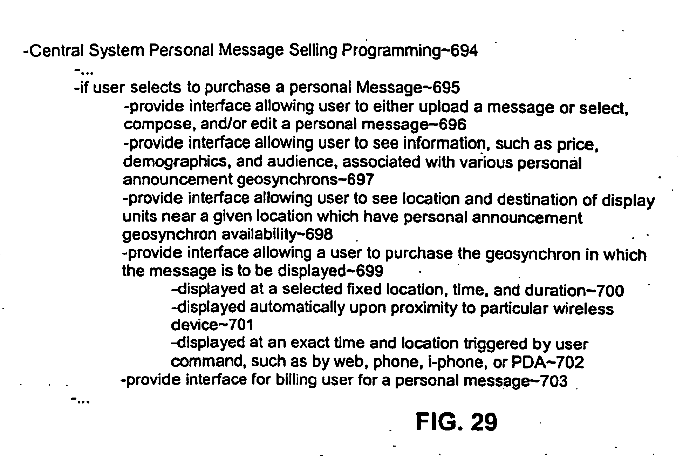

FIG. 29 displays programming 694 which the central system's Internet site can use with regard to the selling of personal messages, such as birthday, anniversary, graduation, wedding, death, and or birth announcements or messages or pronouncements of love. In some embodiments of the invention, there need not be a distinction between such personal messages and advertisements associated with business concerns. But in some embodiments it might be desirable to have special software dedicated to special types of ads, including such personal messages, classified ads, or the traditional personal ads associated with those looking for people to date or marry.

In the personal message selling programming of FIG. 29, if a person selects to purchase a personal message, step 695 causes steps 696 through 703 to be performed.

Step 696 provides an interface to the user enabling them to either upload the message desired to be displayed, or to select to compose and/or edit a personal message. If the user selects to compose and/or edit a personal message, then an interface will be provided which enables the person to produce a greeting in a manner somewhat similar to that provided by current Internet greeting card sites such as that operated by BlueMountain.com. In many embodiments the interface will either include software to decrease the likelihood of messages that contain obscenities or which would otherwise be offensive, or provides mechanisms for one or more humans to review such messages before they are shown, so as to ensure that they are not offensive.

Step 697 provides an interface to allow users to see information associated with various personal announcement geosynchrons, such as the price of such geosynchrons, their demographics, and their audience. This interface can include many of the features provided for the purchase of commercial advertisements described above.

Step 698 provides an interface allowing users to see the location and destination, if available, of mobile and fixed display units near one or more given locations which have personal announcement geosynchron availabilities. This is useful for people who want to show a be personal message near a fixed display at any point in the future, and is likely to be useful to people who want to so personal message via mobile displays in the near future.

Step 699 provides an interface allowing a user to select the one or more geosynchrons in which his or her personal message is to be displayed.

As indicated by numeral 700, the user can select to have the message displayed at a selected fixed time, location, and duration. If the location of the geosynchrons is that of a fixed display, the message will be shown on that display at exactly the selected time and duration. If the geosynchron is one for mobile units, the message will be displayed by one or more of mobile units, which travels through that geosynchrons location during the selected time duration.

As indicated by numeral 701, the user can select that the message be displayed automatically upon proximity to a given wireless device, provided the wireless device is a variety that can be used to automatically indicate its own location to the system. For example, this would enable a person to send a personal message to a person who normally carries such a portable device with them when the person is in close proximity to one or more display units. In some embodiments, the system can be programmed by the person ordering the display to automatically have a message sent to the recipient of the message, such as to his or her wireless phone or PDA, to notify him or her to look at the message, and/or to provide other information in association with the message, such as voice information synchronized with the visual display.

As indicated by the numeral 702, the user can select to have the personal message triggered at an exact time and location indicated by a user command, such as by a message sent from the Internet, from a phone, or from a wireless device such as an i-phone or a PDA. For example, this will enable a person who is eating in an outside restaurant with a date to indicate the time at which he wishes a fixed or mobile unit in a desirable location to display his personal message to his date.

As indicated by numeral 703, the programming of FIG. 29 also provides an interface for billing the user for a personal message, such as by charging the cost of the message to a credit card.

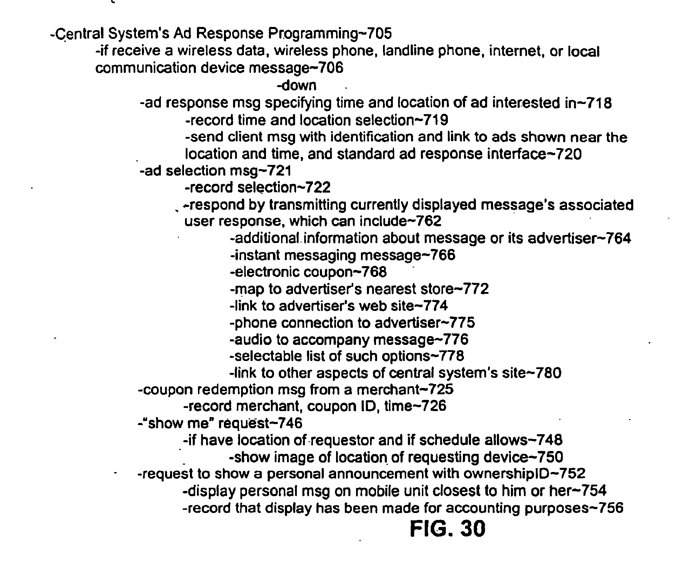

FIG. 30 represents programming 705 in the central system to enable it to respond to people who have seen messages shown on its display units. As indicated by step 706, in the steps below the software includes programming to enable it to respond differently to different types of ad response messages. Such ad response messages can be sent by multiple types of devices, including, for example, wireless data devices, wireless telephones, landline phones, Internet devices, or local communication devices of the type discussed above with regard to the local communication devices 382, shown in FIGS. 20 through 22.

If the central system receives an ad response message specifying the time and location of an advertisement the person sending it is interested in, step 718 will cause steps 719 and 720 to be performed. Step 719 records the time and location of the message being responded to. Then, step 720 sends the client device which sent the message the identification of, and an interface enabling the user to select one of, a plurality of messages shown near the location and time indicated, as well as a standard ad response interface. The standard ad response interface enables user to send another ad response message specifying a different time and place associated with the display message he or she is interested in responding to, as well as links to other aspects of the central system's network site. If there has only been one message shown near the time and place specified in the ad response message received, the system will respond accordingly.

In many embodiments of the invention, the time and location associated with such an ad response'can be determined automatically without the need for the individual sending it to enter such information. For example, if users of certain types of wireless devices transmit messages to the central system when they see the display of a message in which they are interested, the central system will automatically be able to determine the approximate time of the advertisement in which they are interested by the time of the receipt of the message and the approximate location of the message by the automatic location sensing features which are provided by certain wireless networks. This makes it easy for users to respond to any display message they see merely by contacting one address, whether it be a phone number, a web address, or other network address.

If a message received from a client system is an ad selection message generated when a user selects one of the pluralities of display messages sent back to him by step 720, step 721 causes steps 722 through 724 to be performed. Step 722 records the user's selection of the desired message. This information is used not only for developing statistics about user responses, but also for the purpose of billing merchants for advertisements that have been responded to. Then step 762 responds to the selection of given message by transmitting to the client device that has sent the ad selection message the selected message's associated user response.

As indicated by numerals 764 through 780, this response can include additional information about the selected message; an instant messaging message which can create a chat box for communication between the user and the central system or the advertiser of the selected message; an electronic coupon which will entitle the user to free products or services or discounts on such products or services in association with the message; a map to the advertiser store (or to the advertiser's nearest store to the respondent's location in some cases); a direct connection or a link to the advertiser's web site; a phone connection to the advertiser; audio associated with the selected message; an interface to enable the user to select from any of the above options; and links to other aspects of the central system's Internet site.

As indicated by steps 725 and 726, if the central system receives a coupon redemption message from a merchant, information such as the identity of the merchant, the coupon ID, and the time will be recorded for bookkeeping and statistical analysis purposes. In some embodiments of the invention, merchants will be billed for the redemption of any coupons distributed by the system.

It is not necessary in all embodiments that coupon messages be reported to the central system in order for users to receive the savings associated with them. But many advertisers desire to pay for advertisements based on their effectiveness, and a user's conversion of an electronic coupon would provide an effective means for showing the effectiveness of the system's advertisements. In some embodiments of the invention the central system will actually credit money to a user's credit card account when a coupon redemption message is received from a merchant. This can be done to decrease the chance that merchants will fail to report the redeeming of coupons to their billing for coupon redemptions.

If the central system receives a "shown me" request, step 746 causes steps 748 and 750 to be performed. Step 748 tests to see if the location of the requester can be identified with sufficient accuracy, such as through the location capability which is built into some wireless systems, and, if so, whether or not the display system's message schedule allows the display of a "show me" image. If so, step 750 causes the local display unit's camera 380 or 380A, of the type shown in FIGS. 20 through 22, to take a picture of the location associated with the source of the request and to display it on one or more of its display screens.

If the system has available gesture recognition software, it can be programmed to have its cameras point toward and zoom in on individuals in the identified location who are waving at the display or making some other gesture or behavior toward the display which indicates that they are the person who has generated the "show me" request.

The purpose of this "show me" feature is to encourage people to look at and interact with the systems display units. In some embodiments of the invention, if the system knows the identity of the owner of the device sending the "show me" request, it can label the image with that name, such as by showing an image of the requesting person with text such as "Hi, John Smith".

In many embodiments of the invention, the display control programming 360, shown in FIG. 18, controls which messages are to be shown by a given mobile unit based on more than just the location and time. The other factors which can be taken into account in determining which messages should be displayed can include the identity of, the number of, and or the closeness of wireless units whose location and identity can be automatically detected by a wireless network; speed or other operating characteristics of the mobile unit upon which the display is to be made; weather conditions; the number of people in the audience; the occurrence of certain events near the location of the display, such as and accident, fire, traffic jam, sporting event, entertainment event, etc..

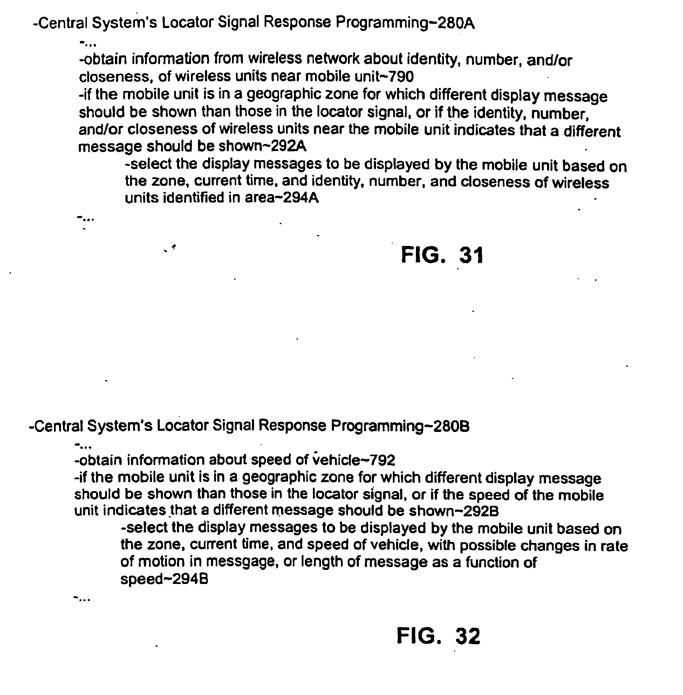

FIG. 31 illustrates a portion of the central system's locator signal response programming in one embodiment of the invention which is similar to the programming described above with regard to FIG. 16, except that it has been modified to take into account the presence of wireless units near the location of a display unit in determining which messages should be shown on that unit. All of the portions of the programming 280A are identical to the corresponding portions of the programming 280 shown in FIG. 16, except for the portions that are shown in FIG. 31. In FIG. 31 the programming includes an additional step 790, which obtains information from a wireless network about the identity, number, and/or closeness of wireless units near the location of a given mobile unit to which the central system is responding. In some embodiments of the invention, the step 790 will only be taken if the schedule currently allows for messages at the current location of the mobile unit that depend on the nearby presence of wireless devices.

Then, step 292A tests whether or not the mobile unit is in a geon, or geographic zone, for which a different display message should be shown than those which the locator signal indicates that the mobile unit is currently displaying, or if the identity, number, and or closeness of wireless units near the mobile unit indicates that a different message should be shown. If this is the case, then step 294A selects the display message to be shown by the mobile unit based on the sound, current time, and identity, number, and closeness of wireless units identified in the area. It does this by referring to a message schedule 144A of the type shown in FIG. 18. This message schedule indicates which messages are to be shown at which geon's at which time under different conditions relating to the identity, number, and or closeness of nearby wireless units.

The programming of FIG. 31 will enable a display unit to display messages that are addressed to one or more particular individuals whose wireless units are detected near it. For example, such messages could include the name of such an individual or even perhaps a picture of him or her. Also, the subject matter of messages can be altered to reflect the identity of one or more people whose wireless devices have been detected near the given display unit. Furthermore, the visual characteristics of the displayed message can be altered based on the distance of such people from the display unit. Thus, if the wireless devices detected are located far from the display a message with large images and letters could be used, whereas if they are close to the display a message containing smaller image features and text could be shown.

FIG. 32 is similar to FIG. 31 except that in it the central system's locator signal response programming 280B takes into account information about the speed of the mobile unit in step 792 and uses that information in steps 792B and 794B in selecting which display messages are to be shown on the mobile unit. In some embodiments of the invention, information about the relative difference between the speed of a given display unit, whether be fixed or mobile, and people in its potential audience could be used instead of just the speed of the display itself. For example, the unit or fixed display might alter the messages it is displaying based on the speed of traffic going by it. Such relative speed can be determined by multiple methods, such as by use of a display unit's cameras, or by determining the speed of wireless units that are traveling past the display unit inside passing vehicles.

In other embodiments of the invention which operate more like the mobile display system described in the Cohen patent, in which decisions about which messages are shown in which geographic zones at which times are made by computers on mobile units themselves, other factors such as the identity, number, and or closeness of wireless units near a mobile unit, or the speed or other operating conditions of a mobile unit can be used by such a mobile unit itself in deciding which messages should be displayed at what times. In many such embodiments of the invention, the central system would normally send down multiple messages for a given geosynchron and the mobile unit itself would decide which of these various messages were to be display at a given time and place.

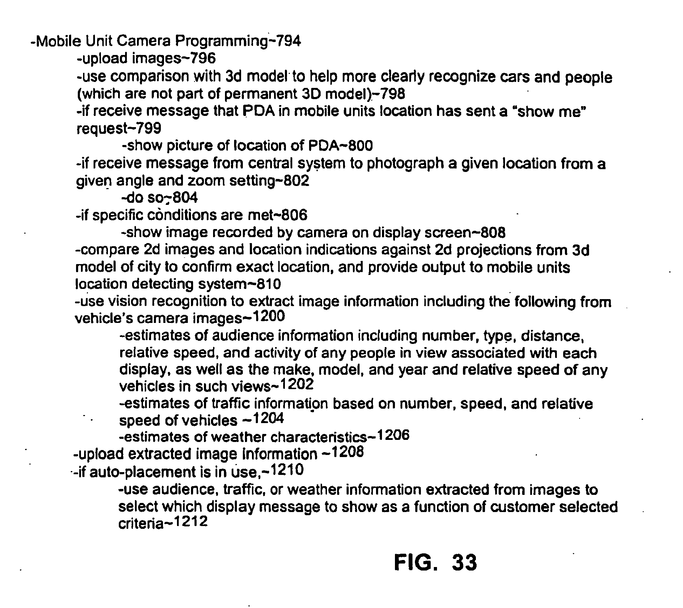

FIG. 33 illustrates some of the programming 794 which can be used by the controller of a mobile unit that contains one or more cameras 380 of the type shown in FIGS. 20 and 21.

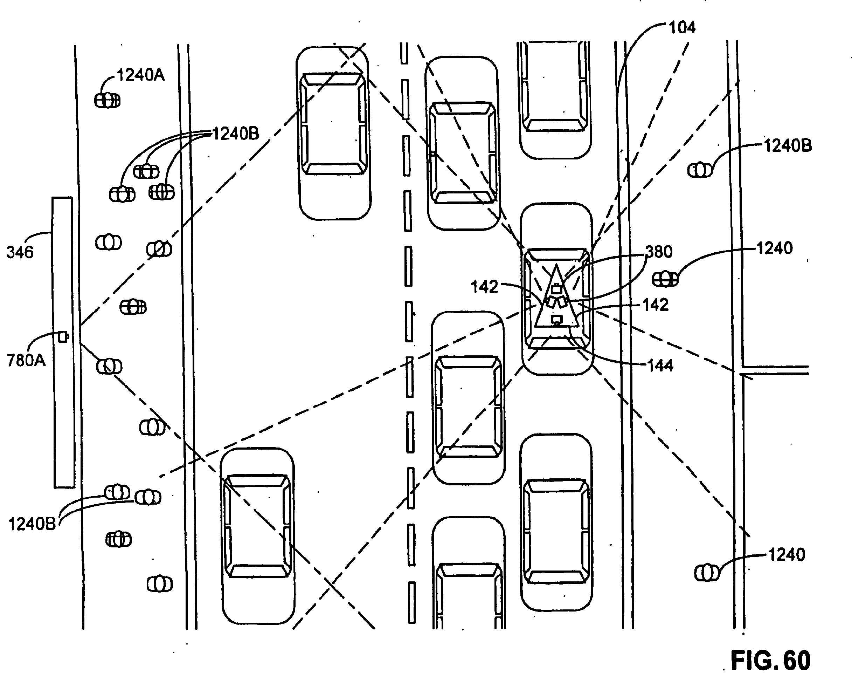

FIG. 60 shown how the cameras 380 mounted on mobile display units 104 and a camera mounted on a fixed display unit 346 can be used to derive image information. In the embodiment shown in FIG. 60 the mobile display unit has a set to box similar to that shown in FIGS. 3-6, having two longer side displays 142 and one shorter back display 144. It has a camera 380 positioned to see the potential audience for each such display, and a front pointing camera as well to get a better view of on-coming traffic and weather in the direction in which the vehicle is traveling. The fixed display unit has a camera 380A that is positioned to see people how can see its display, as well as to monitor traffic and see the weather.

This programming includes a step 796 that uploads images from the camera to the central system. In many embodiments only selected images will be uploaded and they will be compressed before being uploaded to reduce communication bandwidth requirements. In some embodiments of the invention some or all of this uploading will be performed when a mobile unit is parked for the night through means of a landline connection, such as a cable modem, DSL, or other wired data connection to the central system. Most current wireless transmission standards still provide very low bandwidth. But, it is technically feasible to build high bandwidth wireless systems today, and within several years it is expected that widely available wireless networks will provide a sufficiently high bandwidth to enable mobile units to upload real-time still and video images to the central system.

Step 398 of FIG. 33 uses comparison with one or more portions of the 3-D metropolitan image created by the system to help the computers on the mobile unit more accurately recognize what parts of the image its cameras are capturing correspond to cars and people, which, of course, are not normally part of the permanent 3-D model. This helps a system perform audience and traffic counts since it makes it easier to determine which parts of an image correspond to people, to cars, and to the relatively constant aspects of a given street location. The comparison of video being captured by the unit's camera with the system's video database also reduces the amount of information that needs to be uploaded, since in many instances much of the information being imaged is already contained in the system's visual database. With current technology, it would be expensive to store a detailed visual database of an entire city within a mobile unit, but within five to ten years all or a significant part of such a database should fit within one hard drive. Also, within several years standard wireless network bandwidth will be high enough to enable the central system to download to a mobile unit the portions of a city's visual database as needed for such comparisons. At the present, time it would be possible to store a portion of a city's visual database on a mobile unit for purposes of such comparison.

As indicated by steps 799 and 800 in FIG. 33, if the unit receives a "shown me" request, either directly from a local communication device, or indirectly through the central system, the mobile unit will cause its camera to take a picture of the location associated with the device generating a request, as described above with regard to steps 746 through 750 of FIG. 30.

As indicated by steps 800 and 804, if the mobile unit receives a message from the central system instructing it to take a picture of a given location from a given angle and at a given zoom setting, it will do so. Such messages might be generated by the central system, if it is been requested by users of the system to obtain pictures of specific locations in a metropolitan area, or if the central system desires particular information to improve its image database of the metropolitan area.

As indicated by steps 806 and 808, if certain specific conditions are met, the mobile unit will show images recorded by it's one or more cameras on its display screen. Normally these will be live images, but they can also be previously recorded images. One of the conditions, which can give rise to the display of such images, is that of a "show me" request described above with regard to steps 799 and 800. Camera images might also be shown on the units display to draw attention to the display or as part of contests that provide incentives to persons who wave or display designated signs toward a mobile or fixed unit with a camera. Rewards might be as small as a zoomed close-up of the person waving, and or might be as large as a significant prize.

As indicated by step 810, in some embodiments of the invention the computer on a mobile unit might compare the image being derived from its one or more cameras against 3-D projections from the systems 3-D model of the metropolitan area to help the mobile unit determined its exact position. Such a system can be used in conjunction with, or independently of, other locating systems, such as the GPS system 146, shown in FIGS. 20 and 21. When operating in a location for which the central system already has about a good 3-D image model, this will enable the system to determine very accurately the mobile unit's location. It also has the advantage of being able to operate in locations where GPS signals are difficult to receive, such as in tunnels or in the shadows of some buildings.

Step 1200 includes the use of vision recognition software or hardware to extract image information from vehicle's camera images. As indicated by numeral 1202 this image information can include estimates of audience information, such as information about number, type, distance, relative speed, and activity of any people in an area near each display, as well as the make, model, and year and relative speed of any vehicles in such views. In FIG. 60 the some of the people 1240 which are represented symbolically in that figure have cross-hatching (numbered 1240A) and some have dots (numbered 1240B) to represent how the cameras associated with displays can have views of different types of people. Current vision recognition is good enough to recognize people in images, to recognize expressions on faces, to recognize size of people recognized, their distance from camera (particularly if multiple cameras or other range finding equipment is provided, to estimate skin color, and to perform many other tasks which are very valuable in classifying potential audiences for display.

As indicated by numeral 1204 the image information extracted by machine can include estimates of traffic information based on the number, speed, and relative speed of vehicles. As indicated by numeral 1206 the extracted image information can include estimates of weather characteristics. Once such information has been extracted, it can be uploaded to the Central system where it can be used to derive demographic, traffic, and weather databases.

As indicated by numerals 1210 and 1212, if auto-placement is in use, the audience, traffic, or weather information derived from images can be used to select which display message to show as a function of customer selected criteria.

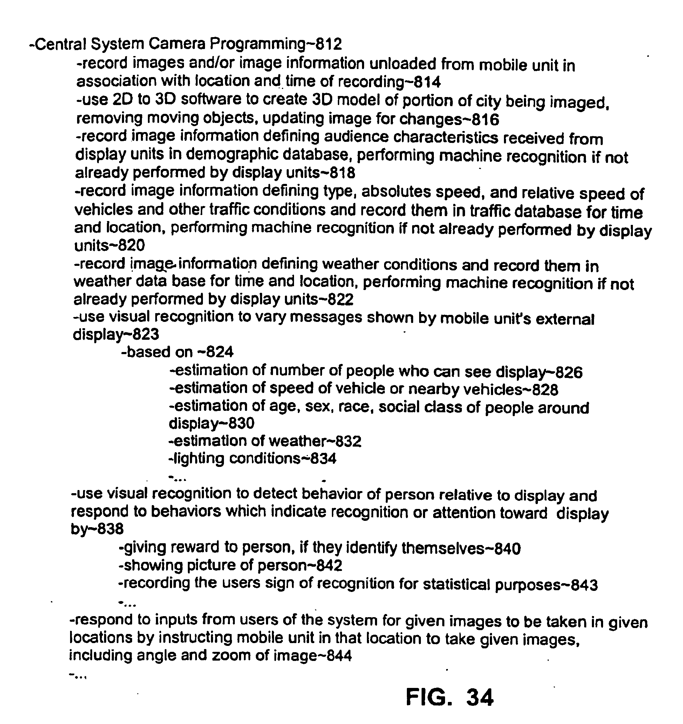

FIG. 34 represents programming 812 relating to the use of the system's cameras that is performed by the central system. Of course, it should be understood that in different embodiments of the invention a different distribution of the functionality's shown in FIGS. 32 when 33 can be made between the computers of local display units, such as fixed and mobile units, and the computers of the central system.

For example, in some embodiments of the invention vision recognition can be performed at the central system, although this has the disadvantage of requiring a relatively large bandwidth for the upload of information, or the requirement of low resolution or low frequency image uploads. In some embodiments of the invention, information can be derived from uploaded images by human vision recognition rather than machine recognition.

As indicated by step 814, the central system will record images or image information uploaded from mobile and fixed display units and, preferably, records the time and location of each such recording. These recordings are used to provide historic information about traffic, weather, and audiences at given locations and times, as is described below with regard to FIG. 34's step 1216. It can also be used for preparation of the system's 3-D graphics model of the metropolitan area.

As indicated by step 816, the system uses 2-D-to-3-D software to create or update a 3-D model of the metropolitan area based on images uploaded in step 814. In many embodiments, this process removes moving objects if possible, and updates the 3-D model to take into account changes in the metropolitan scene, such as the construction of new buildings.

The cost of storing a 3-D image of large metropolitan area is currently inexpensive enough to make it practical. For example, a fairly high resolution 3-D image of the length of every street in a 40 mile by 40 mile metropolitan area having a street every 500 feet in both the north-south and east-west directions should take no more than 10 terabytes, which cost no more than several hundred thousand dollars in storage costs at year 2000 prices. The cost of hard disk storage is expected to continue to drop sharply for years to come, meaning that by approximately the year 2010 it is expected that 10 terabytes will fit on one hard drive.

In many embodiments of the invention, such a 3-D map of the city would be labeled with other information, such as the location of important buildings, bridges, tunnels, airports, train stations, subway stops, sports stadiums, street names, and street addresses. The integration of this data with such a 3-D map would create very valuable content that could be licensed or sold by the central system to third parties.

Also, such a database could draw users to the central system's own website. This could generate profit through advertising on the website itself, as well as by drawing the attention of advertisers and audiences to the system's outdoor displays.
Such a 3-D map of the city can be used to give people visual directions on how to get to given places, including drivers of the systems mobile units. It can be used to provide virtual travel through a given metropolitan area, which can be helpful to enable tourists, people who are considering moving to given metropolitan area, and those who are looking for housing, to learn about the various parts of such an area. The virtual image can also be used to record changes to the metropolitan area overtime.

As indicated by step 818, the programming on the central system can use visual recognition software to estimate the number of people in the vicinity of the given display and record them as audience estimates for the geosynchrons corresponding to the locations and times at which the pictures are taken. Such information can be used to help advertisers estimate which are desirable locations to advertising given times, and can be used by the system to help determine the prices which are to be charged for various geosynchrons. In addition such statistics can be supplied to advertisers to let them see what the actual audiences were for the display of their advertisements in various geosynchrons.

As indicated by step 820, if visual recognition has not be performed by the display unit uploading image information, the central system can use visual recognition programming or hardware to estimate the number of vehicles, the speed of vehicles, and other traffic conditions at a given time and place, and record them in the central system's traffic database. Of course, visual images of the traffic themselves can also be stored in the traffic database. This database enables the drivers of the system's mobile units to find more effective routes at various times and places, and provides valuable media content which can be sold by the central system, which can be used to attract audiences to its website, or which can be displayed on the outdoor displays of the system.

As indicated by step 822, the central system uses visual recognition software to estimate weather conditions and record conditions in a weather database that is associated with the time and location in which such images were recorded. In addition, visual images of the weather can be stored in this database. Like the information in the traffic database, the information in the weather database can be used to help drivers of the system's mobile units; can function as valuable media content which can be sold or licensed by the central system; can be used to attract audiences to its website; and/or can be displayed on its outdoor displays.

As indicated by steps 823 through 838, the programming of the central system can use visual recognition to vary the messages shown by its mobile units' displays based on different conditions determined from images derived from the systems' cameras, including: estimations of the number people who can see the display; estimations of the speed of vehicle or nearby vehicles; estimations of the age, sex, race, social class of people around the display; estimations of current weather conditions; and estimations of current lighting conditions.

As indicated by steps 838 through 842, the central system can use vision recognition techniques to detect the behavior of persons in the vicinity of one of its displays, including behaviors relative to the display, and respond accordingly to such behaviors which indicate recognition by a person of the display or attention toward it. Such behavior could include waving toward the display, pointing ones hand toward the display, pointing ones head toward the display, having one's eyes looking toward the display, or making a specified gesture which the system has informed people will cause the system to respond to them. If the system detects such behavior from a person in its images, step 842 can respond by giving such a person a reward, if they identify themselves, such as through use of a wireless device, or if the display is a fixed display by entering information on an input device associated with that display, or by later contacting the system's website and providing photographs which correspond sufficiently to the images of them taken by the display's camera. As indicated by step 842, when the system detects a person making a particular behavior toward it, such as looking at or waving at the system, the display can show a picture of that person. Also as is indicated in step 843, the system can record the person's sign of recognition toward the display for statistical purposes, such as showing advertisers the number of people who look at or respond to the system's display.

As indicated by step 844, the central system responds to input from users of the system, whether they be operators of the central system or users making such requests over the central systems' Internet site, requesting that given images be taken in given locations by instructing mobile units in such locations to take such images, including, in some embodiments, a description of the angle and zoom desired of the given location. If this is done, it will cause steps 802 and 804 of the mobile unit to respond by taking the desired image once the unit is in the desired location.

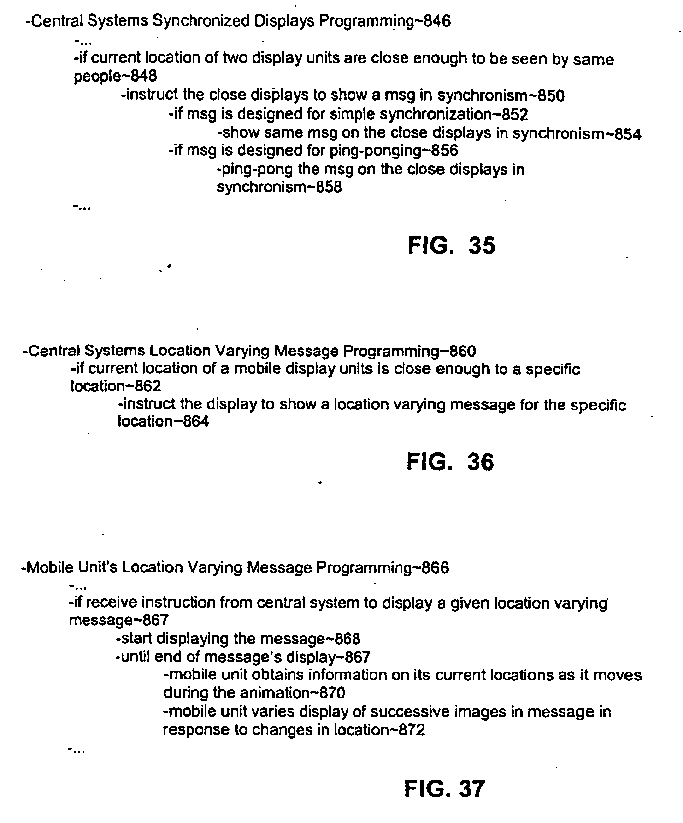

FIG. 35 illustrates the central system's programming 846 for synchronizing displays between multiple different display units. If the current location of two display units is close enough to be seen by the same people, and if other conditions, such as scheduling and location conditions, are right, then step 848 causes steps 850 through 858 to cause a synchronous display to take place. The display units involved can be multiple mobile units, one or more mobile units and one or more fixed units, or two or more fixed units.

If these conditions are met, step 850 instructs the displays which are close to each other to display a message in synchronism.

As indicated by steps 852 and 854, if the message to be displayed in synchronism is designed for simple synchronism, the central system merely instructs the involved local displays to display the message at the same time.

As indicated by steps 856 and 858, if the message is designed for ping-ponging, the system will instructs the various local displays involved to display the message in a ping-ponging manner where first one display shows part of the message and then another display of the group display another part of the message. Although not shown in FIG. 35 other types of synchronous displays can be used. For example, when two cabs belonging to the system cross each other in traffic they could send each other a "salute", such as one in which both cabs blink the central system's company logo at an increasingly rapid rate until the two cabs pass each other, at which point a synchronized climactic message can be shown advertising the central system's company and capabilities. Another form of synchronous display is, if two or more mobile units are traveling one behind the other, a synchronized message display method could be used which could have successive mobile units carry successive parts of a sequential message. Furthermore, different types or techniques of synchronous display could be combined in the display of one synchronous message.

The purpose of such a synchronized displays is to capture the attention of potential viewers toward the display system and the messages it shows. In some cases, the synchronized messages will be advertisements for the system itself. In other instances, advertisers will pay for such synchronized messages. It to be understood that in other embodiments of the invention, the control of synchronized messages could be controlled directly by the computers on one or more local display units themselves.

FIG. 36 illustrates programming 860 in the central system for showing location varying messages. A location-varying message is a message, such as an advertisement for a store, comprised of one or more different possible successions of images that are selected or timed by software in response to changes in location of the mobile unit showing such a message during its display.

As indicated in FIG. 36, if the central system detects that the location of a mobile unit is close enough to a specific location for the display of a location varying message, and if other conditions, such as availability for such a message in the message schedule, allow the display of such a message, steps 862 and 864 will instruct the mobile display to show a location varying message appropriate for that specific location.

FIG. 37 illustrates programming 866 in a mobile unit for displaying such a location-varying message. This program includes step 867 that respond to an instruction from the central system to display a given location varying message by causing steps 868 through 872 to be performed. Step 868 starts the display of the message. During this display a loop 867 causes steps 870 and 872 to be repeatedly performed. Step 870 continues to obtain information about the mobile unit's current location. Step 872 responds to such information about the mobile units location by varying the display of successive images in the location-varying message as a function of such changing location information.

In some embodiments of the invention, the location varying messages will be animations, such as flash or shockwave animations, or programmable video, which vary the image displayed in response to software commands. Such location varying messages can be used, for example, to count down the distance to a particular location, such as advertiser's store. In other instances, such messages might include images which have a moving pointer which points at a given location as a mobile unit drives past it. Such location-varying message can be quite effective at drawing attention toward a particular location, such as an advertiser's store. If a store location has a fixed external display, it would be possible for a mobile unit passing that display and the fixed display-to-display location varying messages using one of the forms of synchronism described above with regard to FIG. 35.

In some embodiments of the invention, the mobile unit makes the decision as to whether or not to display a location-varying message, rather than the central system. This would be particularly true of display systems, such as those described in the Cohen patent, in which mobile units determine which messages they are to show at which time based on a message schedule and geographic zone map which they carry with them.

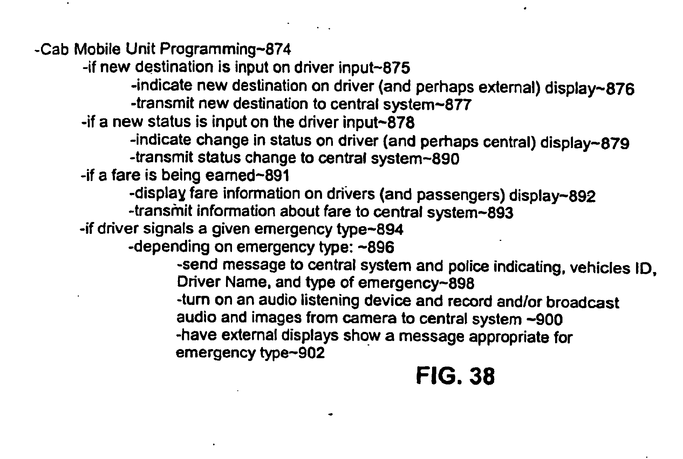

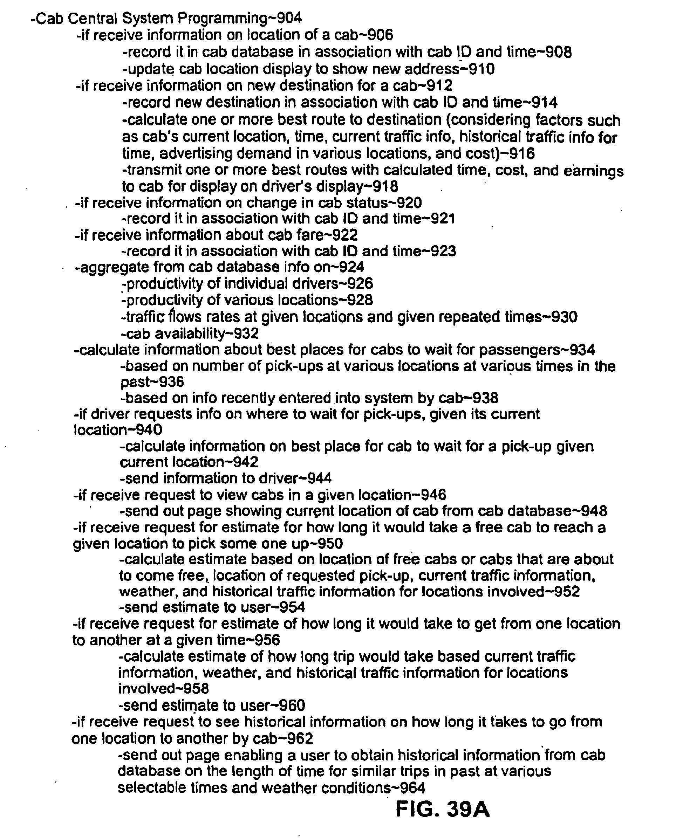

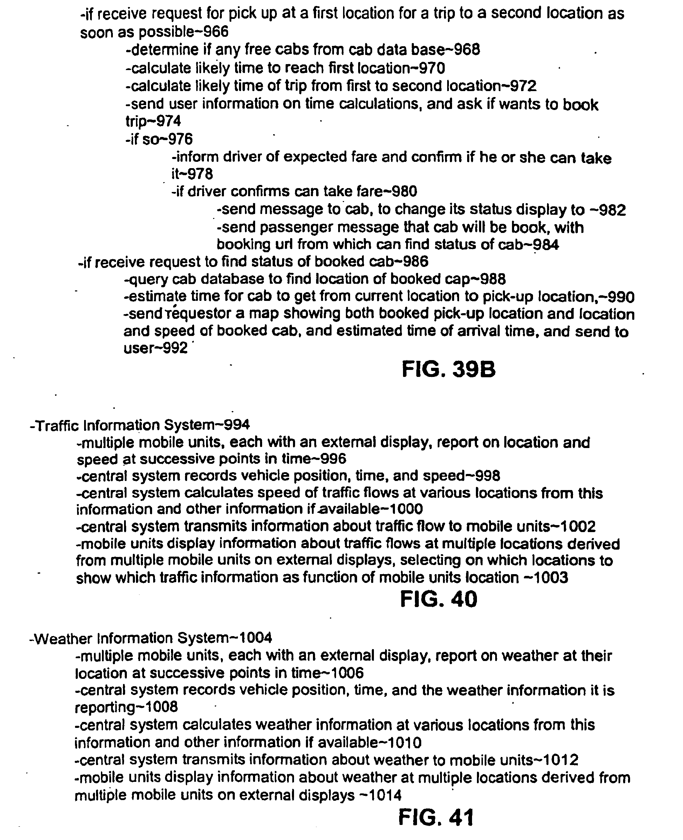

FIG. 38, 39A, and 39B illustrate additional programming that can be used by a mobile unit and a central system for mobile units that also function as taxicabs. When this specification refers to taxis or cabs, it is also meant to include other vehicles that are hired to take persons to selected destinations such as limousines, or hired vans or buses.

FIG. 38 illustrates some of the specific additional programming 874 which can be used by cab mobile units.

If the driver inputs a new destination for the vehicle into a driver input of the type 392 shown in FIG. 21, step 875 causes steps 876 and 877 to be performed. Step 876 indicates the new destination on the driver's display 386 shown in FIG. 21 (and in some embodiments, on an external display of the taxi cab unit). Step 877 transmits the new destination to the central system.

If the driver enters a new status into the driver input 392 shown in FIG. 21, such as whether the vehicle is off-duty, traveling to pick up a fare, or traveling with a fare to the fare's desired destination, then step 878 will cause steps 879 through 890 to be performed. Step 879 will indicate the change in status on the driver's displayed 386 shown in FIG. 21 (and, in many embodiments, on some sort of external display associated with a mobile unit). Then, step 890 will transmit the status change to the central system.

If a fare is being earned.by the cab, step 891 will cause step 892 to display such fare information on the driver's (and, in some embodiments, the passenger's) display, and step 893 will transmit that fare information to the central system.

If the driver signals a given emergency type by providing input into the driver input 392 shown in FIG. 21, depending upon the type of emergency, steps 896 through 902 will send a message to the central system and police station indicating the mobile unit's vehicle ID, the driver's name, and the type of emergency; turn on one or more audio listening devices, such as the driver and passenger microphones 390 and 406 shown in FIG. 21, and record and/or broadcast such information to the central station or police station. This step can also record and/or broadcast images from the mobile unit's cameras. Such recording and/or broadcasting is performed to help record what is happening in the emergency, and if somebody is at criminal fault, to help record whom that person might be. Such recording and/or broadcasting can also be used to discourage further criminal behavior by causing both the driver and passenger displays and speakers to sound alarm and generate messages stating that video and audio record is taking place. In some types of emergency's step 902 will respond by having the external display on a mobile unit show a message appropriate for the emergency type. For example, if the emergency type indicates that the mobile unit's driver is being robbed or physically threatening, the external displays could flash, and if the cab has an external speaker it speaker can sound and alarm which would tend to draw attention to the cab and scare any potential assailant away.

FIGS. 39A and 39B indicate additional programming 904 that can be used by the central system when units are used as taxis. As indicated in steps 906 through 912, each time the central system receives information on the location of a cab, such as from a locator signal of the type described above with regard to FIGS. 9, 12, 13, and 16, the system will record in a cab database this location along with the cab's ID and the current time. Then it will update the representation of the cab's location in a cab location display that is available both to those who might wish to hire a cab over the Internet, and to those who operate the cab system.

If the central system receives information on a new destination for a taxi in response to steps 875 through 888 of FIG. 38, then step 912 will cause steps 914 through 918 to be performed. Step 914 records the new destination into the cab database, along with the ID of the cab that sent the message and the current time. Step 916 calculates one or more of the best routes to the destination considering factors such as the cab's current location, the time, current traffic information, the history of traffic at similar times in the past, advertising demand at various locations, and the cost and time associated with various routes. Then, in step 918, the central system transmits one or more of such routes, with the calculated time cost and earnings, to the cab for display to the driver on the driver display 386.

As indicated by steps 920 and 921, if the central system receives information on a change in a cab's status, as a result of the operation of steps 878 through 890 of FIG. 38, it will record that information into the cab database with the cab's ID and the current time. Then it will update the representation of the cab's status in the cab location display that is available both to those who might wish to hire a cab over the Internet and to those who operate the cab system.

As indicated by steps 922 and 923, if the central system receives information about a cab fare that is being earned or that has been paid, this information is recorded in association with the ID of the cab is and the current time in the cab database.

As indicated by numerals 924 through 932 in FIG. 39, the central system aggregates from information recorded in its cab database information on such topics as the productivity of individual drivers, the productivity of individual locations, traffic flows at given locations and times, and current availability of cabs.

As is indicated by steps 934 through 938, the central system calculates from information in its cab database information about the best place for a cab to wait for passengers based on the number of pickups and the destination of those pickups at various locations at various times in the past and also based on information recently entered into the cab database by various cabs.

As indicated by numerals 940 through 944, if a driver in a cab uses the system to request information on where to wait for pickups, the system calculates information on the best place for the cab to wait to pick up a passenger given the cab's current location and given information calculated in steps 934 in through 938, and then sends that information to the cab, for display on the cab's driver display 386 or more for announcement on the driver speaker 388, both of which are shown in FIG. 21.

If the central system receives a request to see the location of cab's in a given area, such as from potential fares accessing the central system over the Internet, step 946 and 948 will send out an image showing the current locations of cab's in that vicinity from information in the cab database. This information may be sent out either in graphical, mapped, or list form.

If the central system receives a request, such as over the Internet from a potential fare, for an estimate of how long it will take for a cab to reach a given location to make a pickup, steps 950 through 954 will calculates an estimate of that time based on the location of available cab's or of cab which will soon be available, the location of the requested pick up, current traffic and weather information, and historical traffic information for the locations involved. In some embodiments, the estimate will include a range of probable times with the probabilities of different values in the range being set forth.

As indicated by steps 956 through 960, if the system receives a request, such as over the Internet, for an estimate for how long it will take for a cab, once it picks up a fare to travel from one location to another at a given time, the system automatically calculates how long such a trip is likely to take given the current traffic and weather information and given historical traffic information for the locations involved, and then it will send this information to the requester. As with the request for information about how long it will be for cab to pick a fare up, the estimate could include a range of estimated travel times with a probability associated with each such time.

If the system receives a request, such as from over the Internet, to see historical information on how long it takes to go from one location to another by cab, step 962 and 964 will send out a page in response to that request enabling a user to obtain historical information from the cab database about the length of time for such trips in the past at various selected times and weather conditions.

As shown in FIG. 39B, if the central system receives a request to pick up a fare at a first location for a trip to a second location as soon as possible, step 966 will cause step 968 through 984 to be performed. Step 968 determines which, if any, cabs are free or are likely to be free soon and their locations from the cab database. Then, a step 970 calculates the likely time for the closest of such cabs to reach the first location. Then, step 972 calculates the likely time of a trip from the first location to the second location, taking into account current traffic and weather conditions and past historical traffic information. Then, step 974 sends the user information on such cab time calculations and asks the user if she or he wants to commit to booking such a cab trip.

If the user selects to do so, step 976 causes steps 978 through 984 to be performed. Step 978 informs the driver of the expected fare and confirms that he or she will take it. If the driver confirms that he will take the fare, step 980 will cause steps numeral 982 and 984 to be performed. Step 982 sends a message to the cab to change its status display to show that it is currently booked to pick up a passenger and records that change of status in the central system's cab database as well. Then the system sends the passenger a message that the cab has been booked with a booking URL that allows the passenger to track the status of the cab on the central systems Internet web site. In some embodiments of the invention the passenger's credit card account could be billed at this time.

As indicated by steps 986 through 922, if the central system receives a request to find the status of a booked cab, such as one using the URL mentioned above with regard to step 984, the central system will query to the cab database to find a location of its book cab, with an estimate of the time for the cab to get from its current location to the pick up location, and then it will send the requestor information containing such an estimate, such as, for example, a map showing the pick up location, the location and speed of the booked cab, and the estimated time arrival. In some embodiments of the invention, the system might actually query the driver of the cab to see if he agrees with the estimate of his arrival time before any such message is automatically sent to the person requesting the cab status.

FIG. 40 illustrates certain functionality, 994, of the overall system, including both mobile units and the central system, relating to the recording and use of traffic information that is found in some embodiments of the invention.

As indicated by numeral 996, this functionality includes having multiple mobile units, each with one or more external displays, that report on their own location at successive points in times. Other information besides the mobile unit's locations can also be reported, including information obtained from cameras, speed sensors, or other electronic sensing equipment located on each mobile unit.

Once this information has been uploaded to the central system, such as over a wireless network, step 998 causes the central system to record such information relating to vehicle position, time, and speed. If the uploaded information does not explicitly include the vehicle's speed, that information can be calculated overtime by measuring the amount of distance between the locations at which a given vehicle make successive reports of its location. As indicated by the numeral 1000, the central system repeatedly calculates the speed of traffic flows at multiple locations from the information it has recorded in step 998 and from other information which is available to it, such as from other sources of traffic information.

As is indicated by step 1002, the central system transmits the traffic information it calculates in step 1000 to mobile units. Then, in step 1003, the mobile units display this downloaded information about such traffic flows at multiple locations on their own external displays. It should be understood that the steps of FIG. 40 could be repeated continuously in an ongoing manner. Such traffic information can provide an interesting and valuable source of programming content for use by a mobile message display system to help draw visual attention toward its outdoor displays.

FIG. 41 is similar to FIG. 40, except that it relates to a system of mobile units which obtain, and then upload to a central system information they sense about the weather in their own locale, and then receive information back from the central system about weather over a larger geographic area, which they then displayed on their external displays.

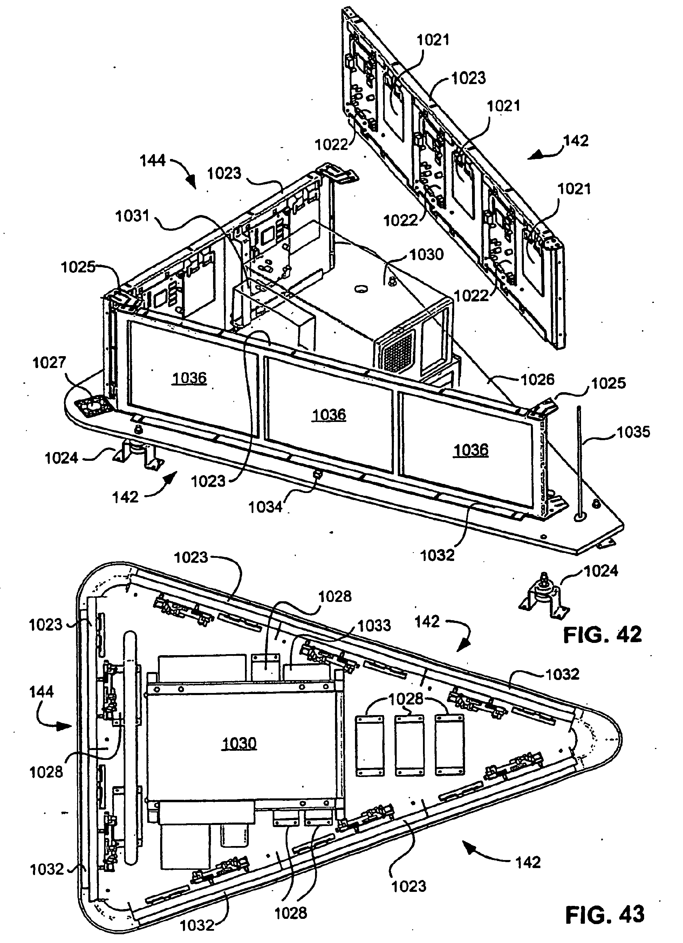

FIGS. 42 and 43 provide views of one embodiment of a car-top box 174 that can be used to provide many of the components necessary to convert a standard motor vehicle into a mobile unit for use in a mobile messaging system of the type described above. This car-top box, when covered by its plastic external shell, which is not shown in FIGS. 42 and 43, has the appearance shown in FIGS. 3 through 6.

The car-top box 174 includes a plurality of components mounted upon a base 1026, which in turn is mounted on the roof of a motor vehicle through isolation mounts 1024. These isolation mounts are important because they decrease the amount of vibration that the set-top box receives during the travels of the vehicle to which the set-top boxes attached, and, therefore, they significantly decrease vibration damage to the components of the unit 174.

The set-top box includes three separate displays, including two displays 142 shown in FIG. 6 on its two long triangular sides which each are made of three separate LCD display panels 1036, shown in FIG. 42, as well as a third display 144 shown in FIG. 6 at the rear, shorter, triangular side shown in FIG. 42 and 43 which is only composed of two LCD panels 1036. The multiple LCD display panels 1036 of each display are held in place by a frame 1023. The bottom side of each frame includes a support flange 1032 that includes holes through which bolts can be used to secure the frame and the LCD panels it supports to the base 1026 of the car-top box.

Each LCD display panel has an associated LCD driver board 1021 that drives the pixels of that display. Each such display also includes a video display board 1022 that receives an input video signals are generated by a computer video display board and provides as an output signals that drive the LCD drive board 1021. At each of the three corners of the triangle formed by the three displays 142 and 144, a corner bracket 1025 is used to connect the panels. In some embodiments of the car-top box a ventilation fan 1027 is provided to cool the electronics in the car-top box. However, is been found that such a ventilation fan is not necessary in many environments.

The car-top box is provided with an industrial grade computer 1030 that corresponds to the mobile unit controllers 140 shown in the mobile unit block diagrams of FIGS. 1, 7, 20, and 21. A wireless CDPD modem 1031 is provided which corresponds to the wireless system 152 shown in the mobile unit block diagrams. An antenna 1035 is provided for the wireless modem. A global positioning receiver 1033 is provided which corresponds to the GPS receiver 146 shown in such diagrams.

An ambient light sensor 1034 is provided for each display 142 or 144 at a location on the side of the set-top box in which that display is located. Each such light sensor is positioned so that it will be under a transparent window in the set-top box's plastic cover, so as to enable the ambient light sensor to sense of the amount of external light following on its associated display. Information from this light sensor is used to control the amount of brightness that is applied to the florescent backlights that are part of the each of the display panels 1036. The system includes an LCD PC backlighting inverters 1028 associated with each of its eight individual LCD display panels.

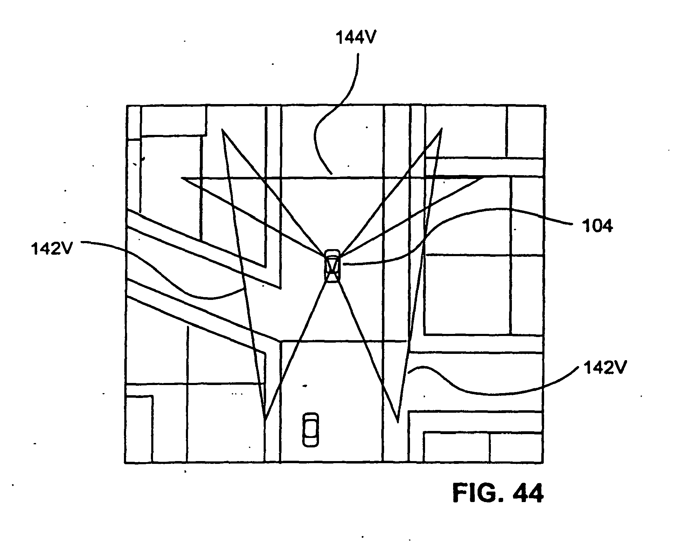

FIG. 44 illustrates one of the advantages of a car-top box having a triangular set of displays as is shown in FIGS. 42 and 43. This advantage is the field of view such a set-top box provides for its displays. In FIG. 44, a small image of a top view of a mobile unit 104, similar to that of FIG. 6, is shown slightly above the center of that figure, with the mobile unit's vehicle pointing in a downward direction in the figure. Emanating from the location on the roof of this mobile unit corresponding to its set-top box 174 are three triangular shaped areas that correspond to the zones of view of each of the mobile unit's three displays 142 or 144. At the mobile unit's sides are two zones of view 142V each associated with one of the mobile unit's two side displays 142. Emanating from the rear of this vehicle is a zone of view 144V associated with its back display 144. As can be seen from FIG. 44, this combination of three displays provides views from all directions except those in front of the mobile unit, in which location the displays might prove most distracting to oncoming drivers.

In other embodiments of the invention, differently shaped triangular car-top boxes can be used to provide a similar advantage. For example, all three sides of a triangular car-top box could have similar sized displays, which would have the advantage of making it computationally easier to have all three displays show the same message when so desired.

Of course, in other embodiments of the invention, a car-top box can use a shape other than a triangular one for its displays. For example, it could just have two opposing displays having a longest dimension, which runs parallel to the length of the vehicle upon which it is mounted. In other embodiments, the car-top box could have four displays, each located along one side of a rectangular shape, so the mobile unit would have one display visible from each of its front, back, and two sides.

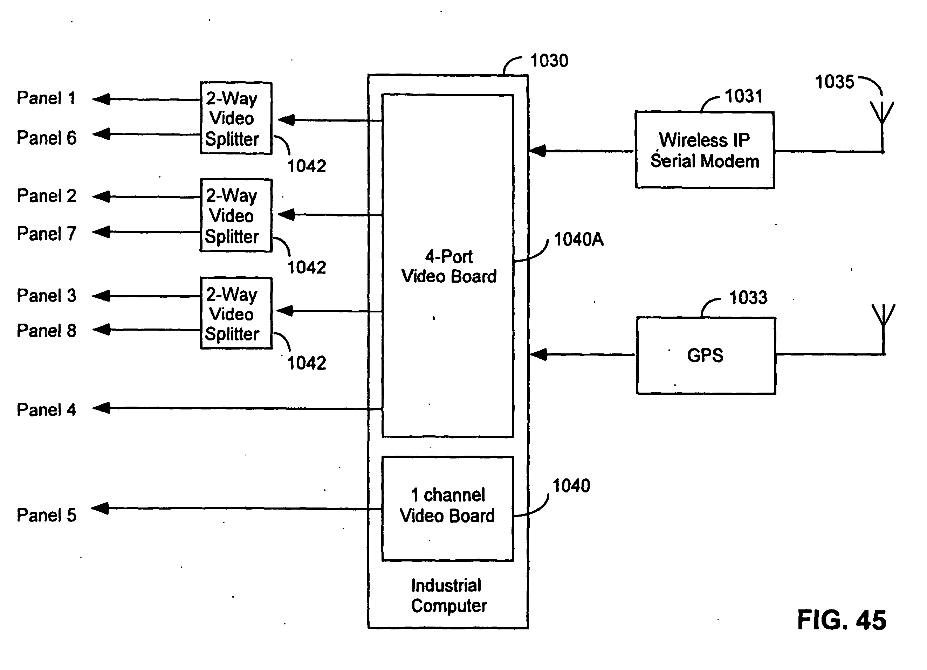

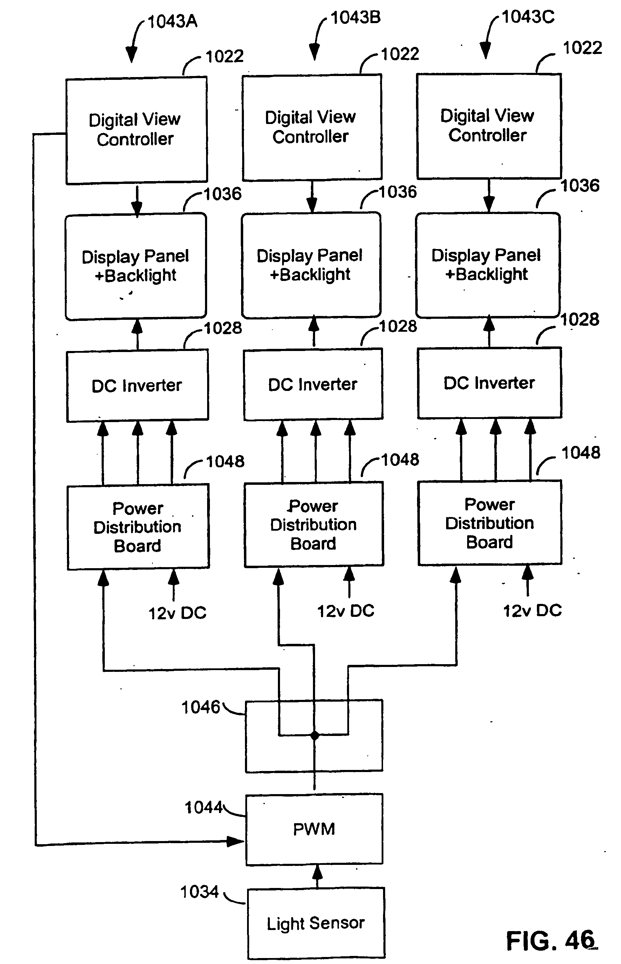

FIGS. 45 and 46 are block diagrams illustrating some of the components of the car top box shown in FIGS. 42 and 43.

FIG. 45 shows that the GPS receiver 1033 is connected to an antenna that is built into its package to receive GPS signals and is also connected through a communication port to the computer 1030. It also shows that the CDPD wireless modem 1031 is connected to the antenna 1035 to receive and transmit wireless transmissions and that this modem is connected through a communication port with the computer 1030, so as to send data it receives from the wireless network to the computer, and two transmit to the wireless network data it receives from the computer.

As shown in FIG. 45 the computer 1030 includes five video ports, three of which are used to drive three of the panels associated with each of the side displays 142, and two of which are used to drive the two displays of the rear display 144 shown in FIGS. 42 and 43. As shown in FIG. 45, the three video outputs that go to the two displays 142 go through a two-way video splitter 1042 for the purpose of splitting each such video output into two identical video signals, which are sent to corresponding LCD panels on each of the two displays 142.

FIG. 46 illustrates a block diagram of the electronics associated with each of the video displays 142. Since each of the video displays 142 includes three separate LCD display panels 1036, the block diagram in FIG. 46 includes three separate branches labeled 1043A, 1043B, and 1043C associated with each such display. In the rear display 144, which contains only two LCD display panels, only two branches corresponding to 1043A and 1043B are used.

The digital view controller, or video display board, 1022 associated with each LCD display panel 1036 receives one of the split video outputs produced by one of the splitters 142 shown in FIG. 45 from either the video 1, video 2, or video 3 lines shown in FIG. 45. As stated above each such video display board 1022 receives a video input produced by video board of the computer 1030 to represent the portion of its associated displays image which is to be shown by its associated LCD panel, and then converts that video signal into signals which are used to drive an LCD display panel 1036 through an LCD driver board 1021, which is represented as part of the Display Panel and Backlight unit 1036 in FIG. 46.

Much of the circuitry shown in FIG. 46 relates to control of the background lighting associated with each display panel. Because the car-top box is designed to be used outside in lighting conditions that can range from the darkness of a moonless night to the brightness of the midday sun, the set-top box has a flexible and powerful system for backlighting its display panels. Each of the displays has a separate light sensor 1034 of the type shown in FIG. 42 to sense the amount of light shining on its side of the car-top box. The output of this sensor is fed to a pulse width modulation circuit 1044 that controls the power supplied to the backlighting in the displays associated with the light sensor 1034. The output of the pulse width modulator 1044 passes through a distribution circuit 1046 which splits its pulse width modulation output into three separate paths, one of which is supplied to the power distribution board 1048 associated with each LCD display panel 1036. Each power distribution board 1048 filters the 12-volt power supplied by automobile electric system, and passes the pulse width modulation signal on to the input of the DC inverter 1028. This inverter produces a 2000-volt output that has the same duty cycle as the pulse width modulation signal supplied to it. The output of this DC inverter is used to drive the florescent backlights of the display 1036 at varying levels of brightness depending on the duty cycle of the 2000 volt output of the inverters, which varies as a function of the ambient light on the side of the car-top display in which a given display panel 1036 is located.

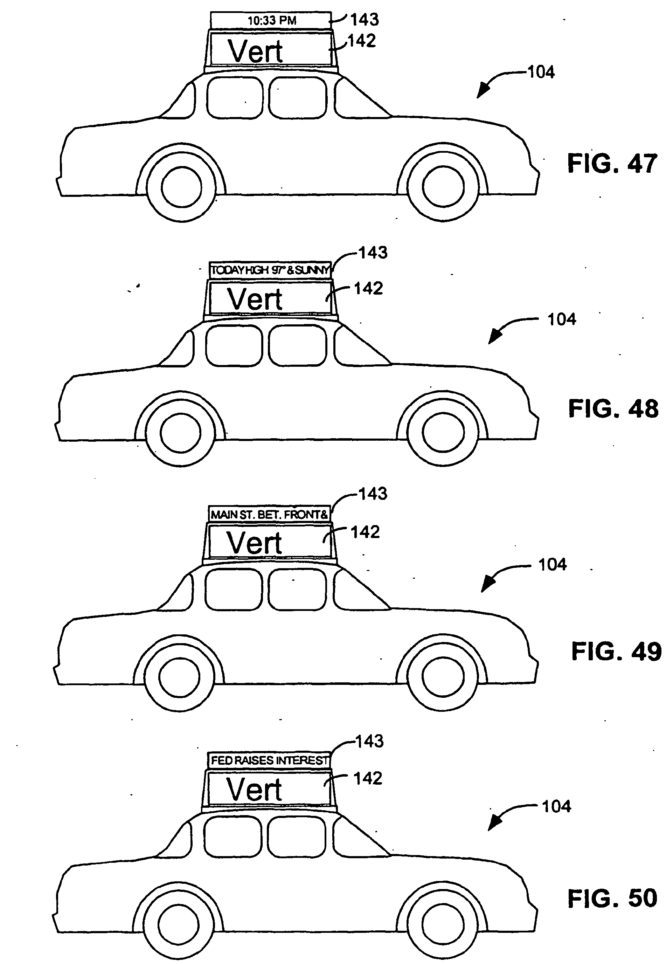

FIGS. 47 through 50 illustrate an alternate embodiment of the invention in which a mobile unit has different types of displays, including a high-resolution graphic display, such as the display 142 discussed above with regard FIGS. 42 and 43, and a low resolution, largely text-oriented, display 143. In the embodiment shown in FIGS. 47 through 50, these two displays are oriented so that they can both be read from generally similar locations relative to the mobile unit 104 on which they're mounted. A text-based display 143 of the type shown in FIGS. 47 through 50 can be used for multiple different purposes. For example, it can be used to show information such as time, as is indicated in FIG. 47; weather or temperature, such as is indicated in FIG. 48; the current streets location of the vehicle, as indicated in FIG. 49; and news information, as is indicated in FIG. 50. Such a display can also be used for many other types of information, such as the status of the motor vehicle as a taxi cab, that is, whether it is off-duty, currently driving for a passenger pickup, or currently occupied.

One of the advantages of using a combination of text-oriented, and graphics-oriented display is that the text-oriented display can show text information with a given degree of legibility from a given distance with a less expensive display, and with less energy consumption, than most bitmap displays.

In another embodiment of the invention, a combination of an electronically controlled display and a more traditional static printed display can be used. In some such embodiments, the controlled display will be a text-oriented display of the type shown in FIGS. 47 through 50.

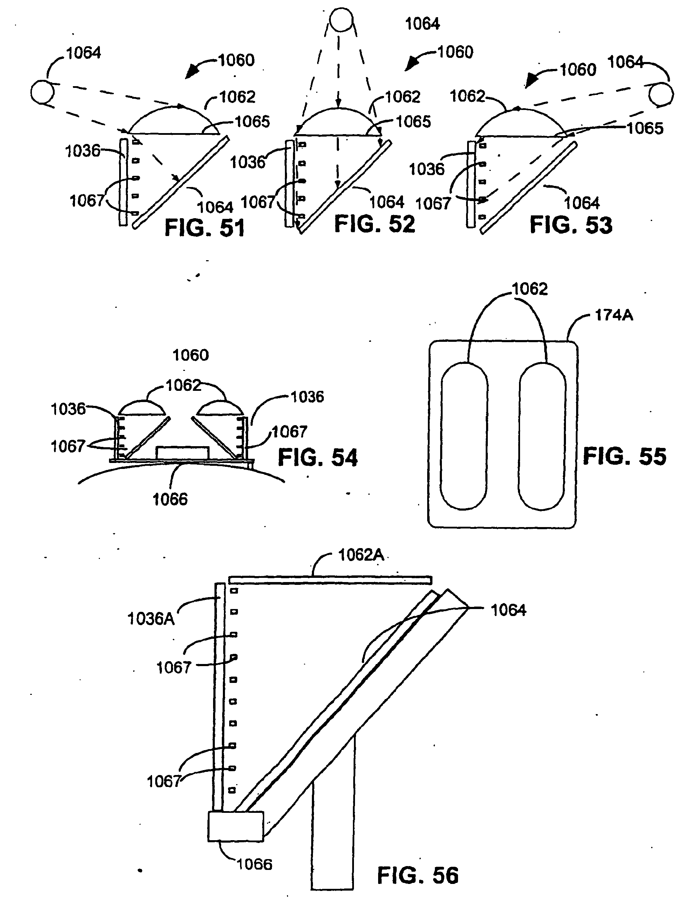

FIGS. 51 through 56 display alternate types of outdoor displays which can be used with the current invention. These displays are all designed to use the sun's light for backlighting.

FIGS. 51 through 53 illustrate the operation of such a display 1060, showing the sun 1064 in three different locations relative to it. In the embodiment of this invention shown in FIGS. 51 through 53, the display has a lens 1062 located at its top which is designed to bend the rays of the sun down into the display device so as to increase the amount of light which either hits the back of a display panel 1036 directly, as shown in FIG. 53, or which hits a light diffusing surface 1064, from which a portion of such light is reflected in a diffuse manner toward the back of the display 1036. In some embodiments of the invention, the bottom surface of the lens 1062 will be covered with either a one-way reflecting surface, or a controllable light valve 1065 to reduce the amount of light which is reflected back through the lens 1062 from the diffusions surface 1064 or to prevent too much light from illuminating the display panel 1036.

The display 1060 includes a plurality of light sensors 1067 which function in the same manner as the light sensors 1034 described above with regard to FIGS. 42 and 46, except that they measure the amount of light reaching a part of the display 1036 from behind. In many embodiments of the display 1060, an ambient light sensor 1034 will also be used to measure the light available on the other side of the display 1036 so as to help determine the amount of total lighting that should be used for the display. This information would then be used to control the amount of light generated by the backlights that are built into the display panel 1036.

FIGS. 54 and 55 illustrate how two displays 1062 could be fitted on into a car-top box similar to that described above with regards to FIGS. 42 and 43. In the embodiment shown in FIGS. 54 and 55 only two external displays are provided in the car-top box each of which, has a length parallel to the length of the vehicle upon which they are mounted. In FIG. 54, the numeral 1066 shows where the electronic components of the car-top box could be mounted in such a display. Those skilled in the design arts should realize that other configurations of displays similar to the displays 1060 could be fitted into a car-top box, including those with a generally triangular shape roughly equivalent to that of the car-top box shown in FIGS. 42 and 43, as well as those having four displays, with one such display mounted on each side of a rectangular shaped car-top box.

FIG. 56 illustrates how a display 1060A, which operates in a manner similar to display 1060 shown in FIGS. 51 through 55, could be designed for use for a fixed outdoor display. In the embodiment shown in FIG. 56, the lens 1062A at the top of the display is a flat lenticular lens. Although either a conventional lens or a lenticular lens could be used in either a mobile or fixed display, a lenticular lens is particularly desirable for a large fixed display because the weight of a large lenticular lens is substantially less than the weight of a conventional lens. In some embodiments of the invention shown in FIG. 56, the lenticular lens 1062A could have a chevron shape with a center which points upward so as to catch more light when the sun is low.

In other embodiments of the invention, other means could be used to capture sunlight for use in backlighting outdoor display. This could include the use of mirrors, instead of lenses, to deflect sunlight onto the display's defuser surface 1064 or directly onto the back of the display's one or more panels 1036. In some embodiments, the mirrors could be movable under the control of a computer so as to keep sunlight focused in the proper direction as the sun and/or the display moves. For example, a MEM device having thousands of separately electronically position able mirrors could be used to help direct sunlight into a backlighting system of the general type discussed above with regard to FIGS. 51 through 56.

FIG. 57 shows programming 1070 of the central system that relates to a system in which drivers are paid as a function of the amount of money earned by the messages displayed in their mobile units. Such a system could be used in a taxicab, but it also could be used with private vehicles which are supplied with car-top units, or other external displays.

As is shown in FIG. 57, this programming includes a step 1072 that uses successive locations and times through which the display has traveled and shown displays to calculate an earned value for that travel. This is the value that a user has earned as a function of amount of money displays at those times and locations have earned the system.

The central system could obtain information about the successive locations of a mobile unit through the use of locator signals, of the type described above with regard to steps 282 and 284 of FIG. 16. It could also use such locator signals to indicate which messages had been displayed at which locations, as is described above with regard to FIG. 12. In other embodiments, other reporting schemes could be used to enable the central system to determine the problem mobile unit at which locations and times it has displayed messages.

In step 1074 the system credits the calculated earned value to the vehicle operator in its internal database. Then, step 1076 transmits the calculated credited value to the vehicle for display to the driver, such as, for example on a driver display 386 of the type shown in FIG. 20.

In step 1078, the central system transmits information to the driver showing the different value that can be earned as a function of the driver driving through those different areas at different times. This enables a driver, particularly a private party driving a vehicle for his own purposes, to alter his driving patterns so as to earn larger amounts of money. If drivers do so vary their driving patterns, the central system will earn more money, since it will have more displays available in more valuable geosynchrons.

The information transmitted in step 1078 can be transmitted to the mobile vehicle so that it can be shown to the driver on the driver display 386. In many embodiments of the invention, this information will also be made available on the central system's web site so that before a driver enters his car he can plan a route that will help earn her or him the most money.

As indicated by steps 1080 through 1084, if a driver enters into the system a desired destination for his travels, such as through the driver input 392 shown in FIG. 20, or over the Internet, the central system calculates one or more routes which reach the destination with a maximum combination of the quickest route, largest display earnings, and/or lowest cost (such as cost in tolls, or driving mileage). Then, step 1084 communicates this calculated information to the driver. If the request for such information was entered in a mobile unit driver input 392 of the type shown in FIG. 20, this information will be displayed on the driver display 386. If the request was entered over the Internet, the information will be sent back to the browser that made the request.

FIG. 58 illustrates some of the various types of non-commercial programming which can be shown by the invention's display systems in addition to advertising messages. Often such programming will be stored in programming database 1124 stored on the central system. But some of such programming can be generated dynamically, such as from a programming studio, or automatically by software programs. These programming types include Street location programming 1125 of the type referred to above with regard to FIG. 49; time programming 1126 which indicates the current time, as indicated in FIG. 47; weather programming 1128 which has been discussed above with regard to FIG. 48 and FIG. 41; news programming 1130 which is illustrated above with regard to FIG. 50; sports programming 1132; traffic programming 1134 which is discussed above with regard to FIG. 40 and elsewhere in the specification; public service announcements 1136; contest programming 1138; soap opera programming 1140, which could consist of brief snippets of a an ongoing story which could also be incorporated with contests; and greeting programs, such as seasonal or holiday greeting messages or other messages designed to spread goodwill among the audience of the system's displays.

It should be understood that the foregoing description and drawings are given merely to explain and illustrate.

It should be understood that the behaviors described in the pseudo-code of the drawings, like virtually all program behaviors, can be performed by many different programming and data structures, using substantially different organization and sequencing. This is because programming is an extremely flexible art in which a given idea of any complexity, once understood by those skilled in the art, can be manifested in a virtually unlimited number of ways. In the interest of such simplification the structure of the pseudo-code described above often differs significantly from the structure of the actual code that a skilled programmer would use when implementing the invention. Furthermore, many of the programmed behaviors, which are shown being performed in software in the specification, could be performed in hardware in other embodiments.

In the embodiments of the invention discussed above, many of the various aspects of the invention are shown occurring together in a system. It should be understood that in other embodiments of the invention different subsets of one or more individual features of the invention would occur in a given system. To provide just a few such examples, not all embodiments of the invention need to use the caching of display messages, or the receipt of broadcast messages from one or more data streams, or variable frequency locator signals, or destination inputs. As an additional example, it should be understood that, in other embodiments of the invention, programming such as the central system's on-line site programming described with regard to FIG. 23, the geosynchron selling programming described with regard to FIGS. 24A and 24B, the geosynchron display interface described with regard to FIG. 25, the geosynchrons selection interface described with regard FIG. 26, the purchase optimization interface described with regard FIG. 27, and the central systems ad selling API shown in FIG. 28 need not contain all the elements shown in their respective figures of this specification. They can include elements in addition to those shown in the figures, and they can also include elements in a different form or order than shown in such figures.

It should be understood that with regard to many aspects of the invention disclosed in the specification, functions which are described above as performed by the system's fixed or mobile units could in other embodiments of many aspects of the invention be performed by the central system, and functions described as performed by the central system could in embodiments of many aspects of the invention be performed by the system's fixed or mobile units. Also, it should be understood that all the capabilities and functionality, which are described above for mobile units are applicable to fixed units, unless they are inherently inapplicable to, fixed units.

It should be understood that the controller of the mobile unit and the processor of the central system might each actually contain more than one processor in some embodiments of the invention. Furthermore, it should be understood that in some embodiments of the invention the central system might be distributed, and, thus, made of a plurality of separate computing systems, each with communication capability, whether there is a wireless transmitter and receiver separately associated with each such distributed computing system, or whether they are part of a unified communication system. Preferably in such distributed system all of the separate computer systems will be networked together so that the multiple computer systems can operate as a unit.

In the embodiment of the invention shown in FIGS. 1, 7, 20, 21, and 22 the positioning system used in the mobile unit is a GPS system. In other embodiments of the invention, any other currently, or hereafter, known location determining system could be used. As is discussed above, in some embodiments of the invention the mobile unit need not have a position determining system at all, and the wireless system used by the central system will locate the mobile unit based on information determined from the receipt of that message by various receivers within that wireless system.

In some of the embodiment of the invention described above the locator signals are transmitted by the same wireless system that is used to receive display-selection messages from the central system. It should be understood that in other embodiments of the invention the locator signals could be transmitted by a separate radio transmitter. For example, in some such embodiments the wireless system used for most data communication between the mobile units and the central system could be a cellular system, whereas the locator signals can be transmitted by separate radio transmitters, which is not part of the cellular system. In some such embodiments, the locator signals transmitted can contain little more information than an identification of the mobile unit itself. In such case, the central system will include additional wireless receivers designed to receive and determine the location of the transmission of such locator signals.

In FIGS. 1, 7, 20, 21, and 22 the GPS electronics 146 are shown as being connected to their respective display unit's controller. In other embodiments, the GPS (or other position detecting) electronics could have their output connected directly to electronics for transmitting the position values they determine to the central system, without having such position value pass to or through the display unit's controller.

In some embodiments of the invention UHF transmitter illustrated in FIG. 7 and 19 might be driven in such a manner as to generate both data streams of the type described above with regard FIG. 8 as well as audio or visual signals which are designed to be received by a standard UHF television receiver. This would enable the UHF receiver to be used to generate messages which could be used to explain and promote the display system of the invention, provide programming content, and provide possible control information to the system's displays. To decrease the amount of potential bandwidth, such standard UHF messages which are intended to be received by standard UHF television receivers will divert from use for data streams of the type illustrated in FIG. 8, such standard UHF content could be transmitted only intermittently, or for only portions of video frames or fields.

The following paragraphs lists some additional aspects of the invention that can be incorporated into embodiments of some of the aspects of the invention described above.

According to one aspect of the invention, a computer readable data structure recorded in machine readable memory is provided. The data structure comprises information relating to the number of people available to see a publicly displayed message in each of a plurality of physical locations at each of a plurality of times, including various times of day.

In some embodiments of this aspect of the invention, the plurality of locations include a plurality of outdoor locations. In some embodiments the information includes information relating to the numbers of different types of people available to see such messages at different locations and times. Such different types can include virtually any classification of types of people which are useful to those seeking to target messages to desired audiences, including sex, age, income, racial or ethnic background, employment type, sexual preference, location of residence, life style, religion, number of children, dress, prior purchasing information, behavioral information, and any other demographic or psycho graphic information which is considered useful in marketing.

In some embodiments the data structure's information includes information derived from data about the number of different types of people who live in areas associated with the individual physical locations. In some such embodiments, information relating to the number of people available to see a public display at a given location can be a function the population and/or demographics of the given location. In other such embodiments such information can be a function of the population or demographics of areas related to the given location, such as nearby locations or locations from which people travel through the given locations, such as be road or by train.

In some embodiments the information about the number of people available includes information derived from estimates of the foot traffic near said individual physical locations at various times of day. In some embodiments the information regarding available audience includes information derived from estimates of the automotive vehicle traffic near said individual physical locations at various times of day.

In some embodiments of this aspect the audience information is updated in response to electronic sensors in a plurality of physical locations.

In some such embodiments the electronic sensors include cameras and the audience information is updated in response to machine visual recognition of images captured by such cameras. It should be understood that the machine recognition need not be totally accurate or even close to totally accurate to help the system more accurately target the display of messages. Such visual recognition can be used to estimate the number of people in images from different locations at different times. Such visual recognition can also be used to estimate the number of different types of people in images from different locations at different times. For example, visual recognition could be used to estimate the race of potential people in the audience by measuring their skin color or facial features. It could estimate their age by their size and/or facial features. It could estimate their sex by their size and their dress. It could guess other information about people by their dress. In some embodiments the vision recognition is used to estimates the behavior of people in images from different locations at different times. This could include information about their proximity and angular position relative to the display, the likelihood of their attention toward the display, and the speed of motion relative to the display.

In some embodiments other types of machine perception could be used to obtain audience information. For example, audio information could be used to help determine the age and sex of potential viewers. Audio information could also be used to identify the voice of individual speakers and/or whether or not the potential audience members are speaking about the display itself, or whether or not their words indicate they might belong to a given demographic or marketing group.

According to another aspect of the invention, a computerized method provides values for demographic attributes as a function of physical location and time. This method involves receiving input data comprising values of one or more demographic attributes at each of one or more given discrete locations in physical space and time, in which the inputs include variations in values over a period at least as short as a week. The method smoothes these values over location and/or time so as to produce a set of values for each of the input attributes which vary at a higher spatial and/or temporal resolution than the input data. The method responds to queries for a given one of the attributes' values at a given location and time by producing such smoothed values for the attribute.

The input data can include attribute value associated with point locations and/or geographic zones. Where values for point locations are received, the method smoothes values between points. Where values for zones are received, the method smoothes values across zones, such as for example associating the value for a zone with its center point and then smoothing values between such center points.

In some embodiments of this aspect of the invention, the smoothed values could be generated dynamically at the time of a query. In other embodiments, the smoothed data could be stored in the database. In some embodiments the smoothed data itself could involve discrete values associated with different zones, but at a higher resolution than the resolution of the input data. In other embodiments, particularly those in which the data is calculated on the fly in response to queries, the resolution of the smoothed data can be as fine as the resolution of the information as to the location for which the attribute value is being requested.

According to another aspect of the invention, a computerized method of provides values for multiple different demographic attributes as a function of physical location and time. The method receives input data comprised of values of each of a plurality of demographic attributes as a function of physical location and/or time. The method performs statistical inference from the input data to calculate inferred values of demographic attributes for physical locations and/or time for which such attribute values are not explicitly included in said input data. The method responds to queries for a value of an attribute, which is not including in said input data by producing one of said inferred values.

For example, if the input data includes an estimate of the number of Hispanic available to see a message at a given location and time, but does not have an estimate of the number of such Hispanics are professions, it can statistically infer than number by multiplying the number of Hispanics at the given location by percentage of Hispanics in general who are professionals. Although such inference is not always accurate, it often provides a reasonable estimate.

For another example, if the input data includes the percent of the foot traffic at a given location that is comprised of professional people, but no specific information about how amount of professional foot traffic varies over time, and if the input information includes general data about how the amount of foot traffic in general varies over time, then the system can multiply the figure of specific professional foot traffic at the given location by the general variations in foot traffic as a function of time to derive an estimate of the amount of professional foot traffic at different times at the given location.

According to another aspect of the invention, a computerized method individually selects which messages to show on each of a plurality of publicly visible, networked, electronic displays. The method stores demographic information relating to the number of different types of people available to see a publicly displayed message in each of a plurality of physical locations at each of a plurality of times, including various times of day. The method stores for each of a plurality of messages targeting information about the one or more desired demographic audiences for said message. The method obtains from the demographic information for each of a plurality of display availabilities, each associated with publicly display at a given location and time. The information obtained for each display availability includes estimated audience information, including an estimate of the numbers of different types of people available to see a message shown at said display availability. The method calculates a score as a function of the match between the targeting information associated with each of said plurality of messages and the audience information associated with a display availability. The method further includes selecting which of said messages to show in a given display availability as a function of the relative values of said scores calculated for said different messages.

In some embodiments of this aspect of invention the criteria only vary with regard to location, and not time. In others, the criteria vary both as a function of location and time. In some embodiments of this aspect of the invention, the displays are publicly visible displays. In some embodiments at least some of the displays are mobile, causing them to be located at different locations at different points and time. In some embodiments the individual displays have associated with them sensors that are used to help update the demographic database used by the method.

According to another aspect of the invention, a computerized method individually selects which messages to show on each of a plurality of networked electronic displays. The method stores for each of a plurality of messages one or more criteria desired for showings of said message. The method further stores in machine readable memory information relating to the number of people available to see a publicly displayed message in each of a plurality of physical locations at each of a plurality of times, including various times of day. The method obtains information regarding the values for said criteria associated with a given display availability (i.e., the opportunity to display a message on a given one of said displays at a given time). The method calculates a score as a function of the match between the criteria associated with each of said plurality of messages and the values for such criteria associated with said given display availability. And the method selects which of said messages to show in a given display availability as a function of the relative values of said scores calculated for said messages.

In some embodiments of this aspect of the invention, the individual displays have different geographic locations; and the obtaining of information regarding the values for said criteria associated with a given display availability includes obtaining values for one or more of said criteria as a function of geographic location of the individual display associated with the display availability. In some such embodiments such information will be obtained from a database having values for each of a plurality of locations. In other such embodiments in which such decisions are made separately for individual ones of said displays, which are at one fixed location, a portion of said database associated with the given location of an individual display will be accessed to obtain information relating to that display.

According to another aspect of the invention, a computerized method of displaying individual messages on individual electronic displays in a network of such displays comprises the following:
Providing an estimate of a number of people available to watch a showing of a message on a given individual display; and charging a party for the showing of a given message on the given display as a function of said number of people.

In some embodiments of this aspect of the invention, the number of people used to calculate the charge is a number of one or more particular types (i.e. demographic groupings) of people.

In some embodiments of this aspect of the invention, the estimate of the number of one or more particular types of people available to watch a showing of a message includes making such estimate for a display at on a given display at a given time. Such embodiments store for each of a plurality of messages an indication of the amount a party has agreed to pay for having the message shown to a number of one or more particular types of people. Such embodiments select which of said messages to show on a given display at a given location and time as a function of the relative amount of money which can be charged for showing each such message at the given location and time, given the estimate of the number of said one or more particular types of people estimate for the given time and location and the indication of the amounts which have been agreed to be paid for the showing of each message to a number of one or more particular types of people.

In some embodiments of this aspect of the invention, the estimate of the number of people is based on the physical location of the given display. In some such embodiments the estimate of the number of people is also based on the time of day in which the message is shown.

In some embodiments of this aspect of the invention, the electronic displays are publicly visible.

In some embodiments of this aspect of the invention, the estimate of said number of people is based on computerized perception. In some such embodiments the estimate of said number of people is a function of computerized visual perception of one or more images taken by cameras located near the given individual display. In some embodiments of the estimate of said number of people is a function of computerized voice perception of sound obtained by microphones located near the given individual display. In some embodiments the estimate of said number of people is provided for the showing of a message at a given time and said estimate is a function of computerized perception of data gathered near the given individual display within an hour of said given time. In some embodiments of the estimate of said number of people is provided for the showing of a message at a given time and said estimate is a function of computerized perception of data gathered at one or more times more than an hour before said given time.

Fixed displays are meant to include large billboard sized displays as well as.smaller displays, including without limitation those which might be placed on the sides of buildings, inside buildings, or on the sides of phone booths.

As used in this specification the word demographic means information as to overall population, and information as to numbers of different types of people, including virtually any classification of types of people which are useful to those seeking to target messages to desired audiences, including sex, age, income, racial or ethnic background, employment type, location of residence, life style, sexual preference, religion, number of children, dress, prior purchasing information, behavioral information, current activity, current location, or any other demographic or psycho graphic information which is considered useful in marketing products, services, political candidates or view, and the ideas.

According to one aspect of the invention, a computerized method individually selects which messages to show on each of a plurality of networked electronic displays. The method includes calculating, for each of a plurality of messages, which are to be shown on displays of the network, a desired display rate as a function of a desired number of exposures of such messages to be made within a remaining period of time. The method selects which of possible messages to show on an individual display as a function of the relative.values of the desired display rates associated with different messages, so as to favor the selection of messages having a higher desired display rate. The method then uses information that a given message has been selected to be shown on a given display to update the calculation of the desired display rate for given message by decreasing the number of showings of the given message which are to be made a remaining period of time associated with the message.

In some embodiments of this aspect of the invention, the number of exposures used in calculating the desired display rate is a function of a number of people estimated to have seen showings of a given message, so that in calculating the desired display rate not only the number of prior showings of a message is relevant, but also an estimate of a number of people who have seen each such showing is used. In some such embodiments the number of people used to calculate said number of exposures is a number of one or more particular type of people, such as a number of people belonging to one or more demographic groups.

In some embodiments of this aspect of the invention, the electronic displays are publicly visible displays. In some such embodiments electronic displays have a fixed location, in sound they are mobile, and in others that a mixture of text and mobile displays.

In some embodiments of this aspect of the invention, the selection of which messages to show on individual display is made locally by computational equipment associated with individual displays, but information as to what messages have been shown on individual displays are communicated to other displays, either directly, or through a central system, so as to enable a information about the desired display rate for different messages used by such local computational equipment to be updated to reflect the showings of individual messages which have been made by other displays.

In some embodiments of this aspect of the invention, the selecting all of which messages to show on an individual display is performed not only as a function of the relative values of the desired display rate associated with different messages, but also as a function of the match between values for one or more criteria which vary between individual displays as a function of location and/or time and desired values of those one or more criteria associated with individual messages. In some such embodiments the one or more criteria include one or more demographic criteria concerning an estimate of the number of people of a given demographic category available to view a given showing of a message at a given display.

According to another aspect of the invention, a computerized method of individually selecting which messages to show on each of a plurality of networked electronic displays is provided which includes storing for each of a plurality of messages one or more criteria desired for showings of said message. The method obtains information regarding the values for said criteria associated with a given display availability (i.e., the opportunity to display a message on a given one of said displays at a given time). The method further calculates a score as a function of the match between the criteria associated with each of said plurality of messages and the values for such criteria associated with said given display availability. The method then selects which of said messages to show in a given display availability as a function of the relative values of said scores calculated for said messages.

In some embodiments of this aspect of the invention, the displays have different geographic locations; and the obtaining of information regarding the values for said criteria associated with a given display availability includes obtaining values for one or more of said criteria as a function of geographic location of the individual display associated with the display availability.

In some embodiments of this aspect of the invention, the displays are publicly visible displays. In some embodiments the one or more criteria include one or more demographic criteria concerning an estimate of the number of people of a given demographic category available to view a given showing of a message at a given display.

According to another aspect of the invention, a computerized method of individually selecting which messages to show on each of a plurality of networked electronic displays includes providing, for each of a plurality of messages which are to be shown on displays of the network, an indication of a desired number of remaining exposures. The method selects which of possible messages to show on an individual display as a function of the desired number of remaining exposures associated with different messages. The method then uses information that a given message has been selected to be shown on a given display to update the desired number of remaining exposures for the given message.

In some embodiments of this aspect of the invention, the selection of which message to show on each of a plurality of said individual display is made by a local computer associated with each such individual display; and the updating of the desired number of remaining exposures for a given message includes communicating information that a given message has been selected to be shown on a given display by the given displays associated local computer to local computers associated with other displays so that those other displays can use the updated desired number of remaining exposures into account when make their selection as to what messages to display on their associated display.

In some embodiments of this aspect of the invention, the desired number of remaining exposures for each message is a function of a number of people estimated to have already seen individual showing of the message.

In some embodiments of this aspect of the invention, of the number of people used to calculate said number of exposures is a number of one or more particular types of people.

Fixed displays are meant to include large billboard sized displays as well as smaller displays, including without limitation those which might be placed on the sides of buildings, inside buildings, or on the sides of phone booths.

## Claims

1. A vehicle (104) for use in a system for displaying messages on one or more vehicles, comprising:
at least one display (142, 144) visible from outside the vehicle;
a wireless system adapted to receive display messages from a central system (102), and to transmit a locator signal including location information of said vehicle to the central system (102);
**characterized by**
a GPS location system (146) for determining a location of the vehicle (104);
said wireless system being adapted to receive display-selection messages for identifying respective display messages to be displayed on said display (142, 144) from the central system (102),
a display message storage (166) for storing display messages received from the central system (102); and
a controller (140) for reading the display message identified by the display-selection message from the display message storage (166) and for controlling the display (142, 144) to display the read display message.

2. A central system for use in a system for displaying messages on one or more vehicles, comprising:
a wireless system (134) adapted to receive a locator signal from at least one vehicle (104), which includes location information of the location of the vehicle (104), and to send display messages to the vehicle (104);
**characterized by**
said wireless system (134) being adapted to send display-selection messages for identifying respective display messages to be displayed by the vehicle (104) to the vehicle (104);
a memory (108) for storing a plurality of geographic zone definitions and an indication of which of a plurality display messages is to be displayed by said vehicle in each of said geographic zones; and
a processor (106) for determining in which of said geographic zones said vehicle is located based on said locator signal, selecting a given display message from a plurality of display messages to be displayed by the vehicle (104) based on the geographic zone in which the vehicle (104) is located, and causing the transmission of a display-selection message identifying the selected display message from the second wireless system (134) to the vehicle (104).

3. A system for displaying messages on one or more vehicles, comprising:
at least one vehicle (104) according to claim 1 for moving in a geographic area, and and
a central system according to claim 2.

4. A system according to claim 3, wherein
the processor (106) is adapted to record information on how much one or more display messages have been shown by one or more vehicles (104) within one or more geographic zones during one or more time periods; and
the processor (106) is adapted to use said information when making the selection of which display message is to be shown by a given vehicle in a given zone at a given time.

5. A system according to claims 3 or 4, wherein the processor (106) is adapted to perform record keeping, including keeping record of which display messages are shown by vehicles (104) and when such messages are shown.

6. A system according to claim 5, wherein said processor (106) is adapted to keep record of where individual display messages are shown.

7. A system according to claims 5 or 6, wherein said processor (106) is adapted to generate billing information from said information about which display messages have been displayed at which times.

8. A system according to any one of claims 3 to 7, wherein the processor (106) is adapted to record information about the location of each vehicle (104), derived from the locator signals at each of successive times, so as to record a history of the travel of each vehicle (104).

9. A system according to any one of claims 3 to 8, wherein the processor (106) is adapted to
determine, based on the receipt of a locator signal from a given vehicle (104), how close the given vehicle is to the boundary of the geographic zone in which it is located;
calculate how long it should be before the given vehicle transmits each of one or more subsequent locator signals as a function of how close the given vehicle is to the boundary of the geographic zone in which it is located; and
send a wireless locator-signal-period message to the given vehicle (104) containing the results of said calculation; and wherein
the controller (140) is adapted to respond to the receipt of one of said locator-signal-period messages by causing the timing of the subsequent transmission of one or more of the locator signals of the given vehicle to be controlled based on said locator-signal-period message.

10. A system according to claim 9, wherein the processor (106) is adapted to perform said calculation also as a function of the speed of the given vehicle.

11. A system according to any one of claims 3 to 10, wherein
the vehicle (104) includes a speed sensor (148) for measuring the speed of the vehicle; and
the controller (140) is adapted to vary the time between the transmission of locator signals as a function of the speed of the vehicle measured by said speed sensor.

12. A method for displaying messages on one or more vehicles (104) comprising the steps of
moving of one or more vehicles (104) in a geographic area;
sending a locator signal including location information of the vehicle (104) from the vehicle (104) to a central system;
**characterized by**
determining a location of the vehicle (104) by a GPS location system (146) of the vehicle (104);
storing a plurality of geographic zone definitions and an indication of which of a plurality of display messages is to be displayed by said vehicle in each of a plurality of geographic zones in a memory (108) of the central system;
determining in which of said geographic zones the vehicle is located based on the locator signal by the central system;
selecting a given display message from the plurality of display messages in the memory (108) based on the geographic zone the vehicle (104) is located;
transmitting a display-selection message identifying the selected display message from the central system to the vehicle (104);
reading the display message identified by the display-selection message from a display message storage (166) of the vehicle (104); and
displaying the read display message on at least one display (142, 144) of the vehicle, which is visible from outside the vehicle.

## Patentansprüche

1. Fahrzeug (104) zur Verwendung in einem System zum Anzeigen von Meldungen auf einem oder mehreren Fahrzeugen, das aufweist:
mindestens eine Anzeige (142, 144), die von außerhalb des Fahrzeugs sichtbar ist,
ein drahtloses System, das ausgelegt ist, Anzeigemeldungen von einem Zentralsystem (102) zu empfangen und ein Ortungssignal, das Ortinformationen des Fahrzeugs enthält, an das Zentralsystem (102) zu senden,
**gekennzeichnet durch**
ein GPS-Ortsystem (146) zum Bestimmen eines Orts des Fahrzeugs (104),
wobei das drahtlose System ausgelegt ist, Anzeigeauswahlmeldungen zum Identifizieren jeweiliger Anzeigemeldungen, die auf der Anzeige (142, 144) anzuzeigen sind, von dem Zentralsystem (102) zu empfangen,
einen Anzeigemeldungsspeicher (166) zum Speichern von Anzeigemeldungen, die von dem Zentralsystem (102) empfangen werden, und
eine Steuerung (140) zum Lesen der Anzeigemeldung, die **durch** die Anzeigeauswahlmeldung identifiziert wird, aus dem Anzeigemeldungsspeicher (166) und zum Steuern der Anzeige (142, 144), um die gelesene Anzeigemeldung anzuzeigen.

2. Zentralsystem zur Verwendung in einem System zum Anzeigen von Meldungen auf einem oder mehreren Fahrzeugen, das aufweist:
ein drahtloses System (134), das ausgelegt ist, ein Ortungssignal von mindestens einem Fahrzeug (104) zu empfangen, das Ortinformationen über den Ort des Fahrzeugs (104) enthält, und Anzeigemeldungen;zum Fahrzeug (104) zu senden,
**gekennzeichnet durch**
das drahtlose System (134), das ausgelegt ist, Anzeigeauswahlmeldungen zum Identifizieren jeweiliger Anzeigemeldungen, die von dem Fahrzeug (104) anzuzeigen sind, zum Fahrzeug (104) zu senden,
einen Speicher (108) zum Speichern mehrerer geographischer Zonendefinitionen und einer Angabe, welche der Anzeigemeldungen von dem Fahrzeug in einer jeweiligen geographischen Zone anzuzeigen ist, und
einen Prozessor (106) zum Bestimmen auf der Grundlage des Ortungssignals, in welcher der geographischen Zonen sich das Fahrzeug befindet, zum Auswählen einer gegebenen Anzeigemeldung aus mehreren Anzeigemeldungen, die von dem Fahrzeug (104) anzuzeigen sind, auf der Grundlage der geographischen Zone, in dem sich das Fahrzeug (104) befindet, und zum Bewirken des Sendens der Anzeigeauswahlmeldung, die die ausgewählte Anzeigemeldung identifiziert, von dem zweiten drahtlosen System (134) zum Fahrzeug (104).

3. System zum Anzeigen von Meldungen auf einem oder mehreren Fahrzeugen, das aufweist:
mindestens ein Fahrzeug (104) nach Anspruch 1 zum Bewegen in einem geographischen Gebiet, und
ein Zentralsystem nach Anspruch 2.

4. System nach Anspruch 3, wobei
der Prozessor (106) ausgelegt ist, Informationen darüber, wie viele Anzeigemeldungen von einem oder mehreren Fahrzeugen (104) innerhalb einer oder mehrerer geographischer Zonen während einer oder mehrerer Zeitdauern gezeigt wurden, aufzuzeichnen, und
der Prozessor (106) ausgelegt ist, die Informationen zu verwenden, wenn er eine Auswahl trifft, welche Anzeigemeldung von einem gegebenen Fahrzeug in einer gegebenen Zone zu einer gegebenen Zeit zu zeigen ist.

5. System nach Anspruch 3 oder 4, wobei der Prozessor (106) ausgelegt ist, Aufzeichnungen durchzuführen, die ein Aufzeichnen darüber beinhalten, welche Anzeigemeldungen von Fahrzeugen (104) gezeigt werden, und wann solche Meldungen gezeigt werden.

6. System nach Anspruch 5, wobei der Prozessor (106) ausgelegt ist aufzuzeichnen, wo einzelne Anzeigemeldungen gezeigt werden.

7. System nach Anspruch 5 oder 6, wobei der Prozessor (106) ausgelegt ist, Abrechnungsinformationen aus den Informationen darüber, welche Anzeigemeldungen zu welchen Zeiten angezeigt wurden, zu erzeugen.

8. System nach einem der Ansprüche 3 bis 7, wobei der Prozessor (106) ausgelegt ist, Informationen über den Ort jedes Fahrzeugs (104), die aus den Ortungssignalen zu jedem der aufeinander folgenden Zeiten hergeleitet werden, aufzuzeichnen, um eine Historie der Fahrt jedes Fahrzeugs (104) aufzuzeichnen.

9. System nach einem der Ansprüche 3 bis 8, wobei der Prozessor (106) ausgelegt ist,
auf der Grundlage des Empfangs eines Ortungssignals von einem gegebenen Fahrzeug (104) zu bestimmen, wie dicht sich das gegebene Fahrzeug an der Grenze der geographischen Zone, in dem es sich befindet, befindet,
als eine Funktion, wie nahe sich das gegebene Fahrzeug an der Grenze der geographischen Zone, in dem es sich befindet, befindet, zu berechnen, wie lange es dauern sollte, bevor das gegebene Fahrzeug das eine oder jedes der aufeinander folgenden Ortungssignale sendet, und
eine drahtlose Ortungssignalperiodenmeldung zum gegebenen Fahrzeug (104) zu senden, die die Ergebnisse der Berechnung enthält, und wobei
die Steuerung (140) ausgelegt ist, durch Bewirken, dass der Zeitpunkt des anschließenden Sendens des Ortungssignals oder der Ortungssignale des gegebenen Fahrzeugs auf der Grundlage der Ortungssignalperiodenmeldung gesteuert wird, auf den Empfang eines der Ortungssignalperiodenmeldungen hin zu antworten.

10. System nach Anspruch 9, wobei der Prozessor (106) ausgelegt ist, die Berechnung ebenfalls als eine Funktion der Geschwindigkeit des gegebenen Fahrzeugs auszuführen.

11. System nach einem der Ansprüche 3 bis 10, wobei
das Fahrzeug (104) einen Geschwindigkeitssensor (148) zum Messen der Geschwindigkeit des Fahrzeugs enthält, und
die Steuerung (140) ausgelegt ist, die Zeit zwischen dem Senden von Ortungssignalen als eine Funktion der Geschwindigkeit des Fahrzeugs, die von dem Geschwindigkeitssensor gemessen wird, zu variieren.

12. Verfahren zum Anzeigen von Meldungen auf einem oder mehreren Fahrzeugen (104), das die folgenden Schritte aufweist:
Bewegen eines oder mehrerer Fahrzeuge (104) in einem geographischen Gebiet,
Senden eines Ortungssignals, das Ortinformationen des Fahrzeugs (104) enthält, von dem Fahrzeug (104) zu einem Zentralsystem,
**gekennzeichnet durch**
Bestimmen eines Orts des Fahrzeugs (104) **durch** ein GPS-Ortsystem (146) des Fahrzeugs (104),
Speichern mehrerer geographischer Zonendefinitionen und einer Angabe, welche der Anzeigemeldungen von dem Fahrzeug in einer jeweiligen geographischen Zonen anzuzeigen ist, in einem Speicher (108) des Zentralsystems,
Bestimmen auf der Grundlage des Ortungssignals von dem Zentralsystem, in welcher der geographischen Zonen sich das Fahrzeug befindet,
Auswählen einer gegebenen Anzeigemeldung aus den Anzeigemeldungen in dem Speicher (108) auf der Grundlage der geographischen Zone, in dem sich das Fahrzeug (104) befindet,
Senden einer Anzeigeauswahlmeldung, die die ausgewählte Anzeigemeldung identifiziert, von dem Zentralsystem zum Fahrzeug (104),
Lesen der Anzeigemeldung, die von der Anzeigeauswahlmeldung identifiziert wird, aus einem Anzeigemeldungsspeicher (166) des Fahrzeugs (104), und
Anzeigen der gelesenen Anzeigemeldung auf mindestens einer Anzeige (142, 144) des Fahrzeugs, die von außerhalb des Fahrzeugs sichtbar ist.

## Revendications

1. Véhicule (104) à utiliser dans un système pour afficher des messages sur un ou plusieurs véhicules, comprenant :
au moins un affichage (142, 144) visible de l'extérieur du véhicule ;
un système sans fil adapté pour recevoir des messages d'affichage d'un système central (102), et pour transmettre un signal de localisation comprenant des informations d'emplacement dudit véhicule au système central (102) ;
**caractérisé par**
un système de localisation par GPS (146) pour déterminer un emplacement du véhicule (104) ;
ledit système sans fil étant adapté pour recevoir des messages de sélection d'affichage pour identifier des messages d'affichage respectifs à afficher sur ledit affichage (142, 144) à partir du système central (102),
un stockage de message d'affichage (166) pour stocker des messages d'affichage reçus du système central (102) ; et
un contrôleur (140) pour lire le message d'affichage identifié par le message de sélection d'affichage à partir du stockage de message d'affichage (166) et pour commander l'affichage (142, 144) pour afficher le message d'affichage lu.

2. Système central à utiliser dans un système pour afficher des messages sur un ou plusieurs véhicules, comprenant :
un système sans fil (134) adapté pour recevoir un signal de localisation à partir d'au moins un véhicule (104), qui comprend des informations d'emplacement sur l'emplacement du véhicule (104), et pour envoyer des messages d'affichage au véhicule (104) ;
**caractérisé en ce que**
ledit système sans fil (134) est adapté pour envoyer des messages de sélection d'affichage pour identifier des messages d'affichage respectifs à afficher par le véhicule (104) au véhicule (104) ; et par :
une mémoire (108) pour stocker une pluralité de définitions de zones géographiques et une indication du message d'affichage, parmi une pluralité de messages d'affichage, qui doit être affiché par ledit véhicule dans chacune desdites zones géographiques ; et
un processeur (106) pour déterminer dans laquelle desdites zones géographiques ledit véhicule se trouve sur la base dudit signal de localisation, pour sélectionner un message d'affichage donné parmi une pluralité de messages d'affichage à afficher par le véhicule (104) sur la base de la zone géographique dans laquelle le véhicule (104) se trouve, et pour provoquer la transmission d'un message de sélection d'affichage identifiant le message d'affichage sélectionné du second système sans fil (134) au véhicule (104).

3. Système d'affichage de messages sur un ou plusieurs véhicules, comprenant :
au moins un véhicule (104) selon la revendication 1 pour se déplacer dans une zone géographique, et
un système central selon la revendication 2.

4. Système selon la revendication 3, dans lequel
le processeur (106) est adapté pour enregistrer des informations sur le nombre de fois qu'un ou plusieurs messages d'affichage ont été montrés par un ou plusieurs véhicules (104) à l'intérieur d'une ou de plusieurs zones géographiques pendant une ou plusieurs périodes de temps ; et
le processeur (106) est adapté pour utiliser lesdites informations en effectuant la sélection du message d'affichage à montrer par un véhicule donné dans une zone donnée à un moment donné.

5. Système selon la revendication 3 ou 4, dans lequel le processeur (106) est adapté pour maintenir des enregistrements, y compris pour maintenir des enregistrements des messages d'affichage qui sont montrés par des véhicules (104) et du moment auquel de tels messages sont montrés.

6. Système selon la revendication 5, dans lequel ledit processeur (106) est adapté pour maintenir des enregistrements de l'endroit où les messages d'affichage individuels sont montrés.

7. Système selon la revendication 5 ou 6, dans lequel ledit processeur (106) est adapté pour générer des informations de facturation à partir desdites informations sur les messages d'affichages qui ont été affichés et sur les moments auxquels ils ont été affichés.

8. Système selon l'une quelconque des revendications 3 à 7, dans lequel le processeur (106) est adapté pour enregistrer des informations sur l'emplacement de chaque véhicule (104), dérivées des signaux de localisation à chacun des moments successifs, de manière à enregistrer un historique du déplacement de chaque véhicule (104).

9. Système selon l'une quelconque des revendications 3 à 8, dans lequel le processeur (106) est adapté pour
déterminer, sur la base de la réception d'un signal de localisation à partir d'un véhicule donné (104), la distance entre le véhicule donné et la frontière de la zone géographique dans laquelle il se trouve ;
calculer le temps qu'il faut au véhicule donné pour transmettre chacun du ou des signaux de localisation suivants en fonction de la distance entre le véhicule donné et la frontière de la zone géographique dans laquelle il se trouve ; et
envoyer un message de période de signal de localisation sans fil au véhicule donné (104) contenant les résultats dudit calcul ; et dans lequel
le contrôleur (140) est adapté pour répondre à la réception de l'un desdits messages de période de signal de localisation en amenant la synchronisation de la transmission suivante d'un ou de plusieurs des signaux de localisation du véhicule donné à être contrôlée sur la base dudit message de période de signal de localisation.

10. Système selon la revendication 9, dans lequel le processeur (106) est adapté pour effectuer ledit calcul également en fonction de la vitesse du véhicule donné.

11. Système selon l'une quelconque des revendications 3 à 10, dans lequel
le véhicule (104) comprend un capteur de vitesse (148) pour mesurer la vitesse du véhicule ; et
le contrôleur (140) est adapté pour faire varier le temps entre la transmission des signaux de localisation en fonction de la vitesse du véhicule mesurée par ledit capteur de vitesse.

12. Procédé pour afficher des messages sur un ou plusieurs véhicules (104) comprenant les étapes consistant à
déplacer un ou plusieurs véhicules (104) dans une zone géographique ;
envoyer un signal de localisation comprenant des informations d'emplacement du véhicule (104) du véhicule (104) à un système central ;
**caractérisé par**
la détermination d'un emplacement du véhicule (104) par un système de localisation GPS (146) du véhicule (104) ;
le stockage d'une pluralité de définitions de zones géographiques et d'une indication duquel parmi une pluralité de messages d'affichage doit être affiché par ledit véhicule dans chacune d'une pluralité de zones géographiques dans une mémoire (108) du système central ;
la détermination de laquelle desdites zones géographiques dans laquelle le véhicule se trouve sur la base du signal de localisation par le système central ;
la sélection d'un message d'affichage donné parmi la pluralité de messages d'affichage dans la mémoire. (108) sur la base de la zone géographique dans laquelle le véhicule (104) se trouve ;
la transmission d'un message de sélection d'affichage identifiant le message d'affichage sélectionné du système central au véhicule (104) ;
la lecture du message d'affichage identifié par le message de sélection d'affichage à partir d'un stockage de message d'affichage (166) du véhicule (104) ; et
l'affichage du message d'affichage lu sur au moins un affichage (142, 144) du véhicule, qui est visible de l'extérieur du véhicule.
